(19) Europäisches Patentamt
European Patent Office
Office européen des brevets

(11) EP 4 657 572 A1

(12) **EUROPEAN PATENT APPLICATION**
published in accordance with Art. 153(4) EPC

(43) Date of publication:
**03.12.2025 Bulletin 2025/49**

(21) Application number: **25742033.1**

(22) Date of filing: **17.01.2025**

(51) International Patent Classification (IPC):
***H01M 4/62*** *(2006.01)* ***H01G 11/38*** *(2013.01)*
***H01M 4/13*** *(2010.01)* ***H01M 4/134*** *(2010.01)*
***H01M 4/139*** *(2010.01)* ***H01M 4/1395*** *(2010.01)*
***H01M 4/38*** *(2006.01)* ***H01M 4/48*** *(2010.01)*

(52) Cooperative Patent Classification (CPC):
**H01G 11/38; H01M 4/13; H01M 4/134; H01M 4/139; H01M 4/1395; H01M 4/38; H01M 4/48; H01M 4/62;** Y02E 60/10

(86) International application number:
**PCT/JP2025/001424**

(87) International publication number:
**WO 2025/154808 (24.07.2025 Gazette 2025/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.01.2024 JP 2024006419**

(71) Applicant: **Daikin Industries, Ltd.**
**Osaka-shi, Osaka 530-0001 (JP)**

(72) Inventors:
- **YAMADA, Takaya**
  **Osaka-Shi, Osaka 530-0001 (JP)**
- **NISHIMURA, Kenta**
  **Osaka-Shi, Osaka 530-0001 (JP)**
- **KATO, Taketo**
  **Osaka-Shi, Osaka 530-0001 (JP)**
- **YASUDA, Kohei**
  **Osaka-Shi, Osaka 530-0001 (JP)**
- **ATSUMO, Ken**
  **Osaka-Shi, Osaka 530-0001 (JP)**
- **TERADA, Junpei**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(54) **COMPOSITION, ELECTROCHEMICAL DEVICE BINDER, ELECTRODE MIXTURE, ELECTRODE, AND SECONDARY BATTERY**

(57) The disclosure provides a composition for an electrochemical device binder capable of improving the initial capacity and capacity retention of the electrochemical device, and an electrochemical device binder, an electrode mixture, an electrode, and a secondary battery each containing the composition. Provided is a composition for use in an electrochemical device binder, the composition containing a fibrillatable resin and at least one lithium/sodium compound selected from the group consisting of a lithium/sodium salt and a lithium/sodium replenisher, the composition containing the fibrillatable resin in an amount of 20% by mass or more, the composition containing the fibrillatable resin and the lithium/sodium compound in a total amount of 40% by mass or more.

EP 4 657 572 A1

## Description

TECHNICAL FIELD

The disclosure relates to compositions, electrochemical device binders, electrode mixtures, electrodes, and secondary batteries.

BACKGROUND ART

Secondary batteries such as lithium-ion secondary batteries are used in small and portable electrical and electronic devices such as laptop PCs, cellular phones, smart phones, tablet PCs, and Ultrabooks, and are also being commercialized as a wide variety of power sources, including in-vehicle power sources for driving automobiles and the like and large power sources for stationary applications. The reason for this is that secondary batteries are high-voltage, high-energy-density batteries with low self-discharge and low memory effect and can be made extremely lightweight. Secondary batteries are now demanded to have even higher energy densities, and further improvements in battery characteristics are desired.

Patent Literature 1 discloses a solid polymer electrolyte containing 14% by weight of polytetrafluoroethylene and 7.0% by weight of lithium bis(trifluoromethanesulfonyl)imide.

CITATION LIST

- Patent Literature

Patent Literature 1: JP 2022-506189 T

SUMMARY OF INVENTION

- Technical Problem

The disclosure aims to provide a composition for an electrochemical device binder capable of improving the initial capacity and capacity retention of the electrochemical device, and an electrochemical device binder, an electrode mixture, an electrode, and a secondary battery each containing the composition.

- Solution to Problem

The disclosure (1) relates to a composition for use in an electrochemical device binder,
the composition containing:

a fibrillatable resin; and
at least one lithium/sodium compound selected from the group consisting of a lithium/sodium salt and a lithium/sodium replenisher,
the composition containing the fibrillatable resin in an amount of 20% by mass or more,
the composition containing the fibrillatable resin and the lithium/sodium compound in a total amount of 40% by mass or more.

The disclosure (2) relates to the composition according to the disclosure (1), wherein the fibrillatable resin includes at least one selected from the group consisting of a tetrafluoroethylene homopolymer and a modified polytetrafluoroethylene consisting of a tetrafluoroethylene unit and a polymerized unit based on hexafluoropropylene.

The disclosure (3) relates to the composition according to the disclosure (1) or (2), wherein the lithium/sodium compound includes at least one selected from the group consisting of $LiPF_6$ and $LiN(CF_3SO_2)_2$.

The disclosure (4) relates to the composition according to any one of the disclosures (1) to (3), wherein the composition has a mass ratio of the fibrillatable resin and the lithium/sodium compound of 97/3 to 50/50.

The disclosure (5) relates to the composition according to any one of the disclosures (1) to (4), wherein the composition is in a form of powder.

The disclosure (6) relates to the composition according to any one of the disclosures (1) to (5), wherein the composition is for use in a lithium-ion secondary battery binder.

The disclosure (7) relates to an electrochemical device binder essentially consisting of a composition,

the composition containing a fibrillatable resin and at least one lithium/sodium compound selected from the group consisting of a lithium/sodium salt and a lithium/sodium replenisher,
the composition containing fibrillatable resin in an amount of 20% by mass or more,
the composition containing the fibrillatable resin and the lithium/sodium compound in a total amount of 40% by mass or more.

The disclosure (8) relates to the electrochemical device binder according to the disclosure (7), wherein the fibrillatable resin and the lithium/sodium compound are contained in a total amount of 70% by mass or more based on the composition.
The disclosure (9) relates to the electrochemical device binder according to the disclosure (7) or (8), wherein the lithium/sodium compound includes at least one selected from the group consisting of an inorganic lithium salt, a lithium tungstate, a lithium carboxylate, a lithium salt containing a S=O group, a lithium imide salt, a lithium methide salt, a fluorine-containing organic salt, LiSCN, $LiB(CN)_4$, $LiB(C_6H_5)_4$, $Li_2(C_2O_4)$, $LiP(C_2O_4)_3$, $Li_2B_{12}F_bH_{12-b}$ (where b is an integer of 0 to 3), LiBOB, $Li_5FeO_4$, $Li_5AlO$, $Li_2NiO_2$, $NaPF_6$, $NaBF_4$, $NaSbF_6$, $NaTaF_6$, $NaPO_2F_2$, $FSO_3Na$, $CF_3SO_3Na$, $NaN(FSO_2)_2$, $NaN(FSO_2)$ $(CF_3SO_2)$, $NaN(CF_3SO_2)_2$, NaN $(C_2F_5SO_2)_2$, sodium cyclic 1,2-perfluoroethane disulfonylimide, sodium cyclic 1,3-perfluoropropane disulfonylimide, $NaC(FSO_2)_3$, $NaC(CF_3SO_2)_3$, $NaC(C_2F_5SO_2)_3$, $NaBF_3CF_3$, $NaBF_3C_2F_5$, $NaPF_3(CF_3)_3$, and $NaPF_3(C_2F_5)_3$.
The disclosure (10) relates to the electrochemical device binder according to any one of the disclosures (7) to (9), wherein the lithium/sodium compound includes at least one selected from the group consisting of $LiPF_6$ and $LiN(CF_3SO_2)_2$.
The disclosure (11) relates to the electrochemical device binder according to any one of the disclosures (7) to (10), wherein the fibrillatable resin is contained in an amount of 50% by mass or more based on the composition.
The disclosure (12) relates to the electrochemical device binder according to any one of the disclosures (7) to (11), wherein the electrochemical device binder has a mass ratio of the fibrillatable resin and the lithium/sodium compound of 99/1 to 50/50.
The disclosure (13) relates to the electrochemical device binder according to any one of the disclosures (7) to (12), wherein the electrochemical device binder has a mass ratio of the fibrillatable resin and the lithium/sodium compound of 97/3 to 50/50.
The disclosure (14) relates to the electrochemical device binder according to any one of the disclosures (7) to (13), wherein the fibrillatable resin includes a tetrafluoroethylene-based polymer.
The disclosure (15) relates to the electrochemical device binder according to any one of the disclosures (7) to (14), wherein the fibrillatable resin includes polytetrafluoroethylene.
The disclosure (16) relates to the electrochemical device binder according to any one of the disclosures (7) to (15), wherein the fibrillatable resin includes at least one selected from the group consisting of a tetrafluoroethylene homopolymer and a modified polytetrafluoroethylene consisting of a tetrafluoroethylene unit and a polymerized unit based on hexafluoropropylene.
The disclosure (17) relates to the electrochemical device binder according to any one of the disclosures (7) to (16), wherein the fibrillatable resin is obtained by polymerization using a hydrocarbon surfactant.
The disclosure (18) relates to the electrochemical device binder according to any one of the disclosures (7) to (17), wherein the lithium/sodium replenisher includes at least one selected from the group consisting of $Li_5FeO_4$, $Li_5AlO$, and $Li_2NiO_2$.
The disclosure (19) relates to the electrochemical device binder according to any one of the disclosures (7) to (18), wherein the composition has a liquid content of 10% by mass or less.
The disclosure (20) relates to the electrochemical device binder according to any one of the disclosures (7) to (19), wherein the electrochemical device binder is in a form of powder.
The disclosure (21) relates to the electrochemical device binder according to any one of the disclosures (7) to (20), wherein the electrochemical device binder is for use in a lithium-ion secondary battery.
The disclosure (22) relates to an electrode mixture containing: the composition according to any one of the disclosures (1) to (6) or the electrochemical device binder according to any one of the disclosures (7) to (21); and an electrode active material.
The disclosure (23) relates to the electrode mixture according to the disclosure (22), wherein the electrode mixture is in a form of a sheet.
The disclosure (24) relates to an electrode including: the composition according to any one of the disclosures (1) to (6) or the electrochemical device binder according to any one of the disclosures (7) to (21); a positive electrode active material or a negative electrode active material; and a current collector.
The disclosure (25) relates to the electrode according to the disclosure (24), wherein the electrode is produced in a dry process.
The disclosure (26) relates to a secondary battery including the electrode according to the disclosure (25).

The disclosure (27) relates to the secondary battery according to the disclosure (26), wherein the negative electrode active material includes Si or SiO.

- Advantageous Effects of Invention

The disclosure can provide a composition for an electrochemical device binder capable of improving the initial capacity and capacity retention of the electrochemical device, and an electrochemical device binder, an electrode mixture, an electrode, and a secondary battery each containing the composition.

DESCRIPTION OF EMBODIMENTS

The term "organic group" as used herein means a group containing one or more carbon atoms or a group formed by removing one hydrogen atom from an organic compound.
The organic group is preferably an alkyl group optionally containing one or more substituents.
The disclosure will be specifically described below.
The disclosure provides a composition for use in an electrochemical device binder, the composition containing a fibrillatable resin and at least one lithium/sodium compound (Li/Na compound) selected from the group consisting of a lithium/sodium salt (Li/Na salt) and a lithium/sodium replenisher (Li/Na replenisher), the composition containing the fibrillatable resin in an amount of 20% by mass or more, the composition containing the fibrillatable resin and the Li/Na compound in a total amount of 40% by mass or more.
The composition of the disclosure having the above formulation can improve the initial capacity and capacity retention of the electrochemical device. When in the form of powder, the composition of the disclosure can exhibit better flowability.
Since the composition of the disclosure can be used in a dry process, it is not necessary to use a large amount of dispersion medium such as water or an organic solvent and the electrode active material or solid electrolyte to be used together can be selected from a wide range of selections, which is advantageous in terms of the production process. The process and cost derived from use of a dispersion medium can be reduced.
In addition, the composition of the disclosure has excellent binding force to active materials or electrolytes, which can reduce the amount of the composition used.
The composition of the disclosure contains a fibrillatable resin. The fibrillatable resin is a resin that easily fibrillates upon application of shear stress. With a higher molecular weight, the fibrillatable resin is more likely to fibrillate. The molecular weight of the fibrillatable resin is, for example, 500000 or greater, preferably 1000000 or greater, more preferably 5000000 or greater, still more preferably 10000000 or greater, further preferably 20000000 or greater, while it may be 200000000 or less.
The molecular weight may be a number average molecular weight (Mn), and it can be determined using the following equation.

$$SSG = -0.0579 \log Mn + 2.6113$$

The SSG in the equation is the standard specific gravity of the polymer, and is determined by the immersion method in conformity with ASTM D792 using a sample molded in conformity with ASTM D4895 89.
In order to further improve the initial capacity and capacity retention of the electrochemical device, the fibrillatable resin is preferably one obtained by polymerization using a hydrocarbon surfactant.
The fibrillatable resin preferably has a thermal instability index (TII) of 10 or higher.
The fibrillatable resin having a TII of 10 or higher can be obtained using a hydrocarbon surfactant.
In order to further improve the initial capacity and capacity retention of the electrochemical device and to further improve the powder flowability, the TII is more preferably 15 or higher, still more preferably 20 or higher, further preferably 25 or higher, further preferably 35 or higher, further preferably 40 or higher, while preferably 100 or lower, more preferably 80 or lower, still more preferably 50 or lower.
The TII is measured in conformity with ASTM D4895-89.
The fibrillatable resin may have a 0.1% mass reduction temperature of 400°C or lower.
The fibrillatable resin having a 0.1% mass reduction temperature of 400°C or lower can be obtained using a hydrocarbon surfactant. The 0.1% mass reduction temperature is a value measured by the following method.
About 10 mg of the fibrillatable resin that has never been heated to 300°C or higher is precisely weighed out, and placed in a special aluminum pan, followed by thermogravimetry/differential thermal analysis (TG-DTA). The 0.1% mass reduction temperature is a temperature corresponding to a point at which the weight is reduced by 0.1 mass% when the temperature of the aluminum pan is increased in a temperature range from 25°C to 600°C at a rate of 10°C/min in the air atmosphere.

The fibrillatable resin may have a 1.0% mass reduction temperature of 492°C or lower.

The fibrillatable resin having a 1.0% mass reduction temperature of 492°C or lower can be obtained using a hydrocarbon surfactant. The 1.0% mass reduction temperature is a value measured by the following method.

About 10 mg of the fibrillatable resin that has never been heated to 300°C or higher is precisely weighed out, and placed in a special aluminum pan, followed by thermogravimetry/differential thermal analysis (TG-DTA). The 1.0% mass reduction temperature is a temperature corresponding to a point at which the weight is reduced by 1.0 mass% when the temperature of the aluminum pan is increased in a temperature range from 25°C to 600°C at a rate of 10°C/min in the air atmosphere.

In order to form a mixture sheet with still higher strength, the fibrillatable resin preferably has an endothermic peak temperature of higher than 330°C, more preferably 333°C or higher, still more preferably 335°C or higher, further preferably 337°C or higher, particularly preferably 340°C or higher, while preferably 350°C or lower, more preferably 346°C or lower.

The endothermic peak temperature is the temperature corresponding to the minimum point on a heat-of-fusion curve obtained by performing differential scanning calorimetry (DSC) at a temperature-increasing rate of 10°C/min on the fibrillatable polymer that has never been heated to a temperature of 300°C or higher. When two or more minimum points are present in one melting peak, the temperatures corresponding to the respective peaks are considered as endothermic peak temperatures.

Examples of the fibrillatable resin include tetrafluoroethylene (TFE)-based polymers, polyethylene, polyester, liquid crystal polymers (LDP), and acrylic resins. The fibrillatable resin is preferably a TFE-based polymer, polyethylene, or polyester, more preferably a TFE-based polymer.

The TFE-based polymer may be a TFE homopolymer or a TFE copolymer containing a polymerized unit based on TFE (TFE unit) and a polymerized unit based on a modifying monomer copolymerizable with TFE (modifying monomer unit).

The TFE-based polymer may also be polytetrafluoroethylene (PTFE). The PTFE encompasses a TFE homopolymer and a modified PTFE containing 99.0% by mass or more of the TFE unit and 1.0% by mass or less of the modifying monomer unit.

In order to further improve the initial capacity and capacity retention of the electrochemical device and to further improve the powder flowability, the TFE-based polymer is preferably PTFE, more preferably a modified PTFE.

The TFE copolymer herein refers to a polymer containing a modifying monomer unit in an amount of 10% by mass or less in all polymerized units and the TFE homopolymer herein refers to a polymer containing a modifying monomer unit in an amount of less than 0.0001% by mass in all polymerized units.

In order to further improve the initial capacity and capacity retention of the electrochemical device and to further improve the powder flowability, the amount of the modifying monomer is preferably 0.0001 to 10% by mass in all polymerized units. The lower limit of the amount of the modifying monomer unit is more preferably 0.001% by mass, still more preferably 0.010% by mass, further preferably 0.015% by mass, particularly preferably 0.020% by mass. The upper limit of the amount of the modifying monomer unit is preferably 5.0% by mass, more preferably 3.0% by mass, still more preferably 1.0% by mass, further preferably 0.80% by mass, further preferably 0.60% by mass, further preferably 0.50% by mass, further preferably 0.40% by mass, further preferably 0.30% by mass, particularly preferably 0.20% by mass.

The modifying monomer unit as used herein means a portion constituting the molecular structure of the TFE-based polymer and derived from a modifying monomer.

The amounts of the above polymerized units can be calculated by any appropriate combination of NMR, FT-IR, elemental analysis, and X-ray fluorescence analysis in accordance with the types of the monomers.

The modifying monomer may be any monomer copolymerizable with TFE. Examples thereof include a perfluoroolefin such as hexafluoropropylene (HFP); a hydrogen-containing fluoroolefin such as trifluoroethylene and vinylidene fluoride (VDF); a perhaloolefin such as chlorotrifluoroethylene (CTFE); a perfluorovinyl ether; a perfluoroallyl ether; a (perfluoroalkyl)ethylene; ethylene; and a monomer containing a polar group. One modifying monomer may be used alone or two or more modifying monomers may be used in combination.

Examples of the perfluorovinyl ether include, but are not limited to, an unsaturated perfluoro compound represented by the following formula (A):

$$CF_2=CF\text{-}ORf^1 \qquad (A)$$

wherein $Rf^1$ is a perfluoroorganic group. The term "perfluoro organic group" herein means an organic group in which all hydrogen atoms bonded to any carbon atom are replaced by fluorine atoms. The perfluoro organic group may have an ether oxygen.

The perfluorovinyl ether may be, for example, a perfluoro(alkyl vinyl ether) (PAVE), preferably a PAVE represented by the formula (A) in which $Rf^1$ is a C1-C10 perfluoroalkyl group. The perfluoroalkyl group preferably has a carbon number of 1 to 5.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether also include:

those represented by the formula (A) wherein $Rf^1$ is a C4-C9 perfluoro(alkoxy alkyl) group;
those represented by the formula (A) wherein $Rf^1$ is a group represented by the following formula:

[Chem. 1]

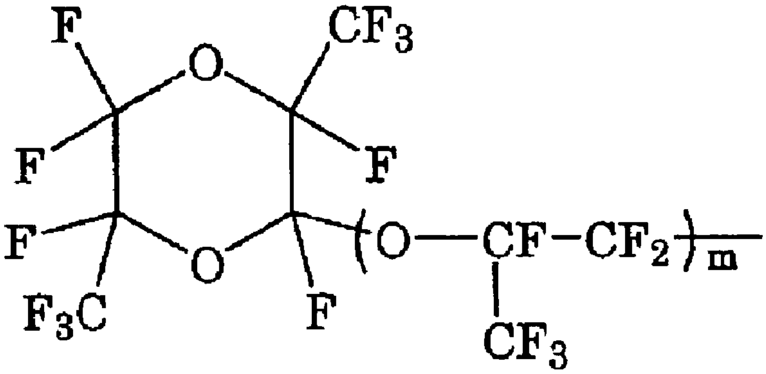

wherein m is an integer of 0 or 1 to 4; and
those represented by the formula (A) wherein $Rf^1$ is a group represented by the following formula:

[Chem. 2]

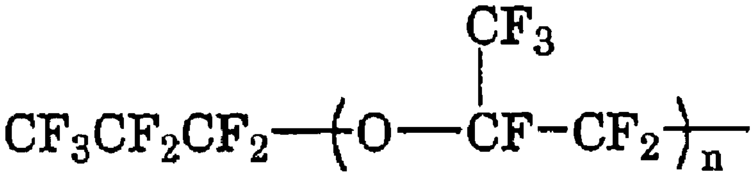

wherein n is an integer of 1 to 4.

Examples of the (perfluoroalkyl)ethylene (PFAE) include, but are not limited to, (perfluorobutyl)ethylene (PFBE) and (perfluorohexyl)ethylene.

Examples of the perfluoroallyl ether include fluoromonomers represented by the following formula (B):

$$CF_2=CF-CF_2-ORf^2 \qquad (B)$$

wherein $Rf^2$ is a perfluoro organic group.

$Rf^2$ is preferably a C1-C10 perfluoroalkyl group or a C1-C10 perfluoroalkoxyalkyl group. The perfluoroallyl ether preferably includes at least one selected from the group consisting of $CF_2=CF-CF_2-O-CF_3$, $CF_2=CF-CF_2-O-C_2F_5$, $CF_2=CF-CF_2-O-C_3F_7$, and $CF_2=CF-CF_2-O-C_4F_9$, more preferably includes at least one selected from the group consisting of $CF_2=CF-CF_2-O-C_2F_3$, $CF_2=CF-CF_2-O-C_3F_7$, and $CF_2=CF-CF_2-O-C_4F_9$, and is still more preferably $CF_2=CF-CF_2-O-CF_2CF_2CF_3$.

The modifying monomer is preferably a compound represented by the following formula (i):

$$CX^1X^2=CX^3X^4 \qquad (i)$$

wherein $X^1$ to $X^3$ are each independently H or F, $X^4$ is F, Cl, Rf, or O-Rf, where Rf is a perfluoro organic group.

Rf in the formula (i) is preferably a C1-C10 perfluoroalkyl group, more preferably a C1-C5 perfluoroalkyl group, still more preferably a C1-C4 perfluoroalkyl group.

The monomer containing a polar group may be a non-fluorinated monomer or a fluorine-containing monomer.

Examples of the non-fluorinated monomer include: non-fluorinated monomers containing a hydroxy group, such as hydroxyalkyl vinyl ethers (e.g., hydroxyethyl vinyl ether, hydroxypropyl vinyl ether, hydroxybutyl vinyl ether, hydroxyisobutyl vinyl ether, and hydroxycyclohexyl vinyl ether); non-fluorinated monomers containing a carboxy group, such as

acrylic acid, methacrylic acid, itaconic acid, succinic acid, fumaric acid, crotonic acid, maleic acid, citraconic acid, undecylenic acid, and acetylenedicarboxylic acid; non-fluorinated monomers containing an acid anhydride residue, such as itaconic anhydride (hereinafter also referred to as "IAH"), citraconic anhydride (hereinafter also referred to as "CAH"), 5-norbornene-2,3-dicarboxylic anhydride (hereinafter also referred to as "NAH"), succinic anhydride, fumaric anhydride, and maleic anhydride; non-fluorinated monomers containing a sulfo group, such as vinyl sulfonic acid; non-fluorinated monomers containing an epoxy group (glycidyl group), such as glycidyl vinyl ether and glycidyl allyl ether; non-fluorinated monomers containing an amino group, such as an aminoalkyl vinyl ether and an aminoalkyl allyl ether; non-fluorinated monomers containing an amide group, such as (meth)acrylamide and methylolacrylamide; and non-fluorinated monomers containing a nitrile group, such as acrylonitrile and methacrylonitrile.

Preferred among these is a non-fluorinated monomer containing a carboxy group and a non-fluorinated monomer containing an acid anhydride residue, more preferred is a non-fluorinated monomer containing an acid anhydride residue, and still more preferred is a cyclic non-fluorinated monomer containing an acid anhydride residue.

The monomer containing a polar group also preferably includes a modifying monomer containing a functional group that is reactive in radical polymerization and a hydrophilic group (hereinafter, referred to as "modifying monomer (A)").

Examples of the hydrophilic group in the modifying monomer (A) include $-NH_2$, $-PO_3M$, $-OPO_3M$, $-SO_3M$, $-OSO_3M$, - COOM (wherein M is H, a metal atom, $NR^7_4$, imidazolium optionally containing a substituent, pyridinium optionally containing a substituent, or phosphonium optionally containing a substituent; $R^7$s are each H or an organic group and are the same as or different from each other. Any two of these may bond to each other to form a ring). Preferred among these hydrophilic groups is $-SO_3M$ or -COOM. $R^7$ is preferably H or a $C_{1-10}$ organic group, more preferably H or a $C_{1-4}$ organic group, still more preferably H or a $C_{1-4}$ alkyl group.

Examples of the metal atom include monovalent or divalent metal atoms such as alkali metals (Group 1) and alkaline earth metals (Group 2), and preferred is Na, K, or Li.

An example of the "functional group that is reactive in radical polymerization" in the modifying monomer (A) is a group containing an ethylenically unsaturated bond such as a vinyl group or an allyl group. The group containing an ethylenically unsaturated bond can be represented by the following formula:

$$cx^ex^g=CX^fR-$$

wherein $X^e$, $X^f$, and $X^g$ are each independently F, Cl, H, $CF_3$, $CF_2H$, $CFH_2$, or $CH_3$ and R is a linking group. Examples of the linking group for R include linking groups as $R^a$ described later. Preferred examples thereof include groups containing an unsaturated bond such as $-CH=CH_2$, $-CF=CH_2$, $-CH=CF_2$, $-CF=CF_2$, $-CH_2-CH=CH_2$, $-CF_2-CF=CH_2$, $-CF_2-CF=CF_2$, $-(C=O)-CH=CH_2$, $-(C=O)-CF=CH_2$, $-(C=O)-CH=CF_2$, $-(C=O)-CF=CF_2$, $-(C=O)-C(CH_3)=CH_2$, $-(C=O)-C(CF_3)=CH_2$, $-(C=O)-C(CH_3)=CF_2$, $-(C=O)-C(CF_3)=CF_2$, $-O-CH_2-CH=CH_2$, $-O-CF_2-CF=CH_2$, $-O-CH_2-CH=CF_2$, and $-O-CF_2-CF=CF_2$.

The modifying monomer (A) contains a functional group that is reactive in radical polymerization. Thus, when used in polymerization, it reacts with a fluorine-containing monomer in an early stage of the polymerization reaction, which presumably results in formation of particles containing a hydrophilic group derived from the modifying monomer (A) and having high stability. Accordingly, polymerization in the presence of the modifying monomer (A) seems to generate a large number of particles.

One modifying monomer (A) may be used alone, or two or more modifying monomers (A) may be used in combination.

The modifying monomer (A) may be a compound containing an unsaturated bond.

The modifying monomer (A) preferably includes at least one selected from the group consisting of compounds represented by the following formulas (4a) to (4e):

$$CF_2=CF-(CF_2)_{n1}-Y^3 \quad (4a)$$

wherein n1 is an integer of 1 to 10; $Y^3$ is $-SO_3M^1$ or - $COOM^1$; and $M^1$ is H, $NH_4$, or an alkali metal;

$$CF_2=CF-(CF_2C(CF_3)F)_{n2}-Y^3 \quad (4b)$$

wherein n2 is an integer of 1 to 5; and $Y^3$ is defined as described above;

$$CF_2=CF-O-(CFX^1)_{n3}-Y^3 \quad (4c)$$

wherein $X^1$ is F or $CF_3$; n3 is an integer of 1 to 10; and $Y^3$ is defined as described above;

$$CF_2=CF-O-(CF_2CFX^1O)_{n4}-CF_2CF_2-Y^3 \quad (4d)$$

wherein n4 is an integer of 1 to 10; and $Y^3$ and $X^1$ are defined as described above; and

$$CX^2_2=CFCF_2-O-(CF(CF_3)CF_2O)_{n5}-CF(CF_3)-Y^3 \qquad (4e)$$

wherein $X^2$s are the same as each other and are each F or H; n5 is 0 or an integer of 1 to 10; and $Y^3$ is defined as described above.

Examples of the alkali metal include Na and K.

In the formula (4a), n1 is preferably an integer of 5 or smaller, more preferably an integer of 2 or smaller. In order to achieve appropriate water solubility and surface activity, $Y^3$ is preferably $-COOM^1$. In order to reduce remaining as impurities and to achieve improved heat resistance of the resulting molded article, $M^1$ is preferably H or $NH_4$.

An example of a perfluorovinyl alkyl compound represented by the formula (4a) is $CF_2=CFCF_2COOM^1$ wherein $M^1$ is defined as described above.

In terms of emulsifying performance, n2 in the formula (4b) is preferably an integer of 3 or smaller. In order to achieve appropriate water solubility and surface activity, $Y^3$ is preferably $-COOM^1$. In order to reduce remaining as impurities and to achieve improved heat resistance of the resulting molded article, $M^1$ is preferably H or $NH_4$.

In terms of water solubility, n3 in the formula (4c) is preferably an integer of 5 or smaller. In order to achieve appropriate water solubility and surface activity, $Y^3$ is preferably $-COOM^1$. In order to achieve better dispersion stability, $M^1$ is preferably H or $NH_4$.

In terms of surface activity, $X^1$ in the formula (4d) is preferably $-CF_3$. In terms of water solubility, n4 is preferably an integer of 5 or smaller. In order to achieve appropriate water solubility and surface activity, $Y^3$ is preferably $-COOM^1$. $M^1$ is preferably H or $NH_4$.

An example of a perfluorovinyl ether compound represented by the formula (4d) is $CF_2=CFOCF_2CF(CF_3)OCF_2CF_2COOM^1$, wherein $M^1$ is H, $NH_4$, or an alkali metal.

In terms of emulsifying performance, n5 in the formula (4e) is preferably an integer of 0 or 1 to 5, more preferably 0, 1, or 2, still more preferably 0 or 1. In order to achieve appropriate water solubility and surface activity, $Y^3$ is preferably $-COOM^1$. In order to reduce remaining as impurities and to achieve improved heat resistance of the resulting molded article, $M^1$ is preferably H or $NH_4$.

Examples of a perfluorovinyl alkyl compound represented by the formula (4e) include $CH_2=CFCF_2OCF(CF_3)COOM^1$ and $CH_2=CFCF_2OCF(CF_3)CF_2OCF(CF_3)COOM^1$, wherein $M^1$ is defined as described above.

In order to further improve the initial capacity and capacity retention of the electrochemical device and to further improve the powder flowability, the modifying monomer preferably includes at least one selected from the group consisting of HFP, PAVE, PFAE, and a monomer containing a polar group, more preferably at least one selected from the group consisting of HFP, perfluoro(methyl vinyl ether) (PMVE), perfluoro(propyl vinyl ether) (PPVE), PFBE, a non-fluorinated monomer containing an acid anhydride residue, and the modifying monomer (A), still more preferably at least one selected from the group consisting of HFP, PMVE, PPVE, a cyclic non-fluorinated monomer containing an acid anhydride residue, and a compound represented by the formula (4e), further preferably at least one selected from the group consisting of HFP, PMVE, and PPVE, further preferably HFP.

The TFE-based polymer preferably includes at least one selected from the group consisting of a TFE homopolymer and a modified PTFE containing a TFE unit and a polymerized unit based on HFP, more preferably at least one selected from the group consisting of a TFE homopolymer and a modified PTFE consisting of a TFE unit and a polymerized unit based on HFP.

The TFE-based polymer may have a core-shell structure. An example of the TFE-based polymer having a core-shell structure is a TFE-based polymer including a core of a high-molecular-weight TFE-based polymer and a shell of a lower-molecular-weight TFE-based polymer or a TFE copolymer in a particle. Another example thereof is a modified PTFE including a core of a high-molecular-weight PTFE and a shell of a lower-molecular-weight PTFE or a modified PTFE in a particle. Examples of this modified PTFE include PTFEs disclosed in JP 2005-527652 T.

The TFE-based polymer preferably has non melt-processibility.

The term "non melt-processibility" herein means that the melt flow rate (MFR) is lower than 0.25 g/10 min, preferably lower than 0.10 g/10 min, more preferably 0.05 g/10 min or lower, still more preferably 0.01 g/10 min or lower.

The MFR is a value obtained in conformity with ASTM D1238 using a melt indexer, as the mass (g/10 min) of a polymer flowing out of a nozzle (inner diameter: 2.095 mm, length: 8 mm) per 10 minutes at 372°C and a load of 5 kg.

In order to further improve the initial capacity and capacity retention of the electrochemical device and to further improve the powder flowability, the TII of the TFE-based polymer is preferably 10 or higher, more preferably 15 or higher, still more preferably 20 or higher, further preferably 25 or higher, while preferably 200 or lower, more preferably 100 or lower.

The TFE-based polymer having a TII of 10 or higher can be obtained using a hydrocarbon surfactant.

In order to form a mixture sheet with still higher strength, the TFE-based polymer preferably has a standard specific gravity (SSG) of 2.280 or less, more preferably 2.250 or less, still more preferably 2.220 or less, further preferably 2.200 or less, further preferably 2.190 or less, even more preferably 2.180 or less, particularly preferably 2.170 or less.
The SSG is also preferably 2.130 or more.
The SSG is determined by the immersion method in conformity with ASTM D792 using a sample molded in conformity with ASTM D4895 89.
The amount of the fibrillatable resin is 20% by mass or more based on the composition of the disclosure. In order to further improve the initial capacity and capacity retention of the electrochemical device and to further improve the powder flowability, the amount is preferably 25% by mass or more, more preferably 30% by mass or more, still more preferably 35% by mass or more, further preferably 40% by mass or more, while preferably 99% by mass or less, more preferably 97% by mass or less, still more preferably 90% by mass or less, further preferably 85% by mass or less, further preferably 80% by mass or less, further preferably 75% by mass or less, particularly preferably 70% by mass or less.
The composition of the disclosure preferably includes at least one Li/Na compound selected from the group consisting of a Li/Na salt and a Li/Na replenisher. If a fibrillatable resin such as a TFE-based polymer is used in a binder, the fibrillatable resin may react with Li/Na in the system, resulting in a loss of Li/Na necessary for electrochemical device reactions. In a case where Si-based active materials such as Si and SiO are used for the negative electrode, Li/Na in the system may be irreversibly consumed in the reactions with these active materials, particularly during the initial charge. The Li/Na compound is a compound capable of releasing Li/Na irreversibly and therefore can compensate for lost Li/Na. Thus, the Li/Na compound can improve the initial capacity and capacity retention of the electrochemical device.
The term "Li/Na" means "Li and/or Na".
Examples of the Li salt include: inorganic lithium salts such as $LiPF_6$, $LiBF_4$, $LiClO_4$, $LiAlF_4$, $LiSbF_6$, $LiTaF_6$, $LiWF_7$, $LiAsF_6$, $LiAlCl_4$, LiI, LiBr, LiCl, $LiB_{10}Cl_{10}$, $Li_2SiF_6$, $Li_2PFO_3$, $LiPO_2F_2$, and $LiNO_3$;

lithium tungstates such as $LiWOF_5$;
lithium carboxylate salts such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, and $CF_3CF_2CF_2CF_2CO_2Li$;
lithium salts containing an S=O group such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$, $CF_3CF_2CF_2CF_2SO_3Li$, lithium methylsulfate, lithium ethylsulfate ($C_2H_5OSO_3Li$), and lithium 2,2,2-trifluoroethylsulfate;
lithium imide salts such as $LiN(FCO)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, lithium bis-perfluoroethanesulfonyl imide, lithium cyclic 1,2-perfluoroethanedisulfonyl imide, lithium cyclic 1,3-perfluoropropanedisulfonyl imide, lithium cyclic 1,2-ethanedisulfonyl imide, lithium cyclic 1,3-propanedisulfonyl imide, lithium cyclic 1,4-perfluorobutanedisulfonyl imide, $LiN(CF_3SO_2)(FSO_2)$, $LiN(CF_3SO_2)(C_3F_7SO_2)$, $LiN(CF_3SO_2)(C_4F_9SO_2)$, and $LiN(POF_2)_2$;
lithium methide salts such as $LiC(FSO_2)_3$, $LiC(CF_3SO_2)_3$, and $LiC(C_2F_5SO_2)_3$; and
fluorine-containing organic lithium salts such as salts represented by the formula: $LiPF_a(C_nF_{2n+1})_{6-a}$ (wherein a is an integer of 0 to 5; and n is an integer of 1 to 6) such as $LiPF_3(C_2F_5)_3$, $LiPF_3(CF_3)_3$, $LiPF_3(iso\text{-}C_3F_7)_3$, $LiPF_5(iso\text{-}C_3F_7)$, $LiPF_4(CF_3)_2$, and $LiPF_4(C_2F_5)_2$, as well as $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)_2$, $LiBF_2(C_2F_5)_2$, $LiBF_2(CF_3SO_2)_2$, and $LiBF_2(C_2F_5SO_2)_2$, and LiSCN, $LiB(CN)_4$, $LiB(C_6H_5)_4$, $Li_2(C_2O_4)$, $LiP(C_2O_4)_3$, $Li_2B_{12}F_bH_{12-b}$ (wherein b is an integer of 0 to 3), and LiBOB. One or two or more of these may be used.

In order to achieve an effect of improving properties such as output characteristics, high-rate charge and discharge characteristics, high-temperature storage characteristics, and cycle characteristics, particularly preferred among these are $LiPF_6$, $LiBF_4$, $LiSbF_6$, $LiTaF_6$, $LiPO_2F_2$, $FSO_3Li$, $CF_3SO_3Li$, $LiN(FSO_2)_2$, $LiN(FSO_2)(CF_3SO_2)$, $LiN(CF_3SO_2)_2$, $LiN(C_2F_3SO_2)_2$, lithium cyclic 1,2-perfluoroethanedisulfonyl imide, lithium cyclic 1,3-perfluoropropanedisulfonyl imide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, $LiPF_3(C_2F_5)_3$, and the like. Still more preferred is at least one lithium salt selected from the group consisting of $LiPF_6$, $LiN(CF_3SO_2)_2$, $LiN(FSO_2)_2$, and $LiBF_4$. Further preferred is at least one selected from the group consisting of $LiPF_6$ and $LiN(CF_3SO_2)_2$. Most preferred is $LiN(CF_3SO_2)_2$.
Examples of the Na salt include inorganic sodium salts such as $NaPF_6$, $NaBF_4$, $NaClO_4$, $NaAlF_4$, $NaSbF_6$, $NaTaF_6$, $NaWF_7$, $NaAsF_6$, $NaAlCl_4$, NaI, NaBr, NaCl, $NaB_{10}Cl_{10}$, $Na_2SiF_6$, $Na_2PFO_3$, and $NaPO_2F_2$;

sodium tungstates such as $NaWOF_5$;
sodium carboxylates such as $HCO_2Na$, $CH_3CO_2Na$, $CH_2FCO_2Na$, $CHF_2CO_2Na$, $CF_3CO_2Na$, $CF_3CH_2CO_2Na$, $CF_3CF_2CO_2Na$, $CF_3CF_2CF_2CO_2Na$, and $CF_3CF_2CF_2CF_2CO_2Na$;
sodium salts containing an S=O group such as $FSO_3Na$, $CH_3SO_3Na$, $CH_2FSO_3Na$, $CHF_2SO_3Na$, $CF_3SO_3Na$, $CF_3CF_2SO_3Na$, $CF_3CF_2CF_2SO_3Na$, $CF_3CF_2CF_2CF_2SO_3Na$, sodium methylsulfate, sodium ethylsulfate ($C_2H_5OSO_3Na$), and sodium 2,2,2-trifluoroethylsulfate;

sodium imide salts such as $NaN(FCO)_2$, $NaN(FCO)(FSO_2)$, $NaN(FSO_2)_2$, $NaN(FSO_2)(CF_3SO_2)$, $NaN(CF_3SO_2)_2$, $NaN(C_2F_5SO_2)_2$, sodium bis-perfluoroethanesulfonyl imide, sodium cyclic 1,2-perfluoroethanedisulfonyl imide, sodium cyclic 1,3-perfluoropropanedisulfonyl imide, sodium cyclic 1,2-ethanedisulfonyl imide, sodium cyclic 1,3-propanedisulfonyl imide, sodium cyclic 1,4-perfluorobutanedisulfonyl imide, $NaN(CF_3SO_2)(FSO_2)$, $NaN(CF_3SO_2)(C_3F_7SO_2)$, $NaN(CF_3SO_2)(C_4F_9SO_2)$, and $NaN(POF_2)_2$;
sodium methide salts such as $NaC(FSO_2)_3$, $NaC(CF_3SO_2)_3$, and $NaC(C_2F_5SO_2)_3$; and
fluorine-containing organic sodium salts such as salts represented by the formula: $NaPF_a(C_nF_{2n+1})_{6-a}$ (wherein a is an integer of 0 to 5; and n is an integer of 1 to 6) such as $NaPF_3(C_2F_3)_3$, $NaPF_3(CF_3)_3$, $NaPF_3(iso\text{-}C_3F_7)_3$, $NaPF_5(iso\text{-}C_3F_7)$, $NaPF_4(CF_3)_2$, and $NaPF_4(C_2F_5)_2$, as well as $NaPF_4(CF_3SO_2)_2$, $NaPF_4(C_2F_5SO_2)_2$, $NaBF_3CF_3$, $NaBF_3C_2F_5$, $NaBF_3C_3F_7$, $NaBF_2(CF_3)_2$, $NaBF_2(C_2F_5)_2$, $NaBF_2(CF_3SO_2)_2$, and $NaBF_2(C_2F_5SO_2)_2$, and NaSCN, $LiB(CN)_4$, $NaB(C_6H_5)_4$, $Na_2(C_2O_4)$, $NaP(C_2O_4)_3$, and $Na_2B_{12}F_bH_{12-b}$ (wherein b is an integer of 0 to 3). One or two or more of these may be used.

In order to achieve an effect of improving properties such as output characteristics, high-rate charge and discharge characteristics, high-temperature storage characteristics, and cycle characteristics, particularly preferred among these are $NaPF_6$, $NaBF_4$, $NaSbF_6$, $NaTaF_6$, $NaPO_2F_2$, $FSO_3Na$, $CF_3SO_3Na$, $NaN(FSO_2)_2$, $NaN(FSO_2)(CF_3SO_2)$, $NaN(CF_3SO_2)_2$, $NaN(C_2F_3SO_2)_2$, sodium cyclic 1,2-perfluoroethanedisulfonyl imide, sodium cyclic 1,3-perfluoropropanedisulfonyl imide, $NaC(FSO_2)_3$, $NaC(CF_3SO_2)_3$, $NaC(C_2F_5SO_2)_3$, $NaBF_3CF_3$, $NaBF_3C_2F_5$, $NaPF_3(CF_3)_3$, $NaPF_3(C_2F_5)_3$, and the like. Most preferred is at least one lithium salt selected from the group consisting of $NaPF_6$, $NaN(FSO_2)_2$, and $NaBF_4$.

The Li/Na replenisher may be a Li/Na-containing compound that undergoes an oxidation reaction and substantially does not undergo a reduction reaction in the charge/discharge potential range of the positive electrode active material. The phrase "undergoes an oxidation reaction in the charge/discharge potential range of the positive electrode active material" means that the compound is capable of releasing Li/Na ions and electrons through an oxidation reaction (including release of Li/Na ions resulting from decomposition by the oxidation reaction) in the charge/discharge potential range of the positive electrode active material. The phrase "substantially does not undergo a reduction reaction in the charge/discharge potential range of the positive electrode active material" means that the compound is incapable or substantially incapable of receiving Li/Na ions and electrons through a reduction reaction or producing Li/Na ions and electrons through a reduction reaction under reaction conditions that are normal for those skilled in the art in the charge/discharge potential range of the positive electrode active material. The phrase "reaction conditions that are normal for those skilled in the art" means, for example, the conditions for discharging lithium secondary batteries. The phrase "incapable or substantially incapable of receiving Li/Na ions and electrons through a reduction reaction or producing Li/Na ions and electrons through a reduction reaction" means that 80% or more by volume of the Li/Na replenisher, of the Li/Na replenisher oxidized by charging the battery, cannot receive Li/Na ions and electrons through a reduction reaction or produce Li/Na ions and electrons through a reduction reaction. The "charge/discharge potential range of the positive electrode active material" means a potential range in which the oxidation reaction and reduction reaction of the positive electrode active material contained in the positive electrode can occur.

The Li/Na replenisher can supply Li/Na sufficiently to the negative electrode during the initial charge, and can compensate for Li/Na consumed in the negative electrode in subsequent cycles, thereby improving the initial capacity and capacity retention of the electrochemical device.

The Li/Na replenisher is preferably used in the positive electrode.

Examples of the Li replenisher include: lithium oxides such as $Li_2O_2$; lithium nitrides such as $Li_3N$; iron-based lithium oxides such as $Li_{1+x}(Ti_{1-y}Fe_y)_{1-x}O_2$ (wherein $0 < x \leq 0.25$ and $0.4 < y \leq 0.9$), $Li_{2-x}Ti_{1-z}Fe_zO_{3-y}$ (wherein $0 \leq x < 2$, $0 \leq y \leq 1$, and $0.05 \leq z \leq 0.95$), and $Li_5FeO_4$; $Li_5AlO$; and $Li_2NiO_2$.

Preferred among these is at least one selected from the group consisting of iron-based lithium oxides, $Li_5AlO$, and $Li_2NiO_2$, more preferred is at least one selected from the group consisting of $Li_5FeO_4$, $Li_5AlO$, and $Li_2NiO_2$, and still more preferred is $Li_5FeO_4$. One or two or more of these may be used.

Examples of the Na replenisher include $Na_5FeO_4$, $Na_3AlO$, and $Na_2NiO_2$. Preferred is $Na_5FeO_4$.

In order to further improve the initial capacity and capacity retention of the electrochemical device and to further improve the powder flowability, the Li/Na compound preferably includes at least one selected from the group consisting of an inorganic lithium salt, a lithium tungstate, a lithium carboxylate salt, a lithium salt containing an S=O group, a lithium imide salt, a lithium methide salt, a fluorine-containing organic lithium salt, LiSCN, $LiB(CN)_4$, $LiB(C_6H_5)_4$, $Li_2(C_2O_4)$, $LiP(C_2O_4)_3$, $Li_2B_{12}F_dH_{12-b}$ (wherein b is an integer of 0 to 3), LiBOB, $Li_5FeO_4$, $Li_5AlO$, $Li_2NiO_2$, $NaPF_6$, $NaBF_4$, $NaSbF_6$, $NaTaF_6$, $NaPO_2F_2$, $FSO_3Na$, $CF_3SO_3Na$, $NaN(FSO_2)_2$, $NaN(FSO_2)(CF_3SO_2)$, $NaN(CF_3SO_2)_2$, $NaN(C_2F_5SO_2)_2$, sodium cyclic 1,2-perfluoroethanedisulfonyl imide, sodium cyclic 1,3-perfluoropropanedisulfonyl imide, $NaC(FSO_2)_3$, $NaC(CF_3SO_2)_3$, $NaC(C_2F_5SO_2)_3$, $NaBF_3CF_3$, $NaBF_3C_2F_5$, $NaPF_3(CF_3)_3$, and $NaPF_3(C_2F_3)_3$. The Li/Na compound more preferably includes at least one selected from the group consisting of an inorganic lithium salt, a lithium imide salt, $Li_5FeO_4$, $Li_3AlO$, $Li_2NiO_2$, an inorganic sodium salt, and a sodium imide salt. The Li/Na compound still more preferably includes at

least one selected from the group consisting of $LiPF_6$, $LiN(CF_3SO_2)_2$, $LiN(FSO_2)_2$, $LiBF_4$, $Li_5FeO_4$, $Li_5AlO$, $Li_2NiO_2$, $NaPF_6$, $NaN(FSO_2)_2$, and $NaBF_4$. The Li/Na compound further preferably includes at least one selected from the group consisting of $LiN(CF_3SO_2)_2$, $Li_5FeO_4$, $Li_5AlO$, and $Li_2NiO_2$, further preferably at least one selected from the group consisting of $LiN(CF_3SO_2)_2$ and $Li_5FeO_4$, and is particularly preferably $LiN(CF_3SO_2)_2$.

The Li/Na compound also preferably includes at least one selected from the group consisting of $LiPF_6$ and $LiN(CF_3SO_2)_2$.

In order to further improve the initial capacity and capacity retention of the electrochemical device and to further improve the powder flowability, the mass ratio of the fibrillatable resin and the Li/Na compound (fibrillatable resin/"Li/Na compound") is preferably 99/1 or less, more preferably 97/3 or less, still more preferably 90/10 or less, further preferably 85/15 or less, further preferably 80/20 or less, further preferably 75/25 or less, particularly preferably 70/30 or less, while preferably 20/80 or more, more preferably 30/70 or more, still more preferably 40/60 or more, further preferably 45/55 or more, particularly preferably 50/50 or more.

The total amount of the fibrillatable resin and the Li/Na compound is 40% by mass or more based on the composition of the disclosure. In order to further improve the initial capacity and capacity retention of the electrochemical device and to further improve the powder flowability, the amount is preferably 40% by mass or more, more preferably 50% by mass or more, still more preferably 60% by mass or more, further preferably 70% by mass or more, further preferably 80% by mass or more, further preferably 90% by mass or more, particularly preferably 95% by mass or more, while it may be less than 100% by mass, 99% by mass or less, or 97% by mass or less.

The composition of the disclosure may contain other components, if needed. Examples of other components include polymers different from the fibrillatable resin, conductive materials, dispersants, and thickeners. As a thickener, for example, a cellulose such as carboxy methyl cellulose (CMC) or methyl cellulose (MC) can be suitably used.

The composition of the disclosure may be free from an electrode active material and a solid electrolyte.

The composition of the disclosure may contain at least one compound selected from the group consisting of a compound represented by the following formula (1) (hereafter, also referred to as compound (1)) and a compound represented by the following formula (2) (hereafter, also referred to as compound (2)).

Formula (1): $(H-(CF_2)_{m-1}-COO)_pM^1$

wherein m is 4 to 20, $M^1$ is H, a metal atom, $NR^5_4$ (where $R^5$s are optionally the same as or different from each other and each represent H or a C1-C10 organic group), imidazolium optionally containing a substituent, pyridinium optionally containing a substituent, or phosphonium optionally containing a substituent; and p is 1 or 2, and Formula (2): $(H-(CF_2)_n-SO_3)_qM^2$

wherein n is 4 to 20, $M^2$ is H, a metal atom, $NR^5_4$ (where $R^5$ is as defined above), imidazolium optionally containing a substituent, pyridinium optionally containing a substituent, or phosphonium optionally containing a substituent; and q is 1 or 2.

The metal atom for $M^1$ or $M^2$ may be a monovalent or divalent metal atom, an alkali metal (Group 1), or an alkaline earth metal (Group 2). Specific examples thereof include Na, K, and Li.

The four $R^5$s may be the same as or different from each other. $R^5$ is preferably H or a C1-C10 organic group, more preferably H or a C1-C4 organic group. The organic group as $R^5$ is preferably a fluorine-free organic group.

In the formula (1), m is preferably 6 or greater, more preferably 8 or greater, still more preferably 11 or greater, further preferably 13 or greater, particularly preferably 15 or greater, while preferably 18 or smaller, more preferably 16 or smaller.

In the formula (2), n is preferably 6 or greater, more preferably 8 or greater, still more preferably 11 or greater, further preferably 13 or greater, particularly preferably 15 or greater, while preferably 18 or smaller, more preferably 16 or smaller.

The composition of the disclosure may contain one or more compounds (1), two or more compounds (1), or three or more compounds (1).

When the composition of the disclosure contains the compound (1), the amount of the compound (1) (if two or more compounds (1) are contained, the amount of each compound) based on the composition may be 10 ppm by mass or less, preferably 5000 ppb by mass or less, more preferably 1000 ppb by mass or less, still more preferably 500 ppb by mass or less, further preferably 100 ppb by mass or less, further preferably 50 ppb by mass or less, further preferably 25 ppb by mass or less, particularly preferably 10 ppb by mass or less.

The lower limit is not limited, and may be 0.1 ppb by mass or 1 ppb by mass.

The composition of the disclosure may contain one or more compounds (2), two or more compounds (2), or three or more compounds (2).

When the composition of the disclosure contains the compound (2), the amount of the compound (2) (if two or more compounds (2) are contained, the amount of each compound) based on the composition may be 10 ppm by mass or

less, preferably 5000 ppb by mass or less, more preferably 1000 ppb by mass or less, still more preferably 500 ppb by mass or less, further preferably 100 ppb by mass or less, further preferably 50 ppb by mass or less, further preferably 25 ppb by mass or less, further preferably 10 ppb by mass or less, further preferably 1 ppb by mass or less, further preferably less than 1 ppb by mass, particularly preferably below the lower limit of quantitation. The lower limit is not limited, and may be an amount below the lower limit of quantitation.

The composition containing the compound (1) and/or the compound (2) can be prepared using a hydrocarbon surfactant. The composition of the disclosure may contain a hydrocarbon surfactant in addition to the fibrillatable resin, the Li/Na compound, and the compound (1) and/or the compound (2). The amount of the hydrocarbon surfactant in the composition is not limited, and is typically 100 ppm by mass to 10% by mass.

In the hydrocarbon surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The composition of the disclosure is preferably substantially free from a compound represented by the following formula (3) (hereafter, also referred to as compound (3)):

Formula (3): $(H\text{-}(CF_2)_8\text{-}SO_3)_qM^2$

wherein $M^2$ is H, a metal atom, $NR^5_4$ (where $R^5$s may be the same as or different from each other and each represent H or a C1-C10 organic group (preferably, a fluorine-free C1-C10 organic group)), imidazolium optionally containing a substituent, pyridinium optionally containing a substituent, or phosphonium optionally containing a substituent; and q is 1 or 2.

The phrase "substantially free from the compound (3)" means that the amount of the compound (3) is 25 ppb by mass or less based on the composition. The amount of the compound (3) is preferably 20 ppb by mass or less, more preferably 15 ppb by mass or less, still more preferably 10 ppb by mass or less, based on the composition. The lower limit is not limited, and may be 0 ppb by mass, 0.1 ppb by mass, or 1 ppb by mass.

The composition of the disclosure preferably contains at least one compound selected from the group consisting of a compound represented by the following formula (4) (hereafter, also referred to as compound (4)) and a compound represented by the following formula (4') (hereafter, also referred to as compound (4')). The amounts thereof are each preferably 1000 ppb by mass or less based on the composition.

Formula (4): $(H\text{-}(CF_2)_{15}\text{-}COO)_pM^1$

In the formula, $M^1$ is H, a metal atom, $NR^5_4$ (where $R^5$s may be the same as or different from each other and each represent H or a C1-C10 organic group (preferably, a fluorine-free C1-C10 organic group)), imidazolium optionally containing a substituent, pyridinium optionally containing a substituent, or phosphonium optionally containing a substituent; and p is 1 or 2.

Formula (4'): $(H\text{-}(CF_2)_{16}\text{-}COO)_pM^1$

In the formula, $M^1$ is H, a metal atom, $NR^5_4$ (where $R^5$ is as defined above), imidazolium optionally containing a substituent, pyridinium optionally containing a substituent, or phosphonium optionally containing a substituent; and p is 1 or 2.

When the composition of the disclosure contains the compound (4), the amount of the compound (4) is more preferably 500 ppb by mass or less, still more preferably 250 ppb by mass or less, further preferably 100 ppb by mass or less, further preferably 50 ppb by mass or less, further preferably 25 ppb by mass or less, further preferably 15 ppb by mass or less, particularly preferably 10 ppb by mass or less, based on the composition. The lower limit is not limited, and may be 0.1 ppb by mass or 1 ppb by mass.

When the composition of the disclosure contains the compound (4'), the amount of the compound (4') is more preferably 500 ppb by mass or less, still more preferably 250 ppb by mass or less, further preferably 100 ppb by mass or less, further preferably 50 ppb by mass or less, further preferably 25 ppb by mass or less, further preferably 15 ppb by mass or less, particularly preferably 10 ppb by mass or less, based on the composition. The lower limit is not limited, and may be 0.1 ppb by mass or 1 ppb by mass.

The composition of the disclosure preferably contains at least one compound selected from the group consisting of a compound represented by the following formula (5) (hereafter, also referred to as compound (5)) and a compound represented by the following formula (5') (hereafter, also referred to as compound (5')). The amounts thereof are each preferably 1000 ppb by mass or less based on the composition.

Formula (5): $(H\text{-}(CF_2)_{13}\text{-}COO)_pM^1$

In the formula, $M^1$ is H, a metal atom, $NR^5_4$ (where $R^5$s may be the same as or different from each other and each represent H or a C1-C10 organic group (preferably, a fluorine-free C1-C10 organic group)), imidazolium optionally containing a substituent, pyridinium optionally containing a substituent, or phosphonium optionally containing a substituent; and p is 1 or 2.

Formula (5'): $(H\text{-}(CF_2)_{14}\text{-}COO)_pM^1$

In the formula, $M^1$ is H, a metal atom, $NR^5_4$ (where $R^5$ is as defined above), imidazolium optionally containing a substituent, pyridinium optionally containing a substituent, or phosphonium optionally containing a substituent; and p is 1 or 2.

When the composition of the disclosure contains the compound (5), the amount of the compound (5) is more preferably 500 ppb by mass or less, still more preferably 250 ppb by mass or less, further preferably 100 ppb by mass or less, further preferably 50 ppb by mass or less, further preferably 25 ppb by mass or less, further preferably 15 ppb by mass or less, particularly preferably 10 ppb by mass or less, based on the composition. The lower limit is not limited, and may be 0.1 ppb by mass or 1 ppb by mass.

When the composition of the disclosure contains the compound (5'), the amount of the compound (5') is more preferably 500 ppb by mass or less, still more preferably 250 ppb by mass or less, further preferably 100 ppb by mass or less, further preferably 50 ppb by mass or less, further preferably 25 ppb by mass or less, further preferably 15 ppb by mass or less, particularly preferably 10 ppb by mass or less, based on the composition. The lower limit is not limited, and may be 0.1 ppb by mass or 1 ppb by mass.

The amounts of the compounds (1), (2), (3), (4), (4'), (5), and (5') are values measured by liquid chromatography mass spectrometry as described later in EXAMPLES.

The composition of the disclosure can be suitably used in a dry process. The liquid content of the composition is preferably 10% by mass or less, more preferably 5% by mass or less, still more preferably 3% by mass or less, further preferably 1% by mass or less, further preferably 0.1% by mass or less, further preferably 0.01% by mass or less, particularly preferably 0.001% by mass or less.

The liquid may be, for example, a substance that is liquid at 25°C and 1 atm, such as water or an organic solvent.

The liquid content is determined by the following method.

The mass of the composition is weighed before and after heating in vacuum at 100°C for five hours, and the liquid content is calculated by the following equation. Three samples are taken, and this calculation is performed for each sample and the values are averaged.

Liquid content (% by mass) = [(Mass (g) of composition before heating) - (Mass (g) of composition after heating)]/(Mass (g) of composition before heating) × 100

The composition of the disclosure is preferably substantially free from water. Such a composition can reduce or prevent gas generation and deterioration of electrochemical device characteristics. Moreover, the electrode active material or solid electrolyte to be used together can be selected from a wide range of selections, which is advantageous in terms of the production process. The phrase "substantially free from water" means that the water content based on the composition is 0.050% by mass or less.

The water content is preferably 0.030% by mass or less, more preferably 0.010% by mass or less, still more preferably 0.005% by mass or less, further preferably 0.003% by mass or less, further preferably 0.002% by mass or less, particularly preferably 0.001% by mass or less.

The water content is determined by the following method.

The mass of the composition is weighed before and after heating at 150°C for two hours, and the water content is calculated by the following equation. Three samples are taken, and this calculation is performed for each sample and the values are averaged.

Water content (% by mass) = [(Mass (g) of composition before heating) - (Mass (g) of composition after heating)]/(Mass (g) of composition before heating) × 100

The composition of the disclosure is preferably substantially free from a fluorine-containing compound having a molecular weight of 1000 or less. The phrase "substantially free from a fluorine-containing compound" means that the amount of the fluorine-containing compound is 25 ppb by mass or less based on the composition.

The amount of the fluorine-containing compound is preferably 20 ppb by mass or less, more preferably 15 ppb by mass or less, still more preferably 10 ppb by mass or less, further preferably less than 10 ppb by mass, further preferably 1 ppb by mass or less, further preferably less than 1 ppb by mass, particularly preferably an amount below the lower limit of quantitation. The lower limit is not limited, and may be an amount below the lower limit of quantitation.

The amount of the fluorine-containing compound having a molecular weight of 1000 or less is measured by the

following method.

To a 1-g portion of a sample weighed out is added 10 g (12.6 mL) of methanol, followed by ultrasonication for 60 minutes, whereby an extract is obtained. The resulting extract is appropriately concentrated by nitrogen purge, and the fluorine-containing compound in the concentrated extract is subjected to a LC/MS/MS assay. Based on the molecular weight information extracted from the LC/MS spectrum obtained, consistency with the structural formulas of the candidate fluorine-containing compounds is examined. Aqueous solutions having five or more different levels of standard substance concentrations are prepared, and LC/MS analysis is performed on the aqueous solutions containing varied amounts of the standard substance. The relation between the amount and the area relative to the amount is plotted, and a calibration curve is drawn. Based on the resulting calibration curve, the area of the fluorine-containing compound in the extract in the LC/MS chromatogram is converted to the amount of the fluorine-containing compound.

The lower limit of quantitation in this measurement method is 10 ppb by mass.

Examples of the fluorine-containing compound having a molecular weight of 1000 or less include a fluorine-containing compound containing a hydrophilic group having a molecular weight of 1000 g/mol or less. The molecular weight of the fluorine-containing compound is preferably 800 or less, more preferably 500 or less.

Polymerized particles obtained by polymerization performed in the presence of a fluorine-containing surfactant usually contain the fluorine-containing surfactant in addition to the target polymer. The fluorine-containing surfactant herein is used in polymerization.

The fluorine-containing compound having a molecular weight of 1000 or less may be a compound that is not added in polymerization, for example, a compound that is produced as a by-product in polymerization.

When containing an anionic portion and a cationic portion, the fluorine-containing compound having a molecular weight of 1000 or less refers to a fluorine-containing compound in which the anionic portion has a molecular weight of 1000 or less. The fluorine-containing compound having a molecular weight of 1000 or less does not include the fibrillatable resin.

The hydrophilic group may be, for example, -COOM, - $SO_2M$, or -$SO_3M$, and examples include anionic groups such as -COOM and -$SO_3M$ wherein M is H, a metal atom, $NR^1_4$, imidazolium optionally containing a substituent, pyridinium optionally containing a substituent, or phosphonium optionally containing a substituent, where $R^1$ is H or an organic group.

The fluorine-containing surfactant may also be a fluorine-containing surfactant in which the anionic portion has a molecular weight of 1000 or less (fluorine-containing anionic surfactant). The "anionic portion" means a portion excluding the cation in the fluorine-containing surfactant. For example, in the case of $F(CF_2)_{n1}COOM$, the anionic portion refers to the portion "$F(CF_2)_{n1}COO$".

Examples of the fluorine-containing anionic surfactant include a compound represented by the following formula ($N^0$):

$$X^{n0}\text{-}Rf^{n0}\text{-}Y^0 \qquad (N^0)$$

wherein $X^{n0}$ is H, Cl, or F; $Rf^{n0}$ is a linear, branched, or cyclic alkylene group containing 3 to 20 carbon atoms in which some or all of Hs are replaced by F; the alkylene group optionally containing one or more ether bonds in which some of Hs are replaced by Cl; and $Y^0$ is an anionic group.

The anionic group for $Y^0$ may be -COOM, -$SO_2M$, or - $SO_3M$, and may be -COOM or -$SO_3M$.

M is H, a metal atom, $NR^1_4$, imidazolium optionally containing a substituent, pyridinium optionally containing a substituent, or phosphonium optionally containing a substituent, wherein $R^1$ is H or an organic group.

Examples of the metal atom include an alkali metal (Group 1) and an alkaline earth metal (Group 2), such as Na, K, and Li.

$R^1$ may be H or a $C_{1-10}$ organic group, may be H or a $C_{1-4}$ organic group, and may be H or a $C_{1-4}$ alkyl group.

M may be H, a metal atom, or $NR^1_4$, may be H, an alkali metal (Group 1), an alkaline earth metal (Group 2), or $NR^1_4$, and may be H, Na, K, Li, or $NH_4$.

$Rf^{n0}$ may be a group in which 50% or more of H atoms are replaced by fluorine atoms.

The fluorine-containing surfactant may be a single fluorine-containing surfactant or may be a mixture of two or more fluorine-containing surfactants.

Examples of the fluorine-containing surfactant include compounds represented by the following formulas. The fluorine-containing surfactant may be a mixture of these compounds:

$F(CF_2)_7COOM$,

$F(CF_2)_5COOM$,

$H(CF_2)_6COOM$,

$H(CF_2)_7COOM$,

$CF_3O(CF_2)_3OCHFCF_2COOM$,

$C_3F_4OCF(CF_3)CF_2OCF(CF_3)COOM$,

$CF_3CF_2CF_2OCF(CF_3)COOM$,

$CF_3CF_2OCF_2CF_2OCF_2COOM$,

$C_2F_5OCF(CF_3)CF_2OCF(CF_3)COOM$,

$CF_3OCF(CF_3)CF_2OCF(CF_3)COOM$,

$CF_2ClCF_2CF_2OCF(CF_3)CF_2OCF_2COOM$,

$CF_2ClCF_2CF_2OCF_2CF(CF_3)OCF_2COOM$,

$CF_2ClCF(CF_3)OCF(CF_3)CF_2OCF_2COOM$,

$CF_2ClCF(CF_3)OCF_2CF(CF_3)OCF_2COOM$,

and

[Chem. 3]

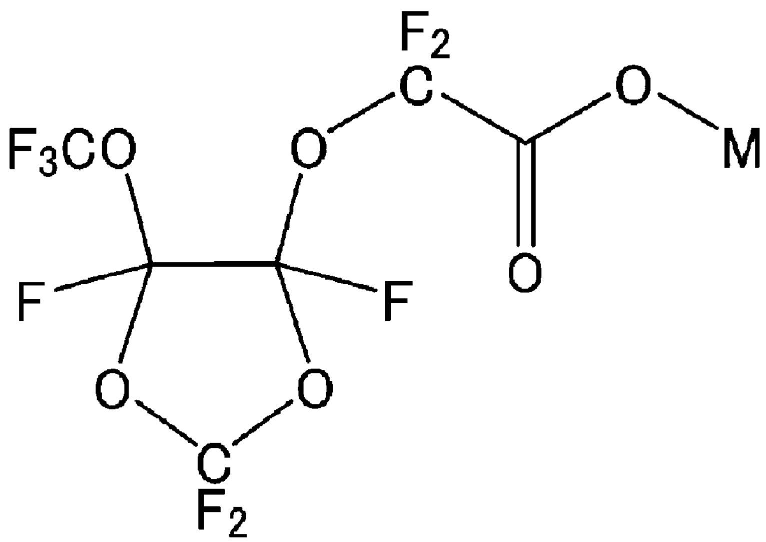

In each formula, M is H, a metal atom, $NR^1_4$, imidazolium optionally containing a substituent, pyridinium optionally containing a substituent, or phosphonium optionally containing a substituent, where $R_1$ is H or an organic group.

The composition of the disclosure is preferably substantially free from any of the fluorine-containing compounds represented by the above formulas.

In each of the above formulas, M may be H, a metal atom, or $NR^1_4$, may be H, an alkali metal (Group 1), an alkaline earth metal (Group 2), or $NR^1_4$, or may be H, Na, K, Li, or $NH_4$.

$R^1$ may be H or a $C_{1-10}$ organic group, may be H or a $C_{1-4}$ organic group, or may be H or a $C_{1-4}$ alkyl group.

The composition of the disclosure substantially free from any of the fluorine-containing compounds represented by the above formulas can further reduce or prevent gas generation and deterioration of electrochemical device characteristics.

The phrase "substantially free from any of the fluorine-containing compounds represented by the above formulas" means that the amount of any of the fluorine-containing compounds is 25 ppb by mass or less based on the composition.

The amount of the fluorine-containing compound is preferably 20 ppb by mass or less, more preferably 15 ppb by mass or less, still more preferably 10 ppb by mass or less, further preferably less than 10 ppb by mass, further preferably 1 ppb by mass or less, further preferably less than 1 ppb by mass, particularly preferably below the lower limit of quantitation. The lower limit is not limited, and may be an amount below the lower limit of quantitation.

The composition of the disclosure is also preferably substantially free from a fluorine-containing compound represented by the following formula:

$$[C_{n-1}F_{2n-1}COO^{-}]M^{+}$$

wherein n is an integer of 9 to 14, preferably 9 to 12; and $M^+$ is a cation. Such a composition can further reduce or prevent gas generation and deterioration of electrochemical device characteristics.
M constituting the cation $M^+$ in the formula is the same as M mentioned above.

The phrase "substantially free from a fluorine-containing compound represented by the formula" means that the amount of the fluorine-containing compound is 25 ppb by mass or less based on the composition.

The amount of the fluorine-containing compound is preferably 20 ppb by mass or less, more preferably 15 ppb by mass or less, still more preferably 10 ppb by mass or less, further preferably less than 10 ppb by mass, further preferably 1 ppb by mass or less, further preferably less than 1 ppb by mass, particularly preferably below the lower limit of quantitation. The lower limit is not limited, and may be an amount below the lower limit of quantitation.

In order to form a mixture sheet with still higher strength, the composition of the disclosure preferably has an endothermic peak temperature of 333°C or higher, more preferably 335°C or higher, still more preferably 337°C or higher, further preferably 340°C or higher, while preferably 350°C or lower, more preferably 346°C or lower.

The endothermic peak temperature is the temperature corresponding to the minimum point on a heat-of-fusion curve obtained by performing differential scanning calorimetry (DSC) at a temperature-increasing rate of 10°C/min on the composition that has never been heated to a temperature of 300°C or higher. When two or more minimum points are present in one melting peak, the temperatures corresponding to the respective peaks are considered as endothermic peak temperatures.

In order to form a mixture sheet with still higher strength, the composition of the disclosure preferably has a melting point of 315°C or higher, more preferably 320°C or higher, still more preferably 323°C or higher, further preferably 325°C or higher, while preferably 335°C or lower, more preferably 330°C or lower.

The melting point is the temperature corresponding to the minimum point on a heat-of-fusion curve obtained by performing differential scanning calorimetry (DSC) at a temperature-increasing rate of 10°C/min on the composition that has a history of being heated to a temperature of 300°C or higher.

The composition of the disclosure may have an average secondary particle size of 350 μm or greater, preferably 400 μm or greater, more preferably 450 μm or greater, still more preferably 500 μm or greater, further more preferably 550 μm or greater, particularly preferably 600 μm or greater, while preferably 1000 μm or smaller, more preferably 900 μm or smaller, still more preferably 800 μm or smaller, further more preferably 700 μm or smaller.

The average secondary particle size is measured in conformity with JIS K 6891.

In order to achieve excellent handleability, the composition of the disclosure may have an average aspect ratio of 2.0 or lower, preferably 1.8 or lower, more preferably 1.7 or lower, still more preferably 1.6 or lower, further preferably 1.5 or lower, further preferably 1.4 or lower, even more preferably 1.3 or lower, particularly preferably 1.2 or lower, most preferably 1.1 or lower. The average aspect ratio may be 1.0 or higher.

The average aspect ratio is determined as follows. Specifically, the composition is observed using a scanning electron microscope (SEM) and 200 or more microparticles randomly selected are imaged. The ratio of the major and minor axes of each particle is then obtained and the average thereof is defined as the average aspect ratio.

In order to achieve excellent handleability, the composition of the disclosure preferably has an apparent density of 0.40 g/mL or higher, more preferably 0.43 g/mL or higher, still more preferably 0.45 g/mL or higher, further more preferably 0.48 g/mL or higher, particularly preferably 0.50 g/mL or higher. The upper limit is not limited, and may be 4.00 g/mL.

The apparent density is determined in conformity with JIS K 6892.

The composition of the disclosure may be in any form, and is preferably in the form of powder so that it can be mixed with an electrode active material or a solid electrolyte without a large amount of dispersion medium.

The composition may be in the form other than powder, such as a dispersion or a molded article.

The composition of the disclosure can be produced by mixing the fibrillatable resin and the Li/Na compound. Mixing the fibrillatable resin and the Li/Na compound prior to mixing with an electrode active material or a solid electrolyte improves the dispersibility of the fibrillatable resin. This allows uniform dispersion of the fibrillatable resin and the Li/Na compound in the production of a mixture by mixing with an electrode active material or a solid electrolyte, improving the initial capacity, capacity retention, and other electrochemical device characteristics.

The fibrillatable resin and the Li/Na compound may be mixed by any method. Still, dry mixing is preferred. The

fibrillatable resin and the Li/Na compound are each preferably in the form of powder upon mixing.

The mixing is preferably performed without using a stirring blade, such as airflow mixing or mixing using a V-type blender.

The fibrillatable resin as a raw material can be suitably produced by a production method including a step (A) of preparing an aqueous dispersion of the fibrillatable resin, a step (B) of coagulating the aqueous dispersion to obtain a wet powder, and a step (C) of drying (heat-treating) the wet powder.

The aqueous dispersion of the fibrillatable resin can be produced, for example, by a method including a step of emulsion-polymerizing a required monomer in an aqueous medium in the presence of a hydrocarbon surfactant.

Hereinbelow, a method for producing an aqueous dispersion in a case where the fibrillatable resin is a TFE-based polymer is specifically described.

In the hydrocarbon surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The hydrocarbon surfactant is preferably a carboxylic acid-type hydrocarbon surfactant. The carboxylic acid-type hydrocarbon surfactant may be any surfactant that contains a carboxy group (-COOH) or a group where a hydrogen atom of a carboxy group is replaced by an inorganic cation (e.g., metal atom, ammonium). Usable is, for example, a hydrocarbon surfactant containing a carboxy group or a group where a hydrogen atom of a carboxy group is replaced by an inorganic cation, from among specific hydrocarbon surfactants described later and other compounds with surface activity.

The hydrocarbon surfactant is also preferably a sulfonic acid-type hydrocarbon surfactant. The sulfonic acid-type hydrocarbon surfactant may be any surfactant that contains a $-SO_3H$ group, a $-OSO_3H$ group, or a group where a hydrogen atom of any of these groups is replaced by an inorganic cation (e.g., metal atom, ammonium). Usable is, for example, a hydrocarbon surfactant containing a $-SO_3H$ group, a $-OSO_3H$ group, or a group where a hydrogen atom of any of these groups is replaced by an inorganic cation, from among specific hydrocarbon surfactants described later and other compounds with surface activity.

In order to achieve good emulsification performance, the hydrocarbon surfactant is preferably water-soluble. The phrase "the hydrocarbon surfactant is water-soluble" means that the maximum concentration of the hydrocarbon surfactant dissolved in water is 100 ppm by mass or higher at 85°C. The maximum concentration in water is preferably 500 ppm by mass or higher, more preferably 1000 ppm by mass or higher, still more preferably 2000 ppm by mass or higher, further preferably 3000 ppm by mass or higher, further preferably 5000 ppm by mass or higher, further preferably 1% by mass or higher, further preferably 3% by mass or higher, further preferably 5% by mass or higher, particularly preferably 10% by mass or higher, while it may be 50% by mass or lower.

The emulsion polymerization preferably includes a step of performing emulsion polymerization of tetrafluoroethylene alone or emulsion polymerization of tetrafluoroethylene and a modifying monomer copolymerizable with the tetrafluoroethylene, in the presence of a specific hydrocarbon surfactant in an aqueous medium and a step of adding the specific hydrocarbon surfactant continuously in the emulsion polymerization step.

Adding the specific hydrocarbon surfactant continuously means, for example, adding the specific hydrocarbon surfactant not all at once, but adding over time and without interruption or adding in portions. The specific hydrocarbon surfactant is, for example, a hydrocarbon surfactant containing one or more carbonyl groups which are not in a carboxy group or a hydrocarbon surfactant obtained by radically treating or oxidizing the hydrocarbon surfactant containing one or more carbonyl groups which are not in a carboxy group. The radical treatment may be any treatment that generates radicals in the hydrocarbon surfactant containing one or more carbonyl groups which are not in a carboxy group. Examples include a treatment in which deionized water and the hydrocarbon surfactant are added to a reactor, the reactor is hermetically sealed, the inside of the reactor is replaced with nitrogen, the reactor is heated and pressurized, a polymerization initiator is charged, the contents are stirred for a certain time, then the reactor is depressurized to the atmospheric pressure, and the reactor is cooled. The oxidation treatment is a treatment in which an oxidizing agent is added to a hydrocarbon surfactant containing one or more carbonyl groups which are not in a carboxy group. Examples of the oxidizing agent include oxygen, ozone, hydrogen peroxide solution, manganese(IV) oxide, potassium permanganate, potassium dichromate, nitric acid, and sulfur dioxide. The above production method enables, even without a conventional fluorine-containing surfactant, the production of a TFE-based polymer having a molecular weight equivalent to a TFE-based polymer obtained by a production method using a conventional fluorine-containing surfactant.

In the production method, the step of continuously adding the specific hydrocarbon surfactant is preferably a step of starting to add the hydrocarbon surfactant to the aqueous medium when the solid content of the TFE-based polymer formed in the aqueous medium is less than 0.60% by mass. The specific hydrocarbon surfactant is preferably started to be added to the aqueous medium when the solid content is 0.5% by mass or less. The specific hydrocarbon surfactant is more preferably started to be added when the solid content is 0.3% by mass or less, still more preferably started to be added when the solid content is 0.2% by mass or less, further preferably started to be added when the solid content is 0.1% by mass or less, particularly preferably started to be added when the polymerization is initiated. The solid content means a concentration based on the total amount of the aqueous medium and the TFE-based polymer.

In the step of continuously adding the specific hydrocarbon surfactant, the amount of the specific hydrocarbon surfactant added is preferably 0.01 to 10% by mass based on 100% by mass of the aqueous medium. The lower limit thereof is more preferably 0.05% by mass, still more preferably 0.1% by mass, while the upper limit thereof is more preferably 5% by mass, still more preferably 1% by mass.

In the step of performing emulsion polymerization of tetrafluoroethylene alone or emulsion polymerization of tetrafluoroethylene and a modifying monomer copolymerizable with the tetrafluoroethylene in the presence of a specific hydrocarbon surfactant in an aqueous medium, the amount of the specific hydrocarbon surfactant is preferably large, and is preferably 0.0001 to 10% by mass based on 100% by mass of the aqueous medium. The lower limit thereof is more preferably 0.001% by mass, while the upper limit thereof is more preferably 1% by mass. Less than 0.0001% by mass of the surfactant may cause insufficient dispersibility. More than 10% by mass of the surfactant may fail to give the effects corresponding to its amount; on the contrary, such an amount of the surfactant may cause a reduction in the polymerization rate or even stop the reaction. The amount of the specific hydrocarbon surfactant is appropriately determined depending on the type of the monomer used, the molecular weight of the target TFE-based polymer, and the like.

The specific hydrocarbon surfactant preferably includes at least one selected from the group consisting of surfactants represented by the formula: R-X (wherein R is a fluorine-free organic group containing one or more carbonyl groups which are not in a carboxy group and containing 1 to 2000 carbon atoms, X is, $-OSO_3X^1$, $-COOX^1$, or $-SO_3X^1$, wherein $X^1$ is H, a metal atom, $NR^1_4$, imidazolium optionally containing a substituent, pyridinium optionally containing a substituent, or phosphonium optionally containing a substituent, wherein $R^1$s are each H or an organic group (preferably, a fluorine-free organic group) and may be the same as or different from each other) and surfactants (e) described later. R preferably contains 500 or less carbon atoms, more preferably 100 or less carbon atoms, still more preferably 50 or less carbon atoms, further preferably 30 or less carbon atoms.

The specific hydrocarbon surfactant more preferably includes at least one selected from the group consisting of: surfactants (a) represented by the following formula (a):

[Chem. 4]

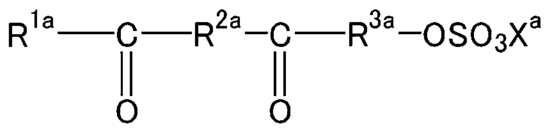

wherein $R^{1a}$ is a linear or branched alkyl group containing 1 or more carbon atoms or a cyclic alkyl group containing 3 or more carbon atoms, with a hydrogen atom bonded to a carbon atom therein being optionally replaced by a hydroxy group or a monovalent organic group (preferably, a fluorine-free organic group) containing an ester bond, optionally contains a carbonyl group when containing 2 or more carbon atoms, and optionally contains a monovalent or divalent heterocycle or optionally forms a ring when containing 3 or more carbon atoms; $R^{2a}$ and $R^{3a}$ are each independently a single bond or a divalent linking group; the total number of carbon atoms of $R^{1a}$, $R^{2a}$, and $R^{3a}$ is 6 or more; $X^a$ is H, a metal atom, $NR^{4a}_4$, imidazolium optionally containing a substituent, pyridinium optionally containing a substituent, or phosphonium optionally containing a substituent, wherein $R^{4a}$s are each H or an organic group (preferably a fluorine-free organic group) and may be the same as or different from each other; and any two of $R^{1a}$, $R^2$a, and $R^{3a}$ optionally bind to each other to form a ring; surfactants (b) represented by the following formula (b):

[Chem. 5]

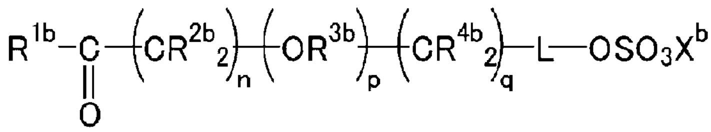

wherein $R^{1b}$ is a linear or branched alkyl group containing 1 or more carbon atoms and optionally containing a substituent or a cyclic alkyl group containing 3 or more carbon atoms and optionally containing a substituent, and optionally contains a monovalent or divalent heterocycle or optionally forms a ring when containing 3 or more carbon atoms; $R^{2b}$ and $R^{4b}$ are each independently H or a substituent; $R^{3b}$ is an alkylene group containing 1 to 10 carbon atoms and optionally containing a substituent; n is an integer of 1 or more; p and q are each independently an integer of 0 or more; $X^b$ is H, a metal atom, $NR^{5b}_4$, imidazolium optionally containing a substituent, pyridinium optionally containing a substituent, or phosphonium optionally containing a substituent, wherein $R^{5b}$s are each H or an organic group (preferably a fluorine-free organic group) and may be the same as or different from each other; and any two of $R^{1b}$, $R^{2b}$, $R^{3b}$, and $R^{4b}$ optionally bind to each other to form a ring; L is a single bond, $-CO_2-B-*$, -OCO-B-*, $-CONR^{6b}-B-*$, $-NR^{6b}CO-B-*$, or -CO- other than the carbonyl groups in $-CO_2-B-$, -OCO-B-, $-CONR^{6b}-B-$, and $-NR^6CO-B-$, wherein

B is a single bond or an alkylene group containing 1 to 10 carbon atoms and optionally containing a substituent, $R^{6b}$ is H or an alkyl group containing 1 to 4 carbon atoms and optionally containing a substituent; and * indicates the side bonded to $-OSO_3X^b$ in the formula; surfactants (c) represented by the following formula (c):

[Chem. 6]

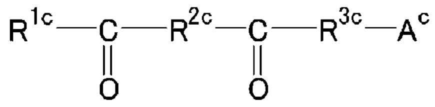

wherein $R^{1c}$ is a linear or branched alkyl group containing 1 or more carbon atoms or a cyclic alkyl group containing 3 or more carbon atoms, with a hydrogen atom bonded to a carbon atom therein being optionally replaced by a hydroxy group or a monovalent organic group (preferably, a fluorine-free organic group) containing an ester bond, optionally contains a carbonyl group when containing 2 or more carbon atoms, and optionally contains a monovalent or divalent heterocycle or optionally forms a ring when containing 3 or more carbon atoms; $R^{2c}$ and $R^{3c}$ are each independently a single bond or a divalent linking group; the total number of carbon atoms of $R^{1c}$, $R^{2c}$, and $R^{3c}$ is 5 or more; $A^c$ is $-COOX^c$ or $-SO_3X^c$, wherein $X^c$ is H, a metal atom, $NR^{4c}_4$, imidazolium optionally containing a substituent, pyridinium optionally containing a substituent, or phosphonium optionally containing a substituent, wherein $R^{4c}$s are each H or an organic group (preferably, a fluorine-free organic group) and are the same as or different from each other; and any two of $R^{1c}$, $R^{2c}$, and $R^{3c}$ optionally bind to each other to form a ring; surfactants (d) represented by the following formula (d):

[Chem. 7]

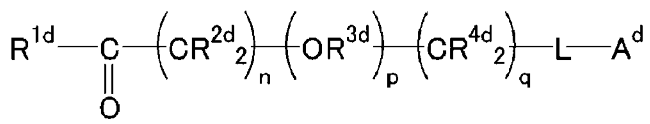

wherein $R^{1d}$ is a linear or branched alkyl group containing 1 or more carbon atoms and optionally containing a substituent or a cyclic alkyl group containing 3 or more carbon atoms and optionally containing a substituent, and optionally contains a monovalent or divalent heterocycle or optionally forms a ring when containing 3 or more carbon atoms; $R^{2d}$ and $R^{4d}$ are each independently H or a substituent; $R^{3d}$ is an alkylene group containing 1 to 10 carbon atoms and optionally containing a substituent; n is an integer of 1 or more; p and q are each independently an integer of 0 or more; $A^d$ is $-SO_3X^d$ or $-COOX^d$, wherein $X^d$ is H, a metal atom, $NR^{5d}_4$, imidazolium optionally containing a substituent, pyridinium optionally containing a substituent, or phosphonium optionally containing a substituent, wherein $R^{5d}$s are each H or an organic group (preferably a fluorine-free organic group) and are the same as or different from each other; any two of $R^{1d}$, $R^{2d}$, $R^{3d}$ and $R^{4d}$ optionally bind to each other to form a ring; L is a single bond, $-CO_2$-B-*, -OCO-B-*, $-CONR^{6d}$-B-*, $-NR^{6d}$CO-B-*, or -CO- other than the carbonyl groups in $-CO_2$-B-, -OCO-B-, $-CONR^{6d}$-B-, and $-NR^{6d}$CO-B-, wherein B is a single bond or an alkylene group containing 1 to 10 carbon atoms and optionally containing a substituent, $R^{6d}$ is H or an alkyl group containing 1 to 4 carbon atoms and optionally containing a substituent; and * indicates the side bonded to $A^d$ in the formula; and surfactants (e) represented by the following formula (e):

[Chem. 8]

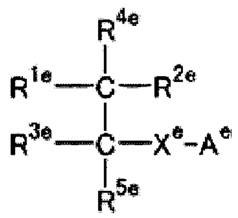

wherein $R^{1e}$ to $R^{5e}$ each represent H or a monovalent substituent, with the proviso that at least one of $R^{1e}$ or $R^{3e}$ represents a group represented by the formula: $-Y^e-R^{6e}$ and at least one of $R^{2e}$ or $R^{5e}$ represents a group represented by the formula: $-X^e-A^e$ or a group represented by the formula: $-Y^e-R^{6e}$;

$X^e$s at respective occurrences are the same as or different from each other and are each a divalent linking group or a

bond;

$A^e$s at respective occurrences are the same as or different from each other and are each $-COOM^e$, $-SO_3M^e$, or $-OSO_3M^e$ (wherein $M^e$ is H, a metal atom, $NR^{7e}_4$, imidazolium optionally containing a substituent, pyridinium optionally containing a substituent, or phosphonium optionally containing a substituent, wherein $R^{7e}$s are each H or an organic group (preferably a fluorine-free organic group));

$Y^e$s at respective occurrences are the same as or different from each other and are each a divalent linking group selected from the group consisting of $-S(=O)_2-$, -O-, -COO-, -OCO-, $-CONR^{8e}-$, and $-NR^{8e}CO-$, or a bond, wherein $R^{8e}$ is H or an organic group (preferably, a fluorine-free organic group);

$R^{6e}$s at respective occurrences are the same as or different from each other and are each an alkyl group containing 2 or more carbon atoms and optionally containing, between carbon atoms, at least one selected from the group consisting of a carbonyl group, an ester group, an amide group, and a sulfonyl group;

and any two of $R^{1e}$ to $R^{5e}$ optionally bind to each other to form a ring.

The surfactant (a) can be produced by the production method disclosed in WO 2020/022355.

The surfactant (b) can be produced by the production method disclosed in WO 2020/022355.

The surfactant (c) can be produced by the production method disclosed in WO 2020/022355.

The surfactant (d) can be produced by the production method disclosed in WO 2020/022355.

The surfactant (e) can be produced by a known production method.

The specific hydrocarbon surfactant is also preferably a carboxylic acid-type hydrocarbon surfactant. The carboxylic acid-type hydrocarbon surfactant may be any surfactant that contains a carboxy group (-COOH) or a group where a hydrogen atom of a carboxy group is replaced by an inorganic cation (e.g., metal atom, ammonium). Usable is, for example, a hydrocarbon surfactant containing a carboxy group or a group where a hydrogen atom of a carboxy group is replaced by an inorganic cation, from among specific hydrocarbon surfactants described above.

In the carboxylic acid-type hydrocarbon surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The carboxylic acid-type hydrocarbon surfactant is preferably one containing a carboxy group (-COOH) or a group where a hydrogen atom of a carboxy group is replaced by an inorganic cation (e.g., metal atom, ammonium), among at least one selected from the group consisting of the surfactant (c) represented by the formula (c) and the surfactant (d) represented by the formula (d).

The specific hydrocarbon surfactant is also preferably a sulfonic acid-type hydrocarbon surfactant. The sulfonic acid-type hydrocarbon surfactant may be any surfactant that contains a $-SO_3H$ group, a $-OSO_3H$ group, or a group where a hydrogen atom of any of these groups is replaced by an inorganic cation (e.g., metal atom, ammonium). Usable is, for example, a hydrocarbon surfactant containing a $-SO_3H$ group, a $-OSO_3H$ group, or a group where a hydrogen atom of any of these groups is replaced by an inorganic cation, from among specific hydrocarbon surfactants described above.

In the sulfonic acid-type hydrocarbon surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The composition of the disclosure can be efficiently produced by using at least one of the specific hydrocarbon surfactants. The composition of the disclosure may be produced by simultaneously using two or more of the specific hydrocarbon surfactants, or may be produced by simultaneously using a different compound with surface activity in addition to any of the specific hydrocarbon surfactants, as long as the compound is volatile or may remain in a molded article or the like of the TFE-based polymer.

The different compound with surface activity used may be any of those disclosed in JP 2013-542308 T, JP 2013-542309 T, and JP 2013-542310 T, for example.

The different compound with surface activity may be a surfactant including a hydrophilic moiety and a hydrophobic moiety on the same molecule, such as a hydrocarbon surfactant (other than the specific hydrocarbon surfactants). These may be cationic, nonionic, or anionic.

In the compound, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

Cationic surfactants usually have a positively charged hydrophilic moiety such as alkylated ammonium halide (e.g., alkylated ammonium bromide) and a hydrophobic moiety such as long chain fatty acids.

In the cationic surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

Anionic surfactants usually have a hydrophilic moiety such as a carboxylate, a sulfonate, or a sulfate and a hydrophobic moiety that is a long chain hydrocarbon moiety such as alkyl.

In the anionic surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

Common nonionic surfactants are free from a charged group and have a hydrophilic moiety which is a long-chain hydrocarbon. The hydrophilic moiety of nonionic surfactants contains a water-soluble functional group such as an ethylene ether chain derived from polymerization with ethylene oxide.

In the nonionic surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The different compound with surface activity may also be an anionic surfactant represented by R-L-M wherein R is a linear or branched alkyl group containing 1 or more carbon atoms and optionally containing a substituent or a cyclic alkyl group containing 3 or more carbon atoms and optionally containing a substituent, and optionally contains a monovalent or divalent heterocycle or optionally forms a ring when containing 3 or more carbon atoms; L is - $ArSO_3^-$, $-SO_3^-$, $-SO_4^-$, $-PO_3^-$, or $-COO^-$; and M is H, a metal atom, $NR^5_4$ (wherein $R^5$s may be the same as or different from each other and each are H or an organic group (preferably a fluorine-free organic group)), imidazolium optionally containing a substituent, pyridinium optionally containing a substituent, or phosphonium optionally containing a substituent, where $-ArSO_3^-$ is aryl sulfonate. $R^5$ is preferably H or an organic group containing 1 to 10 carbon atoms, more preferably H or an organic group containing 1 to 4 carbon atoms.

Specific examples thereof include a compound represented by $CH_3-(CH_2)_n-L-M$ (wherein n is an integer of 6 to 17, and L and M are the same as described above) as typified by lauryl acid.

Mixtures of those in which R is an alkyl group containing 12 to 16 carbon atoms and L-M is sulfate or sodium dodecyl sulfate (SDS) can also be used.

The different compound with surface activity may also be an anionic surfactant represented by $R^6(-L-M)_2$ wherein $R^6$ is a linear or branched alkylene group containing 1 or more carbon atoms and optionally containing a substituent or a cyclic alkylene group containing 3 or more carbon atoms and optionally containing a substituent, and optionally contains a monovalent or divalent heterocycle or optionally forms a ring when containing 3 or more carbon atoms; L is - $ArSO_3^-$, $-SO_3^-$, $-SO_4^-$, $-PO_3^-$, or $-COO^-$; and M is H, a metal atom, $NR^5_4$, imidazolium optionally containing a substituent, pyridinium optionally containing a substituent, or phosphonium optionally containing a substituent, wherein $R^5$ is H or an organic group (preferably, a fluorine-free organic group), and $-ArSO_3^-$ is aryl sulfonate.

The different compound with surface activity may also be an anionic surfactant represented by $R^7(-L-M)_3$ wherein $R^7$ is a linear or branched alkylidyne group containing 1 or more carbon atoms and optionally containing a substituent or a cyclic alkylidyne group containing 3 or more carbon atoms and optionally containing a substituent, and optionally contains a monovalent or divalent heterocycle or optionally forms a ring when containing 3 or more carbon atoms; L is $-ArSO_3^-$, $-SO_3^-$, $-SO_4^-$, $-PO_3^-$, or $-COO^-$; and M is H, a metal atom, $NR^5_4$, imidazolium optionally containing a substituent, pyridinium optionally containing a substituent, or phosphonium optionally containing a substituent, wherein $R^5$ is H or an organic group (preferably, a fluorine-free organic group), and $-ArSO_3^-$ is aryl sulfonate.

Examples of the siloxane hydrocarbon surfactant include those described in Silicone Surfactants, R. M.Hill, Marcel Dekker, Inc., ISBN: 0-8247-00104. The structure of the siloxane surfactant includes defined hydrophobic and hydrophilic moieties. The hydrophobic moiety contains one or more dihydrocarbyl siloxane units, where the substituents on the silicone atoms are completely hydrocarbon.

In the sense that the carbon atoms of the hydrocarbyl groups are fully replaced by hydrogen atoms where they can be replaced by halogen such as fluorine, these siloxane surfactants can also be regarded as hydrocarbon surfactants, i.e., the monovalent substituents on the carbon atoms of the hydrocarbyl groups are hydrogen.

In the siloxane surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The siloxane hydrocarbon surfactants also include those disclosed in U.S. Pat. No. 6,841,616.

The different compound with surface activity is preferably an anionic hydrocarbon surfactant. The anionic hydrocarbon surfactant may be one described above. For example, the following compound can be suitably used.

An example of the anionic hydrocarbon surfactant is a compound ($\alpha$) represented by the following formula ($\alpha$):

$$R^{100}\text{-COOM} \qquad (\alpha)$$

wherein $R^{100}$ is a monovalent organic group (preferably a fluorine-free organic group) containing 1 or more carbon atoms and M is H, a metal atom, $NR^{101}_4$, imidazolium optionally containing a substituent, pyridinium optionally containing a substituent, or phosphonium optionally containing a substituent, wherein $R^{101}$s are each H or an organic group (preferably a fluorine-free organic group) and may be the same as or different from each other. The organic group for $R^{101}$ is preferably an alkyl group. $R^{101}$ is preferably H or an organic group containing 1 to 10 carbon atoms, more preferably H or an organic

group containing 1 to 4 carbon atoms, still more preferably H or an alkyl group containing 1 to 4 carbon atoms.

From the viewpoint of surface activity, the number of carbon atoms in $R^{100}$ is preferably 2 or more, more preferably 3 or more. From the viewpoint of water-solubility, the number of carbon atoms in $R^{100}$ is preferably 29 or less, more preferably 23 or less.

Examples of the metal atom as M include alkali metals (Group 1) and alkaline earth metals (Group 2), and preferred is Na, K, or Li. M is preferably H, a metal atom, or $NR^{101}_4$, more preferably H, an alkali metal (Group 1), an alkaline earth metal (Group 2), or $NR^{101}_4$, still more preferably H, Na, K, Li, or $NH_4$, further preferably Na, K, or $NH_4$, particularly preferably Na or $NH_4$, most preferably $NH_4$.

The compound ($\alpha$) may also be an anionic surfactant represented by $R^{102}$-COOM (wherein $R^{102}$ is a linear or branched alkyl, alkenyl, alkylene, or alkenylene group containing 1 or more carbon atoms and optionally containing a substituent or a cyclic alkyl, alkenyl, alkylene, or alkenylene group containing 3 or more carbon atoms and optionally containing a substituent, which optionally contains an ether bond; when containing 3 or more carbon atoms, $R^{102}$ optionally contains a monovalent or divalent heterocycle or optionally forms a ring; and M is as defined above).

Specific examples include a compound represented by $CH_3$-$(CH_2)_n$-COOM wherein n is an integer of 2 to 28 and M is as defined above.

The anionic hydrocarbon surfactant may also be a compound ($\beta$) represented by the following formula ($\beta$):

$$R^{100}\text{-}SO_3M \qquad (\beta)$$

wherein $R^{100}$ is a monovalent organic group (preferably a fluorine-free organic group) containing 1 or more carbon atoms; and M is H, a metal atom, $NR^{101}_4$, imidazolium optionally containing a substituent, pyridinium optionally containing a substituent, or phosphonium optionally containing a substituent, wherein $R^{101}$s are each H or an organic group (preferably a fluorine-free organic group) and may be the same as or different from each other. The organic group for $R^{101}$ is preferably an alkyl group. $R^{101}$ is preferably H or an organic group containing 1 to 10 carbon atoms, more preferably H or an organic group containing 1 to 4 carbon atoms, still more preferably H or an alkyl group containing 1 to 4 carbon atoms.

From the viewpoint of surface activity, the number of carbon atoms in $R^{100}$ is preferably 2 or more, more preferably 3 or more. From the viewpoint of water-solubility, the number of carbon atoms in $R^{100}$ is preferably 29 or less, more preferably 23 or less.

Examples of the metal atom as M include alkali metals (Group 1) and alkaline earth metals (Group 2), and preferred is Na, K, or Li. M is preferably H, a metal atom, or $NR^{101}_4$, more preferably H, an alkali metal (Group 1), an alkaline earth metal (Group 2), or $NR^{101}_4$, still more preferably H, Na, K, Li, or $NH_4$, further preferably Na, K, or $NH_4$, particularly preferably Na or $NH_4$, most preferably $NH_4$.

The compound ($\beta$) may also be an anionic surfactant represented by $R^{102}$-$SO_3M$ (wherein $R^{102}$ is a linear or branched alkyl, alkenyl, alkylene, or alkenylene group containing 1 or more carbon atoms and optionally containing a substituent, or a cyclic alkyl, alkenyl, alkylene, or alkenylene group containing 3 or more carbon atoms and optionally containing a substituent, which optionally contains an ether bond; when containing 3 or more carbon atoms, $R^{102}$ optionally contains a monovalent or divalent heterocycle or optionally forms a ring; and M is as defined above).

Specific examples include a compound represented by $CH_3$-$(CH_2)_n$-$SO_3M$ (wherein n is an integer of 2 to 28 and M is as defined above).

The anionic hydrocarbon surfactant may also be a compound I represented by the following formula I:

$$R\text{-}(XZ)_n \qquad (I)$$

wherein R is a hydrophobic hydrocarbon moiety containing one or more saturated or unsaturated, acyclic or cyclic aliphatic groups, where the percentage of total $CH_3$ groups based on the sum of $CH_3$, $CH_2$, and CH groups in one or more aliphatic groups is at least about 70% and the hydrophobic moiety contains no siloxane unit; Xs may be the same as or different from each other and each represent an ionic hydrophilic moiety; and Zs may be the same as or different from each other and each represent one or more counter ions of the ionic hydrophilic moiety; and n is 1 to 3.

The compound I exhibits low reactivity with a polymerization initiator and/or a propagating fluoropolymer radical in emulsion polymerization of a fluoromonomer.

The compound I preferably includes a substituted moiety represented by the following formula:

[Chem. 9]

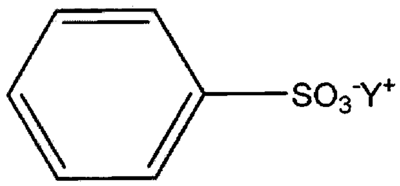

wherein $Y^+$ is hydrogen, ammonium, quaternary ammonium, a nitrogen heterocycle, an alkali metal, or an alkaline earth metal.

The compound I is preferably a compound II represented by the following formula II:

[Chem. 10]

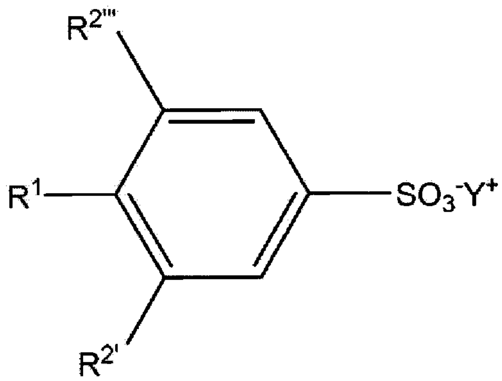

I I

wherein $R^{2'}$ and $R^{2'''}$ are the same as or different from each other and are each a saturated or unsaturated, acyclic or cyclic aliphatic group containing 4 to 16 carbon atoms, where the percentage of total $CH_3$ groups based on the sum of $CH_3$, $CH_2$, and CH groups in $R^{2'}$ and $R^{2'''}$ groups is at least about 70% or $R^{2'}$ and $R^{2'''}$ optionally bind to each other to form a saturated or unsaturated aliphatic ring optionally containing an ether or ester bond with the percentage of total $CH_3$ groups based on the sum of $CH_3$, $CH_2$, and CH groups in the ring being at least about 70%; $R^1$ is hydrogen, methoxy, ethoxy, or phenoxy; and $Y^+$ is hydrogen, ammonium, quaternary ammonium, a nitrogen heterocycle, an alkali metal, or an alkaline earth metal.

The following compounds are preferred as the compound II, for example.

[Chem. 11]

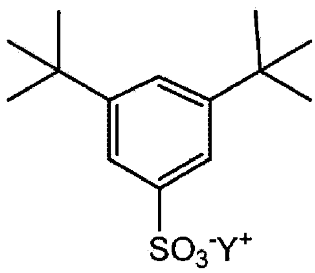

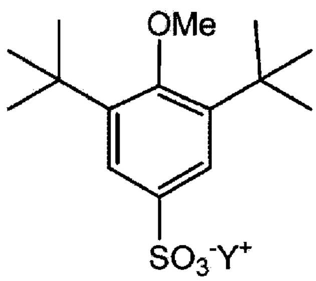

In the formula, $Y^+$ may be hydrogen, ammonium, or an alkali metal.

The compound I is also preferably a compound III represented by the following formula III:

[Chem. 12]

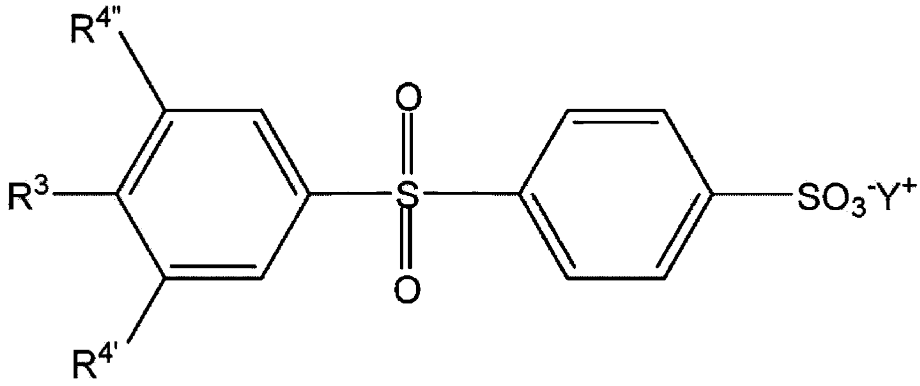

I I I

wherein $R^3$, $R^{4'}$, and $R^{4''}$ are the same as or different from each other and are each hydrogen or a saturated or unsaturated, acyclic or cyclic aliphatic group containing 4 to 16 carbon atoms, where the percentage of total $CH_3$ groups based on the sum of $CH_3$, $CH_2$, and CH groups in $R^3$, $R^{4'}$, and $R^{4''}$ groups is at least about 70%, at least one of $R^3$, $R^{4'}$, and $R^{4''}$ is not hydrogen, when $R^{4'}$ and $R^{4''}$ are each hydrogen, $R^3$ is not hydrogen, and when $R^3$ is hydrogen, $R^{4'}$, and $R^{4''}$ are each not hydrogen; and $Y^+$ is hydrogen, ammonium, quaternary ammonium, a nitrogen heterocycle, an alkali metal, or an alkaline earth metal.

The compound III is preferably the following compound, for example.

[Chem. 13]

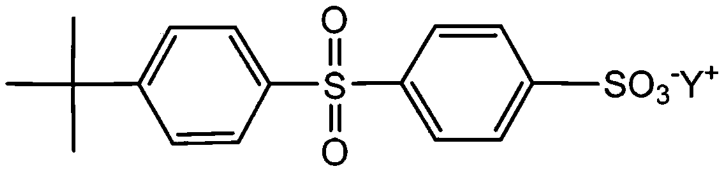

In the formula, $Y^+$ may be hydrogen, ammonium, or an alkali metal.

The composition of the disclosure can be obtained by a production method including a polymerization step of polymerizing tetrafluoroethylene alone or polymerizing tetrafluoroethylene and a modifying monomer copolymerizable with tetrafluoroethylene in an aqueous medium having a pH of 4.0 or more in the presence of a hydrocarbon surfactant and a polymerization initiator to obtain a TFE-based polymer even in a case where the specific hydrocarbon surfactant is not used.

Conventionally, the pH of the aqueous medium used in the polymerization was less than 4.0 because the polymerization step for producing a TFE-based polymer used an acidic polymerization initiator. As a result of diligent studies by the disclosers, surprisingly, it has been found that by setting the pH of the aqueous medium used for polymerization to 4.0 or more, the stability of polymerization is improved and a TFE-based polymer having a high molecular weight can be produced.

The production method includes polymerizing tetrafluoroethylene alone or tetrafluoroethylene and a modifying monomer copolymerizable with tetrafluoroethylene in an aqueous medium having a pH of 4.0 or more. The pH may be 4.0 or more, preferably more than 4.0, more preferably 4.5 or more, still more preferably 5.0 or more, further preferably 5.5 or more, even more preferably 6.0 or more, particularly preferably 6.5 or more, particularly preferably 7.0 or more, particularly preferably 7.5 or more, particularly preferably 8.0 or more. The upper limit of the pH is not limited, but may be, for example, 13.0 or less. From the viewpoint of corrosion of the polymerization tank, it is preferably 12.0 or less, more preferably 11.5 or less, still more preferably 11.0 or less.

The pH can be measured with a pH meter.

The composition of the disclosure can be obtained by a production method including a polymerization step of polymerizing tetrafluoroethylene alone or polymerizing tetrafluoroethylene and a modifying monomer copolymerizable with tetrafluoroethylene in an aqueous medium in the presence of an anionic hydrocarbon surfactant and a polymerization initiator to obtain a TFE-based polymer even in a case where the specific hydrocarbon surfactant is not used, in which the hydrocarbon surfactant contains a salt of the hydrocarbon surfactant. In other words, at least a part of the anionic hydrocarbon surfactant in the polymerization step is in the form of a salt.

As a result of diligent studies by the disclosers and others, surprisingly, it has been found that an anionic hydrocarbon surfactant containing a salt of the anionic hydrocarbon surfactant improves the stability of polymerization and

a TFE-based polymer having a high molecular weight can be produced.

This is presumably attributable to the fact that the anionic surfactant containing a salt has better water solubility to exhibit emulsifying performance more easily.

The anionic hydrocarbon surfactant will be described later.

It can be confirmed by measuring the conductivity that the anionic hydrocarbon surfactant contains a salt of the hydrocarbon surfactant.

In the production method, the anionic hydrocarbon surfactant preferably has a salt concentration of 50% by mass or more, more preferably 60% by mass or more, still more preferably 70% by mass or more, further preferably 80% by mass or more, even more preferably 90% by mass or more, particularly preferably 95% by mass or more, based on the total mass of the anionic hydrocarbon surfactant.

The proportion of the salt can be measured based on the solution concentration and the conductivity.

In the production method, the hydrocarbon surfactant is more preferably a carboxylic acid-type hydrocarbon surfactant. The hydrocarbon surfactant is free from fluorine.

In the salt of an anionic hydrocarbon surfactant, the cation that replaces the hydrogen atom of the acid (excluding hydrogen atom) is, for example, a metal atom, $NR^y_4$ ($R^y$s may be the same as or different from each other and are each H or an organic group (preferably a fluorine-free organic group)), imidazolium optionally containing a substituent, pyridinium optionally containing a substituent, or phosphonium optionally containing a substituent. $R^y$ is preferably H or an alkyl group, more preferably H or an alkyl group containing 1 to 10 carbon atoms, still more preferably H or an alkyl group containing 1 to 4 carbon atoms.

The cation in the salt of the anionic hydrocarbon surfactant is preferably a metal atom or $NR^y_4$, more preferably $NR^y_4$, still more preferably $NH_4$.

Since the conductivity varies greatly depending on the temperature, the conductivity is measured using a thermostatic bath while keeping the sample liquid temperature at 25°C and the cell temperature of the pH meter at the same temperature.

The composition of the disclosure can be suitably produced by a production method including an addition step of adding at least one selected from the group consisting of a radical scavenger and a decomposer of a polymerization initiator. The addition step is performed during the step of performing the emulsion polymerization described above in an aqueous medium. The radical concentration during polymerization can be adjusted by adding a radical scavenger or a decomposer of a polymerization initiator. In order to lower the radical concentration, a radical scavenger is preferable.

The radical scavenger used is a compound that has no reinitiation ability after addition or chain transfer to free radicals in the polymerization system. Specifically, used is a compound having a function of readily causing a chain transfer reaction with a primary radical or propagating radical and then generating a stable radical that does not react with a monomer or a compound having a function of readily causing an addition reaction with a primary radical or propagating radical to generate a stable radical.

In general, those called chain transfer agents are characterized by their activity in terms of chain transfer constant and reinitiation efficiency, and among them, those with almost 0% reinitiation efficiency are called radical scavengers.

The radical scavenger can also be described as, for example, a compound whose chain transfer constant to TFE at the polymerization temperature is greater than the polymerization rate constant and whose reinitiation efficiency is substantially 0%. The phrase "reinitiation efficiency is substantially 0%" means that the generated radicals make the radical scavenger a stable radical.

Preferably, the radical scavenger is a compound having a chain transfer constant (Cs) (= chain transfer rate constant (kc)/polymerization rate constant (kp)) to TFE at the polymerization temperature of greater than 0.1. The compound has a chain transfer constant (Cs) of more preferably 0.5 or greater, still more preferably 1.0 or greater, further preferably 5.0 or greater, particularly preferably 10 or greater.

The radical scavenger in the disclosure preferably includes, for example, at least one selected from the group consisting of aromatic hydroxy compounds, aromatic amines, N,N-diethylhydroxylamine, quinone compounds, terpenes, thiocyanates, and cupric chloride ($CuCl_2$).

Examples of aromatic hydroxy compounds include unsubstituted phenols, polyhydric phenols, salicylic acid, m- or p-salicylic acid, gallic acid, and naphthol.

Examples of unsubstituted phenols include o-, m-, or p-nitrophenol, o-, m-, or p-aminophenol, and p-nitrosophenol. Examples of polyhydric phenols include catechol, resorcinol, hydroquinone, pyrogallol, phloroglucin, and naphthoresorcinol.

Examples of aromatic amines include o-, m-, or p-phenylenediamine, and benzidine.

Examples of quinone compounds include o-, m-, or p-benzoquinone, 1,4-naphthoquinone, and alizarin.

Examples of thiocyanates include ammonium thiocyanate ($NH_4SCN$), potassium thiocyanate (KSCN), and sodium thiocyanate (NaSCN).

Among these, the radical scavenger is preferably an aromatic hydroxy compound, more preferably an unsubstituted phenol or a polyhydric phenol, still more preferably hydroquinone.

In order to reduce the standard specific gravity, the amount of the radical scavenger added is preferably an amount equivalent to 3% to 500% (on a molar basis) of the polymerization initiator concentration. The lower limit thereof is more preferably 5% (molar basis), still more preferably 8% (molar basis), still more preferably 10% (molar basis), further preferably 15% (molar basis), even more preferably 20% (molar basis), particularly preferably 25% (molar basis), particularly preferably 30% (molar basis), particularly preferably 35% (molar basis). The upper limit thereof is more preferably 400% (molar basis), still more preferably 300% (molar basis), further preferably 200% (molar basis), even more preferably 100% (molar basis).

The decomposer of a polymerization initiator may be any compound that can decompose the polymerization initiator used, and preferably includes, for example, at least one selected from the group consisting of sulfites, bisulfites, bromates, diimine, diimine salts, oxalic acid, oxalates, copper salts, and iron salts. Examples of sulfites include sodium sulfite and ammonium sulfite. An example of copper salts is copper(II) sulfate and an example of iron salts is iron(II) sulfate.

The amount of the decomposer of a polymerization initiator added is in the range of 25 to 300% by mass based on the amount of the oxidizing agent combined as a polymerization initiator (redox initiator described later). The amount thereof is preferably 25 to 150% by mass, still more preferably 50 to 100% by mass.

In order to reduce the standard specific gravity, the amount of the decomposer of a polymerization initiator added is preferably an amount equivalent to 3% to 500% (on a molar basis) of the polymerization initiator concentration. The lower limit thereof is more preferably 5% (molar basis), still more preferably 8% (molar basis), still more preferably 10% (molar basis), still more preferably 13% (molar basis), further preferably 15% (molar basis). The upper limit thereof is more preferably 400% (molar basis), still more preferably 300% (molar basis), further preferably 200% (molar basis), even more preferably 100% (molar basis).

At least one selected from the group consisting of a radical scavenger and a decomposer of a polymerization initiator is preferably added when the concentration of the TFE-based polymer formed in the aqueous medium is 5% by mass or more. More preferably, it is added when the concentration is 10% by mass or more.

Further, it is preferably added when the concentration of the TFE-based polymer formed in the aqueous medium is 40% by mass or less. It is more preferably added when the concentration is 35% by mass or less, still more preferably when the concentration is 30% by mass or less.

The addition step may be a step of continuously adding at least one selected from the group consisting of a radical scavenger and a decomposer of a polymerization initiator.

Continuously adding at least one selected from the group consisting of a radical scavenger and a decomposer of a polymerization initiator means, for example, adding the at least one selected from the group consisting of a radical scavenger and a decomposer of a polymerization initiator not all at once but over time without interruption or in portions.

The polymerization step may include polymerization of tetrafluoroethylene further in the presence of a nucleating agent.

The nucleating agent preferably includes at least one selected from the group consisting of, for example, fluoropolyethers, nonionic surfactants, and chain transfer agents.

In this case, the polymerization step is preferably a step of polymerizing tetrafluoroethylene in an aqueous medium in the presence of a hydrocarbon surfactant and the nucleating agent to obtain a TFE-based polymer.

As the fluoropolyether, perfluoropolyether is preferable.

The fluoropolyether preferably has a repeating unit represented by any of the formulas (1a) to (1d):

$$(\text{-CFCF}_3\text{-CF}_2\text{-O-})_n \qquad (1a)$$

$$(\text{-CF}_2\text{-CF}_2\text{-CF}_2\text{-O-})_n \qquad (1b)$$

$$(\text{-CF}_2\text{-CF}_2\text{-O-})_n\text{-}(\text{-CF}_2\text{-O-})_m \qquad (1c)$$

$$(\text{-CF}_2\text{-CFCF}_3\text{-O-})_n\text{-}(\text{-CF}_2\text{-O-})_m \qquad (1d)$$

wherein m and n are integers of 1 or more.

The fluoropolyether is preferably fluoropolyether acid or a salt thereof, and the fluoropolyether acid is preferably a carboxylic acid, a sulfonic acid, a sulfonamide, or a phosphonic acid, more preferably a carboxylic acid. Among the fluoropolyether acid or a salt thereof, a salt of fluoropolyether acid is preferable, an ammonium salt of fluoropolyether acid is more preferable, and an ammonium salt of fluoropolyethercarboxylic acid is still more preferable.

The fluoropolyether acid or a salt thereof can have any chain structure in which oxygen atoms in the main chain of the molecule are separated by saturated fluorocarbon groups containing 1 to 3 carbon atoms. Two or more types of fluorocarbon groups can be present in the molecule.

The fluoropolyether acid or its salt is preferably a compound represented by the following formula:

$CF_3$-$CF_2$-$CF_2$-O(-$CFCF_3$-$CF_2$-O-)$CFCF_3$-COOH,

$CF_3$-$CF_2$-$CF_2$-O(-$CF_2$-$CF_2$-$CF_2$-O-$)_n$-$CF_2$-$CF_2$COOH,

or

HOOC-$CF_2$-O(-$CF_2$-$CF_3$-O-$)_n$-(-$CF_2$-O-$)_m$$CF_2$COOH,

wherein m and n are the same as above,
or a salt thereof.

These structures are described in J. Appl. Polymer Sci., 57, 797 (1995) examined by Kasai. As disclosed herein, such fluoropolyethers can have a carboxylic acid group or a salt thereof at one end or both ends. Similarly, such fluoropolyethers may have a sulfonic acid or phosphonic acid group or a salt thereof at one end or both ends. In addition, fluoropolyethers having acid functional groups at both ends may have different groups at each end. Regarding monofunctional fluoropolyether, the other end of the molecule is usually perfluorinated, but may contain a hydrogen or chlorine atom.

Fluoropolyethers having acid groups at one or both ends contain at least two ether oxygens, preferably at least four ether oxygens, still more preferably at least six ether oxygens. Preferably, at least one fluorocarbon group separating ether oxygens, more preferably at least two of such fluorocarbon groups contain 2 or 3 carbon atoms. Still more preferably, at least 50% of the fluorocarbon groups separating ether oxygens contains 2 or 3 carbon atoms. Also preferably, the fluoropolyether contains at least 15 carbon atoms in total, and for example, a preferable minimum value of n or n + m in the repeating unit structure is preferably at least 5. Two or more fluoropolyethers having an acid group at one end or both ends can be used in the method according to the disclosure. Typically, fluoropolyethers may contain a plurality of compounds in varying proportions within the molecular weight range based on the average molecular weight, unless special care is taken in the production of a single specific fluoropolyether compound.

The fluoropolyether preferably has a number-average molecular weight of 800 g/mol or more. The fluoropolyether acid or the salt thereof preferably has a number-average molecular weight of less than 6000 g/mol, because the fluoropolyether acid or the salt thereof may be difficult to disperse in an aqueous medium. The fluoropolyether acid or the salt thereof more preferably has a number-average molecular weight of 800 to 3500 g/mol, still more preferably 1000 to 2500 g/mol.

The amount of the fluoropolyether is preferably 5 to 3000 ppm, more preferably 5 to 2000 ppm based on the aqueous medium. The lower limit thereof is still more preferably 10 ppm and the upper limit thereof is still more preferably 100 ppm.

Examples of the nonionic surfactant as the nucleating agent include the nonionic surfactant described above, and preferred is a fluorine-free nonionic surfactant. Examples of the nonionic surfactant include a compound represented by the following formula (i):

$R^3$-O-$A^1$-H (i)

wherein $R^3$ is a linear or branched primary or secondary alkyl group containing 8 to 18 carbon atoms, and $A^1$ is a polyoxyalkylene chain.

$R^3$ preferably contains 10 to 16, more preferably 12 to 16 carbon atoms. When $R^3$ contains 18 or less carbon atoms, the aqueous dispersion tends to have good dispersion stability. When $R^3$ contains more than 18 carbon atoms, it is difficult to handle due to its high flowing temperature. When $R^3$ contains less than 8 carbon atoms, the surface tension of the aqueous dispersion becomes high, so that the permeability and wettability are likely to decrease.

The polyoxyalkylene chain may be composed of oxyethylene and oxypropylene. The polyoxyalkylene chain is composed of an average repeating number of 5 to 20 oxyethylene groups and an average repeating number of 0 to 2 oxypropylene groups, and is a hydrophilic group. The number of oxyethylene units may have either a broad or narrow monomodal distribution as typically supplied, or a broader or bimodal distribution which may be obtained by blending. When the average repeating number of oxypropylene groups is more than 0, the oxyethylene groups and oxypropylene groups in the polyoxyalkylene chain may be arranged in blocks or randomly.

From the viewpoint of viscosity and stability of the aqueous dispersion, a polyoxyalkylene chain composed of an average repeating number of 7 to 12 oxyethylene groups and an average repeating number of 0 to 2 oxypropylene groups is preferred. In particular, when $A^1$ has 0.5 to 1.5 oxypropylene groups on average, good low foaming properties can be achieved, which is preferable.

More preferably, $R^3$ is (R') (R")HC-, where R' and R" are the same or different linear, branched, or cyclic alkyl groups, and the total number of carbon atoms is at least 5, preferably 7 to 17. Preferably, at least one of R' or R" is a

branched or cyclic hydrocarbon group.

Specific examples of the polyoxyethylene alkyl ether include $C_{13}H_{27}$-O-$(C_2H_4O)_{10}$-H, $C_{12}H_{25}$-O-$(C_2H_4O)_{10}$-H, $C_{10}H_{21}CH(CH_3)CH_2$-O-$(C_2H_4O)_9$-H, $C_{13}H_{27}$-O-$(C_2H_4O)_9$-$(CH(CH_3)CH_2O)$-H, $C_{16}H_{33}$-O-$(C_2H_4O)_{10}$-H, and $HC(C_3H_{11})(C_7H_{13})$-O-$(C_2H_4O)_9$-H. Examples of commercially available products of the polyoxyethylene alkyl ethers include Genapol X080 (product name, available from Clariant), NOIGEN TDS series (available from DKS Co., Ltd.) exemplified by NOIGEN TDS-80 (trade name), LEOCOL TD series (available from Lion Corp.) exemplified by LEOCOL TD-90 (trade name), LIONOL® TD series (available from Lion Corp.), T-Det A series (available from Harcros Chemicals Inc.) exemplified by T-Det A 138 (trade name), and TERGITOL® 15 S series (available from Dow).

The nonionic surfactant is preferably an ethoxylate of 2,6,8-trimethyl-4-nonanol having about 4 to about 18 ethylene oxide units on average, an ethoxylate of 2,6,8-trimethyl-4-nonanol having about 6 to about 12 ethylene oxide units on average, or a mixture thereof. This type of nonionic surfactant is also commercially available, for example, as TERGITOL TMN-6, TERGITOL TMN-10, and TERGITOL TMN-100X (all product names, available from Dow Chemical Co., Ltd.).

The hydrophobic group of the nonionic surfactant may be any of an alkylphenol group, a linear alkyl group, and a branched alkyl group. Examples of the polyoxyethylene alkylphenyl ether-based nonionic compound include, for example, a compound represented by the following formula (ii):

$$R^4\text{-}C_6H_4\text{-O-}A^2\text{-H} \qquad \text{(ii)}$$

wherein $R^4$ is a linear or branched primary or secondary alkyl group containing 4 to 12 carbon atoms, and $A^2$ is a polyoxyalkylene chain. Specific examples of the polyoxyethylene alkylphenyl ether-based nonionic compound include Triton® X-100 (product name, available from Dow Chemical Co., Ltd.).

Examples of other nonionic surfactants include bifunctional block copolymers supplied from BASF as Pluronic® R series, tridecyl alcohol alkoxylates supplied from BASF Corporation as Iconol® TDA series, and hydrocarbon-containing siloxane surfactants, preferably hydrocarbon surfactants. In the sense that the hydrocarbyl groups are fully replaced by hydrogen atoms where they can be replaced by halogen such as fluorine, these siloxane surfactants can also be regarded as hydrocarbon surfactants, i.e., the monovalent substituents on the hydrocarbyl groups are hydrogen.

In the production method, in addition to the specific hydrocarbon surfactant and other compounds with surface activity used as necessary, an additive may also be used to stabilize the compounds. Examples of the additive include a buffer, a pH adjuster, a stabilization aid, and a dispersion stabilizer.

Preferred examples of the stabilization aid include paraffin wax, fluorine oil, fluorine solvent, and silicone oil. One stabilization aid may be used alone or two or more thereof may be used in combination. The stabilization aid is more preferably paraffin wax. The paraffin wax may be liquid, semi-solid, or solid at room temperature, and is preferably a C12 or higher saturated hydrocarbon. The paraffin wax commonly has a melting point of preferably 40°C to 65°C, more preferably 50°C to 65°C.

The amount of the stabilizing aid used is preferably 0.1 to 12% by mass, more preferably 0.1 to 8% by mass, based on the mass of the aqueous medium used. It is desirable that the stabilizing aid is sufficiently hydrophobic so that the stabilizing aid is completely separated from the TFE-based polymer aqueous emulsion after emulsion polymerization of TFE, and does not serve as a contaminating component.

In the production method, the emulsion polymerization may be performed by charging a polymerization reactor with an aqueous medium, the hydrocarbon surfactant, a monomer, and optionally other additives, stirring the contents of the reactor, maintaining the reactor at a predetermined polymerization temperature, and adding a predetermined amount of a polymerization initiator to thereby initiate the polymerization reaction. After the initiation of the polymerization reaction, the components such as the monomer, the polymerization initiator, a chain transfer agent, and the surfactant may additionally be added depending on the purpose. The hydrocarbon surfactant may be added after the polymerization reaction is initiated.

In the emulsion polymerization, the polymerization temperature and the polymerization pressure are determined as appropriate in accordance with the types of the monomers used, the molecular weight of the target TFE-based polymer, and the reaction rate. Usually, the polymerization temperature is 5°C to 150°C, preferably 10°C or higher, more preferably 30°C or higher, still more preferably 50°C or higher. The polymerization temperature is more preferably 120°C or lower, still more preferably 100°C or lower.

The polymerization pressure is 0.05 to 10 MPaG. The polymerization pressure is more preferably 0.3 MPaG or higher, still more preferably 0.5 MPaG or higher. The polymerization pressure is more preferably 5.0 MPaG or lower, still more preferably 3.0 MPaG or lower.

In particular, in order to improve the yield, the polymerization pressure is preferably 1.0 MPaG or higher, more preferably 1.2 MPaG or higher, still more preferably 1.5 MPaG or higher, further preferably 1.8 MPaG or higher, particularly preferably 2.0 MPaG or higher.

In the emulsion polymerization, the hydrocarbon surfactant is preferably added when the concentration of the

TFE-based polymer formed in the aqueous medium is less than 0.60% by mass. The hydrocarbon surfactant is more preferably added when the concentration is 0.50% by mass or less, still more preferably 0.36% by mass or less, further preferably 0.30% by mass or less, even more preferably 0.20% by mass or less, particularly preferably 0.10% by mass or less. Most preferably, the hydrocarbon surfactant is added along with the initiation of polymerization. The concentration is the concentration based on the total of the aqueous medium and the TFE-based polymer.

In the emulsion polymerization, the amount of the hydrocarbon surfactant at the initiation of the polymerization is preferably 1 ppm or more based on the aqueous medium. The amount of the hydrocarbon surfactant at the initiation of the polymerization is preferably 10 ppm or more, more preferably 50 ppm or more, still more preferably 100 ppm or more, further preferably 200 ppm or more. The upper limit thereof is preferably, but not limited to, 100000 ppm, more preferably 50000 ppm, for example. When the amount of the hydrocarbon surfactant at the initiation of polymerization is in the above range, it is possible to obtain an aqueous dispersion having a smaller average primary particle size and superior stability.

The polymerization initiator may be any initiator capable of generating radicals within the above polymerization temperature range, and any known oil-soluble and/or water-soluble polymerization initiator may be used. The polymerization initiator may be combined with a reducing agent, for example, into the form of a redox agent, which initiates the polymerization. The concentration of the polymerization initiator is appropriately determined depending on the types of the monomers, the molecular weight of the target TFE-based polymer, and the reaction rate.

The polymerization initiator used may be an oil-soluble radical polymerization initiator or a water-soluble radical polymerization initiator.

The oil-soluble radical polymerization initiator may be a known oil-soluble peroxide. Examples thereof include dialkyl peroxycarbonates such as diisopropyl peroxydicarbonate and di-sec-butyl peroxydicarbonate, peroxyesters such as t-butyl peroxyisobutyrate and t-butyl peroxypivalate, and dialkyl peroxides such as di-t-butyl peroxide.

The water-soluble radical polymerization initiator may be a known water-soluble peroxide. Examples thereof include ammonium salts, potassium salts, and sodium salts of any of persulfuric acid, perboric acid, perchloric acid, perphosphoric acid, and percarbonic acid, t-butyl permaleate, and t-butyl hydroperoxide. The initiator may also contain a reducing agent such as a sulfite or a sulfurous acid salt. The amount thereof used may be 0.1 to 20 times the amount of the peroxide.

For example, in the case of the polymerization at a low temperature of 30°C or lower, a polymerization initiator used is preferably a redox initiator that is a combination of an oxidizing agent and a reducing agent. Examples of the oxidizing agent include a persulfate, an organic peroxide, potassium permanganate, manganese triacetate, ammonium cerium nitrate, and a bromate. Examples of the reducing agent include a sulfite, a bisulfite, a bromate, a diimine, and oxalic acid. Examples of the persulfate include ammonium persulfate and potassium persulfate. Examples of the sulfite include sodium sulfite and ammonium sulfite. In order to increase the decomposition rate of the initiator, the combination of the redox initiator is also preferably combined with a copper salt or an iron salt. An example of copper salts is copper(II) sulfate and an example of iron salts is iron(II) sulfate.

The oxidizing agent of the redox initiator is preferably permanganic acid or its salt, a persulfate, manganese triacetate, a cerium(IV) salt, or bromic acid or its salt. The reducing agent of the redox initiator is preferably a dicarboxylic acid or its salt, or a diimine.

More preferably, the oxidizing agent is permanganic acid or its salt, a persulfate, or bromic acid or its salt, and the reducing agent is a dicarboxylic acid or its salt.

Examples of the redox initiator include combinations of potassium permanganate/oxalic acid, potassium permanganate/ammonium oxalate, manganese triacetate/oxalic acid, manganese triacetate/ammonium oxalate, ammonium cerium nitrate/oxalic acid, and ammonium cerium nitrate/ammonium oxalate.

In the case of using a redox initiator, a polymerization vessel may be charged with an oxidizing agent or a reducing agent in advance, and the other may be continuously or intermittently added thereto to start polymerization. For example, in the case of using potassium permanganate/ammonium oxalate, preferably, a polymerization vessel is charged with ammonium oxalate and potassium permanganate is continuously added thereto.

In the redox initiator herein, "potassium permanganate/ammonium oxalate" refers to a combination of potassium permanganate and ammonium oxalate. The same applies to other compounds.

The redox initiator used is preferably an oxidizing agent or a reducing agent capable of adjusting the pH of the aqueous solution of the redox initiator to 4.0 or more. The aqueous solution of the redox initiator means a 0.50% by mass aqueous solution of an oxidizing agent or a 0.50% by mass aqueous solution of a reducing agent.

That is, at least one of the 0.50% by mass aqueous solution of the oxidizing agent and the 0.50% by mass aqueous solution of the reducing agent may have a pH of 4.0 or more, and it is preferable that both the 0.50% by mass aqueous solution of the oxidizing agent and the 0.50% by mass aqueous solution of the reducing agent have a pH of 4.0 or more.

The pH of the aqueous solution of the redox initiator (0.50% by mass aqueous solution of oxidizing agent or 0.50% by mass aqueous solution of reducing agent) is more preferably 5.0 or more, still more preferably 5.5 or more, particularly preferably 6.0 or more.

The redox initiator is particularly preferably a combination of an oxidizing agent in the form of a salt and a reducing agent in the form of a salt.

For example, the oxidizing agent in the form of a salt more preferably includes at least one selected from the group consisting of persulfates, permanganates, cerium(IV) salts, and bromates, still more preferably a permanganate, particularly preferably potassium permanganate.

The reducing agent in the form of a salt more preferably includes at least one selected from the group consisting of oxalates, malonates, succinates, glutarates, and bromates, still more preferably an oxalate, particularly preferably ammonium oxalate.

Specifically, the redox initiator preferably includes at least one selected from the group consisting of potassium permanganate/ammonium oxalate, potassium bromate/ammonium sulfite, manganese triacetate/ammonium oxalate, and ammonium cerium nitrate/ammonium oxalate, preferably at least one selected from the group consisting of potassium permanganate/ammonium oxalate, potassium bromate/ammonium sulfite, and ammonium cerium nitrate/ammonium oxalate.

Use of a redox initiator in the polymerization step can increase the molecular weight of the resulting TFE-based polymer. Therefore, the SSG can be made small and the TFE-based polymer is expandable.

Use of a redox initiator in the polymerization step can also increase the number of TFE-based polymer particles generated in the aqueous dispersion. The yield of the resulting TFE-based polymer can also be increased.

When a redox initiator is used, the oxidizing agent and the reducing agent may be added all at once at the initial stage of polymerization, or the reducing agent may be added all at once at the initial stage of polymerization and the oxidizing agent may be added continuously. Alternatively, the oxidizing agent may be added all at once at the initial stage of polymerization and the reducing agent may be added continuously, or both the oxidizing agent and the reducing agent may be added continuously.

When a redox initiator is used as the polymerization initiator, the amount of the oxidizing agent added is preferably 5 to 10000 ppm, more preferably 10 to 1000 ppm based on the aqueous medium, and the amount of the reducing agent added is preferably 5 to 10000 ppm, more preferably from 10 to 1000 ppm based on the aqueous medium.

When a redox initiator is used in the polymerization step, the polymerization temperature is preferably 100°C or lower, more preferably 95°C or lower, still more preferably 90°C or lower. The polymerization temperature is preferably 10°C or higher, more preferably 20°C or higher, still more preferably 30°C or higher.

The polymerization initiator may be added in any amount. For example, it may be added in an amount that does not significantly decrease the polymerization rate (e.g., at a concentration of several ppm relative to water) or more at one time in an early stage of polymerization or intermittently or continuously. The upper limit thereof falls within a range where the reaction temperature is allowed to increase while the heat is removed owing to the polymerization reaction heat through the device surfaces. The upper limit more preferably falls within a range where the polymerization reaction heat can be removed through the device surfaces. More specifically, the amount of the polymerization initiator added is preferably 1 ppm or more, more preferably 10 ppm or more, still more preferably 50 ppm or more based on the aqueous medium. The amount of the polymerization initiator added is preferably 100000 ppm or less, more preferably 10000 ppm or less, still more preferably 5000 ppm or less.

The aqueous medium is a reaction medium in which polymerization is allowed to occur, and means a liquid that contains water. The aqueous medium may be any one containing water, and may be one containing water as well as, for example, a fluorine-free organic solvent such as alcohol, ether, and ketone and/or a fluorine-containing organic solvent having a boiling point of 40°C or lower.

In the emulsion polymerization, a known chain transfer agent may be further added to adjust the polymerization rate and the molecular weight depending on the purpose.

Examples of the chain transfer agent include esters such as dimethyl malonate, diethyl malonate, methyl acetate, ethyl acetate, butyl acetate, and dimethyl succinate, isopentane, methane, ethane, propane, isobutane, methanol, ethanol, isopropanol, acetone, a variety of mercaptans, a variety of halogenated hydrocarbons such as carbon tetrachloride, and cyclohexane.

The chain transfer agent to be used may be a bromine compound or an iodine compound. An example of a polymerization method using a bromine compound or an iodine compound is a method of performing polymerization of a fluoromonomer in an aqueous medium substantially in the absence of oxygen and in the presence of a bromine compound or an iodine compound (iodine transfer polymerization). Representative examples of the bromine compound or the iodine compound to be used include compounds represented by the following formula:

$$R^aI_xBr_y$$

wherein x and y are each an integer of 0 to 2 and satisfy $1 \leq x + y \leq 2$; and $R^a$ is a saturated or unsaturated fluorohydrocarbon or chlorofluorohydrocarbon group containing 1 to 16 carbon atoms, or a hydrocarbon group containing 1 to 3 carbon atoms, which optionally contains an oxygen atom. Use of a bromine compound or an iodine compound allows iodine or

bromine to be introduced into the polymer to serve as a crosslinking point.

Examples of the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, CFBrClCFClBr, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1, 2-bromo-4-iodoperfluorobutene-1, and a monoiodo- and monobromo-substitution product, diiodo- and monobromo-substitution product, and (2-iodoethyl)- and (2-bromoethyl)-substitution product of benzene. These compounds may be used alone or in any combination.

Of these, 1,4-diiodoperfluorobutane, 1,6-diiodoperfluorohexane, and 2-iodoperfluoropropane are preferably used from the viewpoints of polymerization reactivity, crosslinkability, availability, and the like.

The amount of the chain transfer agent used is usually 1 to 50000 ppm, preferably 1 to 20000 ppm, based on the total amount of the fluoromonomer fed.

The chain transfer agent may be added to the reaction vessel at once before initiation of the polymerization, may be added at once after initiation of the polymerization, may be added in multiple portions during the polymerization, or may be added continuously during the polymerization.

An aqueous dispersion of a TFE-based polymer can be obtained by the above emulsion polymerization. The aqueous dispersion normally contains a TFE-based polymer, the compound (1) and/or the compound (2), and an aqueous medium. The aqueous dispersion may have any solid content concentration. For example, the solid content concentration may be 1.0 to 70% by mass. The solid content concentration is preferably 8.0% by mass or higher, more preferably 10.0% by mass or higher, while preferably 60.0% by mass or lower, more preferably 50.0% by mass or lower.

In the production method, the amount attached is preferably 3.0% by mass or less, more preferably 2.0% by mass or less, more preferably 1.0% by mass or less, still more preferably 0.8% by mass or less, further preferably 0.7% by mass or less, particularly preferably 0.6% by mass or less, based on the TFE-based polymer finally obtained.

The coagulation in the step (B) can be performed by a known method.

In the case of the TFE-based polymer aqueous dispersion, coagulation is normally performed by diluting the aqueous dispersion obtained by polymerization, such as polymer latex, to a polymer concentration of 10 to 25% by mass (preferably a polymer concentration of 10 to 20% by mass) using water, optionally adjusting the pH to a neutral or alkaline pH, and stirring the dilution in a container equipped with a stirrer more vigorously than the stirring during the reaction. In the coagulation, stirring may be performed with addition of a coagulant such as a water-soluble organic compound (e.g., methanol, acetone), an inorganic salt (e.g., potassium nitrate, ammonium carbonate), or an inorganic acid (e.g., hydrochloric acid, sulfuric acid, nitric acid). The coagulation may be continuously performed using, for example, an inline mixer.

The drying (heat treatment) in the step (C) is typically performed by means such as vacuum, high frequency, or hot air, while the wet powder is kept in a state where it does not flow so much, preferably in a stationary state. Friction between powders, especially at high temperatures, generally has an unfavorable effect on a fine powder fibrillatable resin. This is because particles made of the fibrillatable resin of this type are easily fibrillated even by a small shearing force to lose their original stable particle structure.

In order to more efficiently remove water and the fluorine-containing compound, the drying temperature in the step (C) is preferably 130°C or higher, more preferably 140°C or higher, still more preferably 150°C or higher, further preferably 160°C or higher, further preferably 180°C or higher, further preferably 200°C or higher, particularly preferably 220°C or higher, while preferably 300°C or lower, more preferably 280°C or lower, still more preferably 250°C or lower.

In the case of drying in vacuum, drying at low temperature such as 60°C or higher, 70°C or higher, 80°C or higher, or 90°C or higher is also preferred.

In order to more efficiently remove water and the fluorine-containing compound, the duration of the drying in the step (C) is preferably 2 hours or longer, more preferably 5 hours or longer, still more preferably 10 hours or longer, further preferably 15 hours or longer. The upper limit is not limited. Still, it is preferably 100 hours, more preferably 50 hours, still more preferably 30 hours, for example.

In order to more efficiently remove water and the fluorine-containing compound, the wind speed in the step (C) is preferably 0.01 m/s or higher, more preferably 0.03 m/s or higher, still more preferably 0.05 m/s or higher, further more preferably 0.1 m/s or higher. In order to reduce or prevent powder scattering, the wind speed is preferably 50 m/s or lower, more preferably 30 m/s or lower, still more preferably 10 m/s or lower.

The drying in the step (C) can be performed using an electric furnace or a steam furnace. For example, the heat treatment may be performed with an electric furnace such as a co-flow box electric furnace, a ventilated box electric furnace, a ventilated conveyor electric furnace, a band electric furnace, a radiant conveyor electric furnace, a fluidized bed electric furnace, a vacuum electric furnace, a stirring electric furnace, an convection electric furnace, or a hot air circulating electric furnace, or a steam furnace corresponding to any of the foregoing electric furnaces (a device of the type defined by

replacing the "electric furnace" in the device name of the foregoing electric furnace with "steam furnace"). In order to more efficiently remove water and the fluorine-containing compound, preferred are a co-flow box electric furnace, a ventilated box electric furnace, a ventilated conveyor electric furnace, a band electric furnace, a fluidized bed electric furnace, a hot air circulating electric furnace, and steam furnaces corresponding to the forgoing furnaces (devices of the types determined by replacing the "electric furnace" in the device names of the foregoing electric furnaces with "steam furnace").

In the drying in the step (C), in order to more efficiently remove water and the fluorine-containing compound, the wet powder is placed in a container with air permeability on the bottom and/or sides. The container with air permeability on the bottom and/or sides may be any container capable of withstanding the drying temperature. Preferably, it is made of metal such as stainless steel.

The container with air permeability on the bottom and/or sides is preferably a tray (bat) having air permeability on the bottom and/or sides, more preferably a tray (mesh tray) having the bottom and/or sides made of mesh.

The mesh is preferably either a woven net or punched metal.

The opening of the mesh is preferably 2000 μm or less (mesh No. 10 or higher (ASTM)), more preferably 595 μm or less (mesh No. 30 or higher), still more preferably 297 μm or less (mesh No. 50 or higher), further more preferably 177 μm or less (mesh No. 80 or higher), even more preferably 149 μm or less (mesh No. 100 or higher), particularly preferably 74 μm or less (mesh No. 200 or higher). The opening is preferably 25 μm or more (mesh No. 500 or lower).

When the mesh is a woven net, the woven net may be, for example, a plain-woven mesh, a twilled-woven mesh, a plain dutch-woven mesh, or a twilled dutch-woven mesh.

When the mesh is a punched metal, the porosity is preferably 10% or higher, more preferably 20% or higher, still more preferably 30% or higher. The porosity is preferably 95% or lower.

In order to more efficiently remove water and the fluorine-containing compound, the amount of the wet powder placed in the step (C) is preferably 10 $g/cm^2$ or less, more preferably 8 $g/cm^2$ or less, still more preferably 5 $g/cm^2$ or less, particularly preferably 3 $g/cm^2$ or less, while preferably 0.01 $g/cm^2$ or more, more preferably 0.05 $g/cm^2$ or more, still more preferably 0.1 $g/cm^2$ or more.

In order to more efficiently remove water and the fluorine-containing compound, the water content of the wet powder to be dried in the step (C) is preferably 10% by mass or higher, more preferably 20% by mass or higher, still more preferably 30% by mass or higher, while preferably 150% by mass or lower, more preferably 100% by mass or lower based on the wet powder.

The composition of the disclosure is for use in an electrochemical device binder. In the electrochemical device binder, the composition of the disclosure may be used alone or mixed with other materials. Still, the composition of the disclosure is preferably substantially used alone, more preferably used alone. The phrase "the composition of the disclosure is substantially used alone" means that the composition is used such that the amount of the composition in the electrochemical device binder falls within the range described below.

The disclosure also provides an electrochemical device binder essentially consisting of a composition, the composition containing a fibrillatable resin and at least one Li/Na compound selected from the group consisting of a Li/Na salt and a Li/Na replenisher, the composition containing the fibrillatable resin in an amount of 20% by mass or more, the composition containing the fibrillatable resin and the Li/Na compound in a total amount of 40% by mass or more.

The binder of the disclosure containing a particular composition can improve the initial capacity and the capacity retention of the electrochemical device. When in the form of powder, the binder of the disclosure can exhibit better flowability.

Since the binder of the disclosure can be used in a dry process, it is not necessary to use a large amount of dispersion medium such as water or an organic solvent and the electrode active material or solid electrolyte to be used together can be selected from a wide range of selections, which is advantageous in terms of the production process. The process and cost derived from use of a dispersion medium can be reduced.

Moreover, the binder of the disclosure has excellent binding force to active materials and electrolytes, which can reduce the amount of the binder used.

The composition in the binder of the disclosure may be the same composition as the composition of the disclosure described above, and preferred embodiments are also the same.

The binder of the disclosure consists essentially of the composition. This allows remarkable exertion of the effect attributable to the composition. The phrase "consists essentially of the composition" means that the amount of the composition is 95.0% by mass or more based on the binder.

The amount of the composition is preferably 98.0% by mass or more, more preferably 99.0% by mass or more, still more preferably 99.5% by mass or more, particularly preferably 99.9% by mass or more, most preferably 99.95% by mass or more based on the binder.

The binder of the disclosure also preferably consists of the composition.

Preferably, the binder of the disclosure is substantially free from organic solvents. This can reduce the process and cost derived from use of organic solvents. The phrase "substantially free from organic solvents" means that the organic solvent content of the binder is 5% by mass or less.

The organic solvent content is preferably 3% by mass or less, more preferably 1% by mass or less, still more preferably 0.1% by mass or less, further preferably 0.01% by mass or less, particularly preferably 0.001% by mass or less.

The binder of the disclosure is preferably in the form of powder, and may also be in the form other than powder, such as a dispersion or a molded article.

The binder of the disclosure is for use in electrochemical devices such as batteries and capacitors.

Examples of batteries include secondary batteries such as lithium ion batteries and sodium ion batteries.

The binder may be used in any capacitor. An electrochemical capacitor is preferred. Examples of electrochemical capacitors include electric double layer capacitors, hybrid capacitors, and redox capacitors. Examples of hybrid capacitors include sodium ion capacitors, lithium ion capacitors, and magnesium ion capacitors. Among these, electric double layer capacitors are particularly preferred.

The binder of the disclosure can be suitably used as a binder for batteries, and can be particularly suitably used as a binder for secondary batteries such as lithium ion batteries and sodium ion batteries. In particular, the binder of the disclosure is preferably used as a binder for lithium-ion secondary batteries.

The binder of the disclosure may be used for producing electrochemical device members, preferably battery members.

The binder of the disclosure can be particularly suitably used as an electrode binder.

The binder of the disclosure can be also suitably used as a binder in a solid electrolyte layer of a solid-state secondary battery.

The disclosure also provides an electrode mixture containing the composition of the disclosure or the binder of the disclosure, and an electrode active material. The electrode mixture of the disclosure can improve the initial capacity and capacity retention of the electrochemical device. In addition, since the electrode active material can be held even when the amount of binder is small, the electrode mixture can contain larger amounts of materials for improving electrochemical device characteristics, such as active materials or conductive aids.

Examples of the electrode active material include a positive electrode active material and a negative electrode active material.

The positive electrode active material may be any material that can electrochemically occlude and release alkali metal ions. Still, the positive electrode material is preferably, for example, a material containing an alkali metal and at least one transition metal. Specific examples include alkali metal-containing transition metal composite oxides and alkali metal-containing transition metal phosphate compounds. Particularly preferred among these as the positive electrode material are alkali metal-containing transition metal composite oxides which produce high voltage. Examples of the alkali metal ions include lithium ions, sodium ions, and potassium ions. In a preferred embodiment, the alkali metal ions may be lithium ions or sodium ions. In other words, in this embodiment, the alkali-metal ion secondary battery may be a lithium-ion secondary battery or a sodium-ion secondary battery.

Examples of the alkali metal-containing transition metal composite oxides include alkali metal-manganese spinel composite oxides (e.g., lithium-manganese spinel composite oxides) represented by the formula:

$$M_aMn_{2-b}M^1_bO_4$$

wherein M includes at least one metal selected from the group consisting of Li, Na, and K; $0.9 \leq a$; $0 \leq b \leq 1.5$; and $M^1$ includes at least one metal selected from the group consisting of Fe, Co, Ni, Cu, Zn, Al, Sn, Cr, V, Ti, Mg, Ca, Sr, B, Ga, In, Si, and Ge;

alkali metal-nickel composite oxides (e.g., lithium-nickel composite oxides) represented by the formula:

$$MNi_{1-c}M^2_cO_2$$

wherein M includes at least one metal selected from the group consisting of Li, Na, and K; $0 \leq c \leq 0.5$; and $M^2$ includes at least one metal selected from the group consisting of Fe, Co, Mn, Cu, Zn, Al, Sn, Cr, V, Ti, Mg, Ca, Sr, B, Ga, In, Si, and Ge; and

alkali metal-cobalt composite oxides (e.g., lithium-cobalt composite oxides) represented by the formula:

$$MCo_{1-d}M^3_dO_2$$

wherein M includes at least one metal selected from the group consisting of Li, Na, and K; $0 \leq d \leq 0.5$; and $M^3$ includes at least one metal selected from the group consisting of Fe, Ni, Mn, Cu, Zn, Al, Sn, Cr, V, Ti, Mg, Ca, Sr, B, Ga, In, Si, and Ge. In the above formulas, M is preferably a metal selected from the group consisting of Li, Na, and K, more preferably Li or Na, still more preferably Li.

In order to achieve high-energy-density, high-output secondary batteries, preferred among these are $MCoO_2$,

$MMnO_2$, $MNiO_2$, $MMn_2O_4$, $MNi_{0.8}Co_{0.15}Al_{0.05}O_2$, and $MNi_{1/3}CO_{1/3}Mn_{1/3}O_2$, and preferred is a compound represented by the following formula (3):

$$MNi_hCo_iMn_jM^5_kO_2 \quad (3)$$

wherein M includes at least one metal selected from the group consisting of Li, Na, and K; $M^5$ includes at least one selected from the group consisting of Fe, Cu, Zn, Al, Sn, Cr, V, Ti, Mg, Ca, Sr, B, Ga, In, Si, and Ge; and $(h + i + j + k) = 1.0$, $0 \leq h \leq 1.0$, $0 \leq i \leq 1.0$, $0 \leq j \leq 1.5$, and $0 \leq k \leq 0.2$.

Examples of the alkali metal-containing transition metal phosphate compound include a compound represented by the following formula (4):

$$M_eM^4_f(PO_4)_g \quad (4)$$

wherein M includes at least one metal selected from the group consisting of Li, Na, and K; $M^4$ includes at least one selected from the group consisting of V, Ti, Cr, Mn, Fe, Co, Ni, and Cu; and $0.5 \leq e \leq 3$, $1 \leq f \leq 2$, and $1 \leq g \leq 3$. In the above formula, M is preferably a metal selected from the group consisting of Li, Na, and K, more preferably Li or Na, still more preferably Li. In other words, the alkali metal-containing transition metal phosphate compound is preferably a lithium-containing transition metal phosphate compound.

The transition metal of the lithium-containing transition metal phosphate compound is preferably V, Ti, Cr, Mn, Fe, Co, Ni, Cu, or the like. Specific examples thereof include iron phosphates such as $LiFePO_4$, $Li_3Fe_2(PO_4)_3$, and $LiFeP_2O_7$, cobalt phosphates such as $LiCoPO_4$, and those obtained by replacing some of transition metal atoms as main components of these lithium transition metal phosphate compounds with another element such as Al, Ti, V, Cr, Mn, Fe, Co, Li, Ni, Cu, Zn, Mg, Ga, Zr, Nb, or Si. The lithium-containing transition metal phosphate compound preferably has an olivine structure.

Examples of a different positive electrode active material include a lithium-nickel composite oxide. The lithium-nickel composite oxide is preferably a positive electrode active material represented by the following formula (5):

$$Li_yNi_{1-x}M_xO_2 \quad (5)$$

wherein $0.01 \leq x \leq 0.7$, $0.9 \leq y \leq 2.0$, and M is a metal atom (other than Li and Ni).

Other examples of the different positive electrode active material include $MFePO_4$, $MNi_{0.8}Co_{0.2}O_2$, $M_{1.2}Fe_{0.4}Mn_{0.4}O_2$, $MNi_{0.3}Mn_{1.3}O_2$, $V_3O_6$, and $M_2MnO_3$. In particular, a positive electrode active material such as $M_2MnO_3$ or $MNi_{0.5}Mn_{1.5}O_2$ (wherein M includes at least one metal selected from the group consisting of Li, Na, and K) is preferred because the crystal structure thereof does not collapse even when the secondary battery is operated at a voltage exceeding 4.4 V or at a voltage of 4.6 V or higher. Thus, an electrochemical device such as a secondary battery including a positive electrode material containing any of the above-exemplified positive electrode active materials is preferred because the remaining capacity thereof is less likely to decrease and the percentage increase in resistance thereof is less likely to change even after storage at high temperature and the battery performance thereof may not be impaired even when the battery is operated at high voltage.

Other examples of the positive electrode active material also include solid solution materials of $M_2MnO_3$ and $MM^6O_2$ (wherein M includes at least one metal selected from the group consisting of Li, Na, and K; and $M^6$ is a transition metal such as Co, Ni, Mn, or Fe).

The solid solution material is, for example, an alkali metal manganese oxide represented by the formula $M_x[Mn_{(1-y)}M^7_y]O_z$. In the formula, M includes at least one metal selected from the group consisting of Li, Na, and K; and $M^7$ includes at least one metal element other than M or Mn, containing, for example, one or more elements selected from the group consisting of Co, Ni, Fe, Ti, Mo, W, Cr, Zr, and Sn. The values of x, y, and z in the formula are within the ranges of $1 < x < 2$, $0 \leq y < 1$, and $1.5 < z < 3$, respectively. In particular, a manganese-containing solid solution material such as $Li_{1.2}Mn_{0.5}Co_{0.14}Ni_{0.14}O_2$, which is a $Li_2MnO_3$-based solid solution of $LiNiO_2$ and $LiCoO_2$, is preferred because it can provide an alkali metal ion secondary battery with a high energy density.

In order to improve the continuous charge characteristics, the positive electrode active material preferably contains lithium phosphate. Lithium phosphate may be used in any manner, and is preferably used in admixture with the positive electrode active material. The lower limit of the amount of lithium phosphate used is preferably 0.1% by mass or more, more preferably 0.3% by mass or more, still more preferably 0.5% by mass or more, based on the sum of the amounts of the positive electrode active material and lithium phosphate. The upper limit thereof is preferably 10% by mass or less, more preferably 8% by mass or less, still more preferably 5% by mass or less.

Particles of the positive electrode active material may have any shape conventionally used, such as a bulky shape, a polyhedral shape, a spherical shape, an ellipsoidal shape, a plate shape, a needle shape, or a pillar shape. The primary particles may aggregate to form secondary particles.

The particles of the positive electrode active material have a median size d50 (or a secondary particle size when

the primary particles aggregate to form secondary particles) of preferably 0.1 μm or greater, more preferably 0.5 μm or greater, still more preferably 0.8 μm or greater, most preferably 1.0 μm or greater, while preferably 30 μm or smaller, more preferably 27 μm or smaller, still more preferably 25 μm or smaller, most preferably 22 μm or smaller. The particles having a median size below the lower limit may fail to provide a product with a high tap density. The particles having a median size greater than the upper limit may cause prolonged diffusion of lithium in the particles, possibly impairing the battery performance. Mixing two or more positive electrode active materials having different median sizes d50 can further improve the ease of packing in formation of the positive electrode.

The median size d50 is determined using a known laser diffraction/scattering particle size distribution analyzer. In the case of using LA-920 (Horiba, Ltd.) as the particle size distribution analyzer, the dispersion medium used in the measurement is a 0.1% by mass aqueous solution of sodium hexametaphosphate and the measurement refractive index is set to 1.24 after 5-minute ultrasonic dispersion.

The positive electrode active material has a BET specific surface area of preferably 0.1 $m^2/g$ or greater, more preferably 0.2 $m^2/g$ or greater, still more preferably 0.3 $m^2/g$ or greater. The upper limit thereof is preferably 50 $m^2/g$ or smaller, more preferably 40 $m^2/g$ or smaller, still more preferably 30 $m^2/g$ or smaller. The positive electrode active material having a BET specific surface area smaller than the above range may easily impair the battery performance. The positive electrode active material having a BET specific surface area larger than the above range may less easily have an increased tap density, easily causing a difficulty in processing the material in formation of the positive electrode active material layer.

The BET specific surface area is defined by a value determined by single point BET nitrogen adsorption utilizing a gas flow method using a surface area analyzer (e.g., fully automatic surface area measurement device, available from Ohkura Riken Co., Ltd.), a sample pre-dried in nitrogen stream at 150°C for 30 minutes, and a nitrogen-helium gas mixture with the nitrogen pressure relative to the atmospheric pressure being accurately adjusted to 0.3.

The particles of the positive electrode active material mainly include secondary particles. The particles of the positive electrode active material preferably include 0.5 to 30.0% by volume of fine particles having an average secondary particle size of 40 μm or smaller and having an average primary particle size of 1 μm or smaller. The presence of fine particles having an average primary particle size of 1 μm or smaller enlarges the contact area with the electrolyte and enables more rapid diffusion of lithium ions between the electrode mixture and the electrolyte, improving the output performance of the battery.

In production of the positive electrode, one of the aforementioned positive electrode active materials may be used alone or two or more thereof having different compositions may be used in any combination at any ratio. Preferred examples of the combination in this case include a combination of $LiCoO_2$ with a ternary system such as $LiNi_{0.33}Co_{0.33}Mn_{0.33}O_2$, a combination of $LiCoO_2$ with either $LiMn_2O_4$ or one obtained by replacing one or more Mn atoms in $LiMn_2O_4$ with a different transition metal, and a combination of $LiFePO_4$ with $LiMn_2O_4$.

In order to achieve a high battery capacity, the amount of the positive electrode active material is preferably 50 to 99.5% by mass, more preferably 80 to 99% by mass, of the positive electrode mixture. The amount of the positive electrode active material in the positive electrode active material layer is preferably 80% by mass or more, more preferably 82% by mass or more, particularly preferably 84% by mass or more. The upper limit thereof is preferably 99% by mass or less, more preferably 98% by mass or less. Too small an amount of the positive electrode active material in the positive electrode active material layer may lead to an insufficient electric capacity. In contrast, too large an amount thereof may lead to insufficient strength of the positive electrode.

The negative electrode active material is not limited, and may be, for example, any one selected from lithium metal; a material containing a carbonaceous material such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor-grown carbon fiber, natural graphite, or non-graphitizable carbon; a silicon-containing compound such as silicon or a silicon alloy; and $Li_4Ti_5O_{12}$, or a mixture of two or more of these. Among these, a material at least partially containing a carbonaceous material and/or a silicon-containing compound can be particularly suitably used.

A negative electrode active material used in the disclosure suitably contains silicon as a constitutional element. With a negative electrode active material containing silicon as a constitutional element, a high-capacity battery can be produced.

As a material containing silicon, silicon particles, particles having a structure where fine silicon particles are dispersed in a silicon-based compound, silicon oxide particles represented by the formula: SiOx ($0.5 \leq x \leq 1.6$), or a mixture of these is/are preferred. The use of any of these can provide a negative electrode mixture for lithium-ion secondary batteries with higher initial charge-discharge efficiency, high capacity, and excellent cycle characteristics.

The physical properties of the silicon-containing particles can be appropriately selected according to the aimed composite particles. For example, the average particle size is preferably 0.1 to 50 μm. The lower limit is more preferably 0.2 μm or greater, still more preferably 0.5 μm or greater. The upper limit is more preferably 30 μm or smaller, still more preferably 20 μm or smaller. The average particle size is expressed as a weight average particle size determined by particle size distribution measurement by a laser diffraction method.

The BET specific surface area is preferably 0.5 to 100 $m^2/g$, more preferably 1 to 20 $m^2/g$. With the BET specific surface area of 0.5 $m^2/g$ or greater, there is no risk of decreasing the adhesiveness of the negative electrode material upon processing into the electrode and impairing the battery characteristics. A BET specific surface area of 100 $m^2/g$ or less can increase the proportion of silicon dioxide on the particle surface, which eliminates the risk of battery capacity reduction upon use of the silicon particles as a negative electrode material for a lithium-ion secondary battery.

The silicon-containing particles are provided with conductivity when coated with carbon, which improves the battery characteristics. Examples of the method for imparting conductivity include a method including mixing the silicon-containing particles with conductive particles such as graphite particles, a method including coating the silicon-containing particle surface with a carbon film, and a method combining these two methods. Preferred is a method including coating with a carbon film, and more preferred is a method including chemical vapor deposition (CVD) .

The negative electrode active material particularly preferably contains Si or SiO. In a case where a Si-based active material such as Si or SiO is used for the negative electrode, Li/Na in the system may be irreversibly consumed in the reactions with these active materials, particularly during the initial charge, which may result in a decrease in the initial capacity and capacity retention of the electrochemical device. Since the composition of the disclosure or the binder of the disclosure contains a particular Li/Na compound, the electrode mixture of the disclosure can replenish the consumed Li/Na even in the case of containing Si or SiO as a negative electrode active material, which can improve the initial capacity and capacity retention of the electrochemical device.

In order to increase the capacity of the resulting electrode mixture, the amount of the negative electrode active material in the electrode mixture is preferably 40% by mass or more, more preferably 50% by mass or more, particularly preferably 60% by mass or more. The upper limit of the amount is preferably 99% by mass or less, more preferably 98% by mass or less.

The electrode mixture of the disclosure preferably further contains a conductive aid.

Any known conductive material can be used as the conductive aid. Specific examples include metal materials such as copper and nickel, and carbon materials such as graphite including natural graphite and artificial graphite, carbon black including acetylene black, Ketjen black, channel black, furnace black, lamp black, and thermal black, amorphous carbon including needle coke, carbon nanotubes, fullerene, and VGCF. One of these may be used alone or two or more thereof may be used in any combination at any ratio.

The conductive aid is used in an amount of usually 0.01% by mass or more, preferably 0.1% by mass or more, more preferably 1% by mass or more, while usually 50% by mass or less, preferably 30% by mass or less, more preferably 15% by mass or less, in the electrode mixture. The conductive aid in an amount less than the above range may cause insufficient conductivity. In contrast, the conductive aid in an amount more than the above range may cause a low battery capacity.

The electrode mixture of the disclosure may further contain a thermoplastic polymer. Examples of thermoplastic polymers include polyvinylidene fluoride, vinylidene fluoride copolymers, polypropylene, polyethylene, polystyrene, polyethylene terephthalate, and polyethylene oxide. The thermoplastic polymer may be either a resin or an elastomer. One thermoplastic polymer may be used alone or two or more thermoplastic polymers may be used in any combination at any ratio.

The proportion of the thermoplastic polymer based on the electrode active material is usually 0.01% by mass or more, preferably 0.05% by mass or more, more preferably 0.10% by mass or more, while usually 3.0% by mass or less, preferably 2.5% by mass or less, more preferably 2.0% by mass or less. Addition of a thermoplastic resin can improve the mechanical strength of the electrode. The thermoplastic polymer at a proportion higher than the above range may lower the proportion of the electrode active material in the electrode mixture, resulting in a low capacity of the battery and high resistance between the active materials.

The amount of the binder in the electrode mixture of the disclosure may be 0.1% by mass or more, preferably 0.2% by mass or more, more preferably 0.5% by mass or more based on the electrode mixture. The amount may be 50% by mass or less, preferably 40% by mass or less, more preferably 30% by mass or less, further preferably 10% by mass or less, particularly preferably 5% by mass or less, most preferably 3% by mass or less based on the electrode mixture. Too low a proportion of the binder may fail to sufficiently hold the electrode mixture active material and cause insufficient mechanical strength of the electrode mixture sheet, impairing the battery performance such as cycle characteristics. Too high a proportion of the binder may lead to a decrease in battery capacity and conductivity. Since the binder of the disclosure has excellent binding force, the electrode active material can be sufficiently held even when the binder content is small.

In the electrode mixture of the disclosure, the binder component preferably consists essentially of the composition, more preferably consists of the composition. The phrase "the binder component consists essentially of the composition" means that the amount of the composition in the binder component constituting the electrode mixture is 95.0% by mass or more based on the binder component. The amount of the composition is preferably 98.0% by mass or more, more preferably 99.0% by mass or more, still more preferably 99.5% by mass or more, particularly preferably 99.9% by mass or more, most preferably 99.95% by mass or more based on the binder component.

The electrode mixture of the disclosure is preferably in the form of a sheet.

The electrode mixture of the disclosure can suitably be used as an electrode mixture for a secondary battery. In particular, the electrode mixture of the disclosure is suitable for a lithium-ion secondary battery. The electrode mixture of the disclosure, when used for a secondary battery, is commonly used in the form of a sheet.

The electrode mixture sheet preferably has a thickness of 300 μm or smaller, more preferably 250 μm or smaller, still more preferably 200 μm or smaller, further preferably 180 μm or smaller, particularly preferably 150 μm or smaller, while preferably 10 μm or greater, more preferably 15 μm or greater, still more preferably 20 μm or greater.

An exemplary specific method of producing an electrode mixture sheet containing an electrode mixture is described below.

The electrode mixture sheet can be obtained by a production method including:

a step (0) of preparing a mixture containing an electrode active material and, if necessary, a conductive aid;
a step (1) of mixing the mixture obtained in the step (0) with a binder to prepare a composition for producing an electrode; a step (2) of applying shearing force while mixing the composition for producing an electrode;
a step (3) of molding the electrode mixture obtained in the step (2) into a bulky shape; and
a step (4) of rolling the bulky electrode mixture obtained in the step (3) into a sheet.

In the step (1), the fibrillatable resin or the Li/Na compound may be further added and mixed.

The composition for producing an electrode, to which shearing force has been applied with mixing in the step (2), is in a state where materials such as the electrode active material and the binder are simply mixed and does not have a fixed shape. Specific examples of mixing methods include mixing with use of a drum mixer, a conical screw mixer, a single screw kneader, a twin-screw kneader, a mix muller, a stirring mixer, a planetary mixer, a Henschel mixer, or a rapid mixer.

For the mixing conditions in the step (2), the number of rotations and the mixng duration are set as appropriate. For example, the number of rotations is suitably 2200 rpm or less. The number of rotations is preferably 10 rpm or more, more preferably 15 rpm or more, still more preferably 20 rpm or more. The number of rotations is preferably 2000 rpm or less, more preferably 1800 rpm or less, still more preferably 1500 rpm or less. At the number of rotations below this range, mixing may take a long time, affecting productivity. The number of rotations above the range may cause excessive fibrillation, resulting in an electrode mixture sheet having poor strength and poor flexibility.

Molding the electrode mixture into a bulky shape in the step (3) means forming the composition for producing an electrode into a single mass.

Specific examples of methods of molding into a bulky shape include extrusion molding and press molding.

The term "bulky" does not specify the shape and means any state of single mass, including a rod shape, a sheet shape, a spherical shape, a cubic shape, and the like. The size of the mass is preferably such that the diameter or minimum side of the cross section is 10000 μm or greater. The size is more preferably 20000 μm or greater.

A specific example of the rolling method in the step (4) is a method of rolling the bulky mixture using, for example, a roller press, a flat plate press, or a calender roller.

The step (4) is also preferably followed by a step (5) of applying a larger load to the resulting rolled sheet to form a thinner sheet-shaped product. Repeating the step (5) is also preferred. As described, better flexibility is achieved not by thinning the rolled sheet in one time but by rolling the sheet in steps.

The number of performing the step (5) is preferably twice or more and 10 times or less, more preferably three times or more and nine times or less.

A specific example of a rolling method is a method of rotating two or a plurality of rollers and passing the rolled sheet therebetween to provide a thinner sheet-shaped product. The rolling is desirably performed with warming. The lower limit of the temperature range is preferably 40°C or higher, more preferably 50°C or higher, still more preferably 60°C or higher. The upper limit is preferably 300°C or lower, more preferably 250°C or lower, still more preferably 200°C or lower. The warmed sheet softens, which enables easy rolling.

In order to control the fibril diameter, the step (4) or the step (5) is also preferably followed by a step (6) of coarsely crushing the rolled sheet, again forming the coarsely crushed product into a bulky product, and then rolling the bulky product into a sheet-shaped product. Repeating the step (6) is also preferred. The number of performing the step (6) is preferably once or more and 12 times or less, more preferably twice or more and 11 times or less.

Specific examples of coarsely crushing the rolled sheet and again forming the coarsely crushed product into a bulky product in the step (6) include a method of folding the rolled sheet, a method of forming the sheet into a rod- or a thin sheet-shaped product, and a method of forming the sheet into chips. The phrase "coarsely crushing" herein means changing the form of the rolled sheet obtained in the step (4) or step (5) into a different form so as to roll the product into a sheet-shaped product in the subsequent step, and encompasses simply folding the rolled sheet.

The step (6) may be followed by the step (5), or may be repeated.

In any of the steps (3), (4), (5), and (6), uniaxial stretching or biaxial stretching may be performed.

The fibril diameter can also be adjusted in accordance with the degree of coarse crushing in the step (6).

In the step (4), (5), or (6), the rolling percentage is preferably 10% or higher, more preferably 20% or higher, while preferably 80% or lower, more preferably 65% or lower, still more preferably 50% or lower. A rolling percentage below this range may cause an increase in the number of rolling operations and a longer duration, affecting the productivity. A rolling percentage above the range may cause excessive fibrillation, resulting in an electrode mixture sheet having poor strength and poor flexibility.
The rolling percentage herein refers to the reduction in thickness of a sample after rolling processing relative to that before the processing. The sample before rolling may be a bulky composition for producing an electrode or may be a sheet-shaped composition for producing an electrode. The thickness of a sample refers to the thickness in the direction along which a load is applied during rolling.
The electrode mixture sheet can be suitably produced also by a production method including:

(a) mixing a powdery component (electrode active material, etc.) and a binder to provide an electrode mixture; and
(b) calendaring or extrusion-molding the electrode mixture into a sheet,

the mixing in the step (a) including:

(a1) homogenizing the powdery component and the binder into powder; and
(a2) mixing the powdery composition for producing an electrode obtained in the step (a1) to provide the electrode mixture.

For example, PTFE has two transition temperatures at about 19°C and about 30°C. At lower than 19°C, PTFE can be easily mixed while maintaining its shape. In contrast, at higher than 19°C, the PTFE particulate structure loosens and becomes more sensitive to mechanical shearing. At temperatures higher than 30°C, more significant fibrillation occurs.
Accordingly, the homogenizing in the step (a1) is preferably performed at 19°C or lower, preferably at a temperature of 0°C to 19°C.
In other words, such a step (a1) is preferably performed such that the materials are mixed and thereby homogenized while reducing fibrillation.
The mixing in the subsequent step (a2) is preferably performed at a temperature of 30°C or higher to promote fibrillation.
The step (a2) is preferably performed at 30°C to 150°C, more preferably 35°C to 120°C, still more preferably 40°C to 100°C.
In an embodiment, the calendering or extrusion molding in the step (b) is performed at a temperature of 30°C to 150°C, preferably 35°C to 120°C, more preferably 40°C to 100°C.
The mixing in the step (a) is preferably performed with shearing force applied.
Specific examples of mixing methods include mixing with use of a drum mixer, a conical screw mixer, a single screw kneader, a twin-screw kneader, a mix muller, a stirring mixer, a planetary mixer, a Henschel mixer, or a rapid mixer.
For the mixing conditions, the number of rotations and the mixing duration are set as appropriate. For example, the number of rotations is suitably 15000 rpm or less. The number of rotations is preferably 10 rpm or more, more preferably 50 rpm or more, still more preferably 100 rpm or more, while preferably 12000 rpm or less, more preferably 10000 rpm or less, still more preferably 8000 rpm or less. At the number of rotations below this range, mixing may take a long time, affecting productivity. At the number of rotations above this range, fibrillation may occur excessively, resulting in an electrode mixture sheet having poor strength.
The step (a1) is preferably performed with a weaker shearing force than that in the step (a2).
The step (a1) is preferably performed for a shorter time than that in the step (a2).
In the step (a2), the composition for producing an electrode preferably contains no liquid solvent, but a small amount of lubricant may be used. In other words, the powdery composition for producing an electrode obtained in the step (a1) may be combined with a lubricant, whereby a paste may be prepared.
Examples of the lubricant include, but are not limited to, water, ether compounds, alcohols, ionic liquids, carbonates, aliphatic hydrocarbons (e.g., low polar solvents such as heptane and xylene), isoparaffinic hydrocarbon compounds, and petroleum distillates (e.g., gasoline (C4-C10), naphtha (C4-C11), kerosene/paraffin (C10-C16), and mixtures of any of these).
The lubricant has a water content of preferably 1000 ppm or less.
A water content of 1000 ppm or less is preferred to reduce deterioration of the electrochemical device. The water content is more preferably 500 ppm or less, still more preferably 100 ppm or less.
The amount of the lubricant, when used, is 5.0 to 35.0 parts by weight based on the total weight of the composition fed to the step (a1).
The composition for producing an electrode preferably contains substantially no liquid solvent. In a conventional method for producing an electrode mixture, typically, a solvent in which a binder is dissolved is used to prepare a slurry

containing an electrode mixture component in the form of powder dispersed therein, and the slurry is applied and dried to produce an electrode mixture sheet. In conventional methods, processing time is required for slurry preparation because a binder needs to be dissolved. Also, a lot of energy is required to sufficiently dry the solvent after the application. Not using a solvent but using a powdery binder containing less water in producing a composition for producing an electrode and an electrode mixture sheet can reduce a burden on the production process without causing deterioration of battery components such as active materials and electrolytes.

Not using a solvent but using a powdery binder containing less water in forming an electrode mixture sheet can provide a battery in which the electrolyte is less likely to be deteriorated. The above production method can provide an electrode mixture sheet containing a binder having a fine fibrous structure and can reduce a burden on the production process owing to elimination of slurry production.

The step (b) includes calendering or extrusion. The calendering and extrusion can be performed by known methods. Thereby, the material can be formed into the shape of an electrode mixture sheet.

The step (b) preferably includes (b1) forming the electrode mixture obtained in the step (a) into a bulky electrode mixture and (b2) calendering or extrusion-molding the bulky electrode mixture.

Forming into a bulky electrode mixture means forming the electrode mixture into a single mass.

Specific examples of methods of forming into a bulky shape include extrusion molding and press molding.

The term "bulky" does not specify the shape and means any state of single mass, including a rod shape, a sheet shape, a spherical shape, a cubic shape, and the like. The size of the mass is preferably such that the diameter or minimum side of the cross section is 10000 $\mu$m or greater. The size is more preferably 20000 $\mu$m or greater.

A specific example of the calendering or extrusion molding in the step (b2) is a method of rolling the electrode mixture using a roller press or a calender roller.

The step (b) is preferably performed at 30°C to 200°C. As described above, PTFE has a glass transition temperature around 30°C and is thus easily fibrillated at 30°C or higher. Accordingly, the step (b) is preferably performed at such temperatures.

The calendering or extrusion molding applies a shearing force, which fibrillates the PTFE and gives the shape.

The step (b) is also preferably followed by a step (c) of applying a larger load on the resulting rolled sheet to form a thinner sheet-shaped product. Repeating the step (c) is also preferred. As described, better flexibility is achieved not by thinning the rolled sheet in one time but by rolling the sheet in steps.

The number of performing the step (c) is preferably twice or more and 10 times or less, more preferably three times or more and nine times or less.

A specific example of a rolling method is a method of rotating two or a plurality of rollers and passing the rolled sheet therebetween to provide a thinner sheet-shaped product.

In order to control the sheet strength, the step (b) or the step (c) is also preferably followed by a step (d) of coarsely crushing the rolled sheet, again forming the coarsely crushed product into a bulky product, and then rolling the bulky product into a sheet-shaped product. Repeating the step (d) is also preferred. The number of performing the step (d) is preferably once or more and 12 times or less, more preferably twice or more and 11 times or less.

Specific examples of coarsely crushing the rolled sheet and again forming the coarsely crushed product into a bulky product in the step (d) include a method of folding the rolled sheet, a method of forming the rolled sheet into a rod- or a thin sheet-shaped product, and a method of forming the rolled sheet into chips. The phrase "coarsely crushing" herein means changing the form of the rolled sheet obtained in the step (b) or step (c) into a different form so as to roll the product into a sheet-shaped product in the subsequent step, and encompasses simply folding the rolled sheet.

The step (d) may be followed by the step (c), or may be repeated.

In any of the steps (a), (b), (c), and (d), uniaxial stretching or biaxial stretching may be performed.

The sheet strength can also be adjusted in accordance with the degree of coarse crushing in the step (d).

In the step (b), (c), or (d), the rolling percentage is preferably 10% or higher, more preferably 20% or higher, while preferably 80% or lower, more preferably 65% or lower, still more preferably 50% or lower. A rolling percentage below this range may cause an increase in the number of rolling operations and a longer duration, affecting the productivity. A rolling percentage above the range may cause excessive fibrillation, resulting in an electrode mixture sheet having poor strength and poor flexibility.

The rolling percentage herein refers to the reduction in thickness of a sample after rolling processing relative to that before the processing. The sample before rolling may be a bulky composition for producing an electrode or may be a sheet-shaped composition for producing an electrode. The thickness of a sample refers to the thickness in the direction along which a load is applied during rolling.

The steps (c) and (d) are preferably performed at 30°C or higher, more preferably 60°C or higher. The steps (c) and (d) are preferably performed at 200°C or lower.

The electrode mixture sheet may be used as an electrode mixture sheet for a secondary battery. The electrode mixture sheet may be for either a negative electrode or a positive electrode. In particular, the electrode mixture sheet is suitable for a lithium-ion secondary battery.

The disclosure also provides an electrode containing the composition of the disclosure or the binder of the disclosure described above, a positive electrode active material or a negative electrode active material, and a current collector. The electrode of the disclosure can improve the initial capacity and capacity retention of the electrochemical device.

The electrode of the disclosure may contain the aforementioned electrode mixture of the disclosure (preferably the electrode mixture sheet) and a current collector.

The electrode of the disclosure is preferably produced in a dry process.

The electrode of the disclosure may be a positive electrode or may be a negative electrode.

The positive electrode is preferably composed of a current collector and an electrode mixture sheet containing the positive electrode active material. Examples of the material of the current collector for a positive electrode include metal materials such as aluminum, titanium, tantalum, stainless steel, and nickel, and alloys thereof; and carbon materials such as carbon cloth and carbon paper. Preferred is any metal material, especially aluminum or an alloy thereof.

The density of the positive electrode mixture sheet is preferably 2.80 $g/cm^3$ or higher, more preferably 3.00 $g/cm^3$ or higher, still more preferably 3.20 $g/cm^3$ or higher, while preferably 3.80 $g/cm^3$ or lower, more preferably 3.75 $g/cm^3$ or lower, still more preferably 3.70 $g/cm^3$ or lower. The positive electrode mixture sheet having a density higher than the above range may easily have cracks inside the sheet. The positive electrode mixture sheet having a density lower than the above range may cause poor conductivity between the active materials and increase the battery resistance, failing to provide high output.

The positive electrode may have any thickness. In order to achieve a high capacity and high output, the lower limit of the thickness of the mixture layer on one side of the current collector excluding the thickness of the metal foil of the current collector is preferably 10 μm or greater, more preferably 20 μm or greater, while preferably 500 μm or smaller, more preferably 450 μm or smaller.

The negative electrode is suitably composed of a current collector and an electrode mixture sheet containing the negative electrode active material. Examples of the material of the current collector for a negative electrode include metal materials such as copper, nickel, titanium, tantalum, and stainless steel, and alloys thereof; and carbon materials such as carbon cloth and carbon paper. Preferred is any metal material, especially copper, nickel, or an alloy thereof.

The density of the negative electrode mixture sheet is preferably 1.3 $g/cm^3$ or higher, more preferably 1.4 $g/cm^3$ or higher, still more preferably 1.5 $g/cm^3$ or higher, while preferably 2.0 $g/cm^3$ or lower, more preferably 1.9 $g/cm^3$ or lower, still more preferably 1.8 $g/cm^3$ or lower. The negative electrode mixture sheet having a density higher than the above range may easily have cracks inside the sheet. The negative electrode mixture sheet having a density lower than the above range may cause poor conductivity between the active materials and increase the battery resistance, failing to provide high output.

The negative electrode may have any thickness. In order to achieve a high capacity and high output, the lower limit of the thickness of the mixture layer on one side of the current collector excluding the thickness of the metal foil of the current collector is preferably 10 μm or greater, more preferably 20 μm or greater, while preferably 500 μm or smaller, more preferably 450 μm or smaller.

The current collectors in the positive electrode and the negative electrode may be in the form of metal foil, expanded metal, punched metal, metal form, or the like. Preferred among these is metal foil. The metal foil may be in the form of mesh, as appropriate. The metal foil may have any thickness, and the thickness is usually 1 μm or greater, preferably 3 μm or greater, more preferably 5 μm or greater, while usually 1 mm or smaller, preferably 100 μm or smaller, more preferably 50 μm or smaller. The metal foil having a thickness smaller than this range may have insufficient strength as a current collector. Conversely, the metal foil having a thickness greater than the above range may have poor handleability.

In order to improve the adhesion between the current collector and the positive electrode active material layer and to reduce the electric contact resistance between the current collector and the positive electrode active material layer, the surface of the current collector is also preferably roughened.

The surface roughness of the current collector, expressed as Sa (arithmetic mean height), is preferably about 260 nm or higher, more preferably about 280 nm or higher, still more preferably about 300 nm or higher.

In order to reduce the electric contact resistance between the current collector and the positive electrode active material layer, the current collector also preferably has a conductive aid applied on the surface thereof. Examples of the conductive aid include carbon and noble metals such as gold, platinum, and silver. Carbon is particularly preferred because of its light weight.

The positive electrode and the negative electrode may be produced by a usual method. In an exemplary method, the electrode mixture sheet and the current collector are laminated via an adhesive, followed by pressing.

The disclosure also provides a secondary battery including the aforementioned electrode of the disclosure. The secondary battery of the disclosure is excellent in the initial capacity and capacity retention.

The secondary battery of the disclosure preferably contains Si or SiO as a negative electrode active material. The secondary battery of the disclosure can improve the initial capacity and capacity retention of the electrochemical device

even when containing Si or SiO as a negative electrode active material.

The secondary battery of the disclosure may be a secondary battery obtainable by use of an electrolyte solution or may be a solid-state secondary battery.

The solid-state secondary battery herein is a secondary battery containing a solid electrolyte. It may be a semi-solid-state secondary battery containing, as an electrolyte, a solid electrolyte and a liquid component, or an all-solid-state secondary battery containing a solid electrolyte alone as an electrolyte.

The secondary battery obtainable by use of an electrolyte solution may be obtained by use of components used for a known secondary battery, such as an electrolyte solution and a separator. These will be explained in detail below.

A non-aqueous electrolyte solution is preferably used as the electrolyte solution. The non-aqueous electrolyte solution used may be a solution obtained by dissolving a known electrolyte salt in a known organic solvent for dissolving an electrolyte salt.

Any organic solvents for dissolving electrolyte salts may be used. One or more of known hydrocarbon solvents such as propylene carbonate, ethylene carbonate, butylene carbonate, γ-butyrolactone, 1,2-dimethoxyethane, 1,2-diethoxyethane, dimethyl carbonate, diethyl carbonate, and ethyl methyl carbonate; and fluorine solvents such as fluoroethylene carbonate, fluoroether, and fluorinated carbonate can be used.

Examples of electrolyte salts include $LiClO_4$, $LiAsF_6$, $LiBF_4$, $LiPF_6$, $LiN(SO_2CF_3)_2$, and $LiN(SO_2C_2F_3)_2$. In order to achieve favorable cycle characteristics, particularly preferred is $LiPF_6$, $LiBF_4$, $LiN(SO_2CF_3)_2$, $LiN(SO_2C_2F_5)_2$, and a combination of any of these.

The concentration of the electrolyte salt is preferably 0.8 mol/L or higher, more preferably 1.0 mol/L or higher. The upper limit is usually 4.0 mol/L or lower, though it depends on the organic solvent for dissolving an electrolyte salt used.

The secondary battery obtainable by use of an electrolyte solution preferably further includes a separator. The separator may be formed from any known material and may have any known shape as long as the resulting separator is stable to the electrolyte solution and is excellent in a liquid-retaining ability. The separator is preferably in the form of a porous sheet or a nonwoven fabric formed from a material stable to the electrolyte solution, such as resin, glass fiber, or inorganic matter, and having an excellent liquid-retaining ability.

The solid-state secondary battery is preferably an all-solid-state secondary battery. The solid-state secondary battery is preferably a lithium-ion battery or is preferably a sulfide-based solid-state secondary battery.

The solid-state secondary battery preferably includes a positive electrode, a negative electrode, and a solid electrolyte layer between the positive electrode and the negative electrode.

In the solid-state secondary battery, the binder of the disclosure may be used for an electrode layer or a solid electrolyte layer.

According to a preferred embodiment of the disclosure, the disclosure relates to a solid-state secondary battery mixture (preferably a mixture sheet) containing the binder of the disclosure and a solid electrolyte and a solid electrolyte layer (preferably a solid electrolyte layer sheet) containing the binder of the disclosure and a solid electrolyte.

The solid electrolyte used in a solid-state secondary battery mixture may be a sulfide-based solid electrolyte or an oxide-based solid electrolyte. In particular, when a sulfide-based solid electrolyte is used, the electrochemical device mixture is advantageously flexible.

The sulfide-based solid electrolyte is not limited. The sulfide-based solid electrolyte used may be any one selected from $Li_2S-P_2S_5$, $Li_2S-P_2S_3$, $Li_2S-P_2S_3-P_2S_5$, $Li_2S-SiS_2$, $LiI-Li_2S-SiS_2$, $LiI-Li_2S-P_2S_5$, $LiI-Li_2S-P_2Os$, $LiI-Li_3PO_4-P_2S_5$, $LiI-Li_2S-SiS_2-P_2S_5$, $Li_2S-SiS_2-Li_4SiO_4$, $Li_2S-SiS_2-Li_3PO_4$ $Li_3PS_4-Li_4GeS_4$, $Li_{3.4}P_{0.6}Si_{0.4}S_4$, $Li_{3.25}P_{0.25}Ge_{0.76}S_4$, $Li_{4-x}Ge_{1-x}P_xS_4$ (X = 0.6 to 0.8), $Li_{4+y}Ge_{1-y}Ga_yS_4$ (y = 0.2 to 0.3), LiPSCl, LiCl, $Li_{7-x-2y}PS_{6-x-y}Cl_x$ ($0.8 \leq x \leq 1.7$, $0 < y \leq -0.25x + 0.5$), and $Li_{10}SnP_2S_{12}$, or a mixture of two or more thereof.

The sulfide-based solid electrolyte preferably contains lithium. Sulfide-based solid electrolytes containing lithium are used in solid-state batteries in which lithium ions are used as carriers, and are particularly preferred in that they provide electrochemical devices having high energy density.

The oxide-based solid electrolyte is preferably a compound that contains an oxygen atom (O), has conductivity of metal ions belonging to Group 1 or Group 2 of the periodic table, and has electronic insulating properties.

Specific examples of the compound include $Li_{xa}La_{ya}TiO_3$ (xa = 0.3 to 0.7, ya = 0.3 to 0.7) (LLT), $Li_{xb}La_{yb}Zr_{zb}M^{bb}{}_{mb}O_{nb}$ (wherein $M^{bb}$ includes at least one element selected from Al, Mg, Ca, Sr, V, Nb, Ta, Ti, Ge, In, and Sn; xb satisfies $5 \leq xb \leq 10$; yb satisfies $1 \leq yb \leq 4$; zb satisfies $1 \leq zb \leq 4$; mb satisfies $0 \leq mb \leq 2$; and nb satisfies $5 \leq nb \leq 20$), $Li_{xc}B_{yc}M^{cc}{}_{zc}O_{nc}$ (wherein $M^{cc}$ includes at least one element selected from C, S, Al, Si, Ga, Ge, In, and Sn; xc satisfies $0 \leq xc \leq 5$; yc satisfies $0 \leq yc \leq 1$; zc satisfies $0 \leq zc \leq 1$; and nc satisfies $0 \leq nc \leq 6$), $Li_{xd}(Al,Ga)_{yd}(Ti,Ge)_{zd}Si_{ad}P_{md}O_{nd}$ ($1 \leq xd \leq 3$, $0 \leq yd \leq 2$, $0 \leq zd \leq 2$, $0 \leq ad \leq 2$, $1 \leq md \leq 7$, and $3 \leq nd \leq 15$), $Li_{(3-2xe)}M^{ee}{}_{xe}D^{ee}O$ (wherein xe is a number of 0 or greater and 0.1 or smaller, $M^{ee}$ is a divalent metal atom, $D^{ee}$ is a halogen atom or a combination of two or more halogen atoms), $Li_{xf}Si_{yf}O_{zf}$ ($1 \leq xf \leq 5$, $0 < yf \leq 3$, and $1 \leq zf \leq 10$), $Li_{xg}S_{yg}O_{zg}$ ($1 \leq xg \leq 3$, $0 < yg \leq 2$, and $1 \leq zg \leq 10$), $Li_3BO_3-Li_2SO_4$, $Li_2O-B_2O_3-P_2O_5$, $Li_2O-SiO_2$, $Li_6BaLa_2Ta_2O_{12}$, $Li_3PO_{(4-3/2w)}N_w$ (w < 1), $Li_{3.5}Zn_{0.25}GeO_4$ having a lithium super ionic conductor (LISICON) crystal structure, $La_{0.51}Li_{0.34}TiO_{2.94}$ having a perovskite crystal structure, $La_{0.55}Li_{0.35}TiO_3$, $LiTi_2P_3O_{12}$ having a natrium super ionic conductor (NASICON) crystal structure, $Li_{1+xh+yh}(Al, Ga)_{xh}(Ti, Ge)_{2-xh}Si_{yh}P_{3-yh}O_{12}$ ($0 \leq xh \leq 1$ and $0 \leq yh \leq 1$), and

$Li_7La_3Zr_2O_{12}$ (LLZ) having a garnet crystal structure. Ceramic materials in which element substitution is performed for LLZ are also known. Examples thereof include $Li_{6.24}La_3Zr_2Al_{0.24}O_{11.98}$ and $Li_{6.25}Al_{0.25}La_3Zr_2O_{12}$ in which partial element substitution using Al is performed for LLZ, $Li_{6.6}La_3Zr_{1.6}Ta_{0.4}O_{12}$ in which partial element substitution using Ta is performed for LLZ, and $Li_{6.75}La_3Zr_{1.75}Nb_{0.25}O_{12}$ in which partial element substitution using Nb is performed for LLZ. Other examples include LLZ-based ceramic materials in which element substitution using at least one of magnesium (Mg) and A (A includes at least one element selected from the group consisting of calcium (Ca), strontium (Sr), and barium (Ba)) is performed for LLZ. Phosphorus compounds containing Li, P and O are also desirable. Examples include lithium phosphate ($Li_3PO_4$), LiPON in which one or more oxygen atoms in lithium phosphate are replaced with nitrogen, and $LiPOD^1$ (wherein $D^1$ includes at least one selected from Ti, V, Cr, Mn, Fe, Co, Ni, Cu, Zr, Nb, Mo, Ru, Ag, Ta, W, Pt, Au, and the like). $LiA^1ON$ (wherein $A^1$ includes at least one selected from Si, B, Ge, Al, C, Ga, and the like) can also be preferably used. Specific examples include $Li_2O$-$Al_2O_3$-$SiO_2$-$P_2O_5$-$TiO_2$-$GeO_2$ and $Li_2O$-$Al_2O_3$-$SiO_2$-$P_2O_5$-$TiO_2$.

The oxide-based solid electrolyte preferably contains lithium. Oxide-based solid electrolytes containing lithium are used in solid-state batteries in which lithium ions are used as carriers, and are particularly preferred in that they provide electrochemical devices having high energy density.

The oxide-based solid electrolyte is preferably an oxide having a crystal structure. Oxides having a crystal structure are particularly preferred in terms of good Li ion conductivity. The oxide having a crystal structure may be of perovskite type (e.g., $La_{0.31}Li_{0.34}TiO_{2.94}$), NASICON type (e.g., $Li_{1.3}Al_{0.3}Ti_{1.7}(PO_4)_3$), or garnet type (e.g., $Li_7La_3Zr_2O_{12}$ (LLZ)). Preferred among these is the garnet type.

The solid-state secondary battery may include a separator between the positive electrode and the negative electrode. Examples of the separator include porous films such as polyethylene and polypropylene films; nonwoven fabrics made of resin such as polypropylene, and nonwoven fabrics such as glass fiber nonwoven fabrics.

The solid-state secondary battery may further include a battery case. The battery case may have any shape that can accommodate the above-mentioned components such as the positive electrode, the negative electrode, and the solid electrolyte layer. Specifically, the battery may be of cylindrical type, square type, coin type, or laminate type.

The solid-state secondary battery can be produced by, for example, laminating a positive electrode, a solid electrolyte layer sheet, and a negative electrode in this order and pressing them.

It should be appreciated that a variety of modifications and changes in the structure and other details may be made to the aforementioned embodiments without departing from the spirit and scope of the claims.

## EXAMPLES

The disclosure is described in more detail below with reference to examples, but is not limited to these examples.

The physical properties were determined by the following methods.

### <Average primary particle size>

The average primary particle size was determined by dynamic light scattering. A fluoropolymer aqueous dispersion with a fluoropolymer solid content concentration adjusted to about 1.0% by mass was prepared. The average primary particle size was determined from total 70 measured values using ELSZ-1000S (available from Otsuka Electronics Co., Ltd.) at 25°C. The refractive index of the solvent (water) was 1.3328 and the viscosity of the solvent (water) was 0.8878 mPa·s.

### <Polymer solid concentration>

A polymer aqueous dispersion in an amount of 1 g was dried in an air dryer at 150°C for 60 minutes, and the ratio of the mass of the heating residue to the mass (1 g) of the aqueous dispersion, expressed as a percentage, was used as the polymer solid concentration.

### <Endothermic peak temperature>

The endothermic peak temperature was the temperature corresponding to the minimum point on a heat-of-fusion curve obtained by performing differential scanning calorimetry (DSC) at a temperature-increasing rate of 10°C/min on the composition that had never been heated to a temperature of 300°C or higher. When two or more minimum points were present in one melting peak, the temperatures corresponding to the respective peaks were considered as endothermic peak temperatures.

<Standard specific gravity (SSG)>

The SSG was determined by the immersion method in conformity with ASTM D792 using a sample molded in conformity with ASTM D4895-89.

<Liquid content>

The mass of the composition was weighed before and after heating in vacuum at 100°C for five hours, and the liquid content was calculated by the following equation. The sample was taken three times, and this calculation was performed for each sample, and the values were then averaged. This average was taken as the water liquid content.

Liquid content (% by mass) = [(Mass (g) of composition before heating) - (Mass (g) of composition after heating) ]/(Mass (g) of composition before heating) × 100

<Water content>

The mass of the composition in an amount of about 20 g was weighed before and after heating at 150°C for two hours, and the water content was calculated by the following equation The sample was taken three times, and this calculation was performed for each sample, and the values were then averaged. This average was taken as the water content.

Water content (% by mass) = [(Mass (g) of composition before heating) - (Mass (g) of composition after heating)]/(Mass (g) of composition before heating) × 100

<0.1% Mass reduction temperature>

About 10 mg of the composition that had never been heated to 300°C or higher was precisely weighed out, and placed in a special aluminum pan, followed by simultaneous thermogravimetry/differential thermal analysis (TG-DTA). The 0.1% mass reduction temperature was defined as a temperature corresponding to a point at which the weight was reduced by 0.1 mass% when the temperature of the aluminum pan was increased in a temperature range from 25°C to 600°C at a rate of 10°C/min in the air atmosphere.

<1.0% Mass reduction temperature>

About 10 mg of the composition that had never been heated to 300°C or higher was precisely weighed out, and placed in a special aluminum pan, followed by simultaneous thermogravimetry/differential thermal analysis (TG-DTA). The 1.0% mass reduction temperature was defined as a temperature corresponding to a point at which the weight was reduced by 1.0 mass% when the temperature of the aluminum pan was increased in a temperature range from 25°C to 600°C at a rate of 10°C/min in the air atmosphere.

<Thermal instability index (TII)>

The thermal instability index was measured in conformity with ASTM D4895-89.

<Amount of specific compound containing fluorine>

The amount was measured by liquid chromatography mass spectrometry under the following conditions.

<Method of measuring the amount of compound represented by formula (1)>

Extraction from composition

To a 1-g portion of the composition was added 10 g (12.6 mL) of methanol, followed by ultrasonication for 60 minutes, whereby a supernatant solution containing the compound represented by the formula (1) was extracted. The resulting extract was appropriately concentrated by nitrogen purge, whereby a concentrated extract was obtained.

Measurement of the amount of compound represented by formula (1) contained in extract

The amount of the compound represented by the formula (1) contained in the extract was obtained by conversion to perfluorooctanoic acid.

Calibration curve for perfluorooctanoic acid

Methanol standard solutions having five different known levels from 1 ng/mL to 100 ng/mL of perfluorooctanoic acid were prepared, and analyzed using a liquid chromatograph-mass spectrometer (Waters, LC-MS ACQUITY UPLC/TQD). By first order approximation based on the sample concentrations and the peak integral values, the values of a and b were obtained by the following relational equation (1).

$$A = a \times X + b \quad (1)$$

A: The peak area of perfluorooctanoic acid
X: The concentration (ng/mL) of perfluorooctanoic acid

Instrument configuration and LC-MS measurement conditions

[Table 1]

| LC system | | |
|---|---|---|
| Device | Acquity UPLC from Waters | |
| Column | Acquity UPLC BEH C18 1.7 μm (2.1 × 50 mm) from Waters | |
| Mobile phase | A $CH_3CN$ | |
| | B 20 mM $CH_3COONH_4/H_2O$ | |
| | 0 → 1.5 min | A:B = 10:90 |
| | 1.5 → 8.5 min | A:B = 10:90 → A:B = 90:10 Linear gradient |
| | 8.5 → 10 min | A:B = 90:10 |
| Flow rate | 0.4 mL/min | |
| Column temperature | 40°C | |
| Sample injection amount | 5 μL | |
| **MS system** | | |
| Device | TQ Detecter | |
| Measurement mode | Multiple Reaction Monitoring (MRM) | |
| Ionization method | Electrospray ionization<br>Negative mode | |

MRM measurement parameter

[Table 2]

| Compound | Precursor | Product |
|---|---|---|
| Perfluorooctanoic acid | 413 | 369 |

Amount of compound represented by formula (1) containing 4 to 20 carbon atoms in extract

The amount of the compound represented by the formula (1) containing 4 to 20 carbon atoms was determined using a liquid chromatograph-mass spectrometer. For the extracted liquid phase, the peak areas of the compounds represented by the formula (1) with respective numbers of carbon atoms were determined by the MRM method.

MRM measurement parameter

[Table 3]

| Compound name | Number of carbon atoms | Precursor | Product |
|---|---|---|---|
| $(H-(CF_2)_3-COO)M$ | 4 | 195 | 131 |
| $(H-(CF_2)_4-COO)M$ | 5 | 245 | 181 |
| $(H-(CF_2)_5-COO)M$ | 6 | 295 | 231 |
| $(H-(CF_2)_6-COO)M$ | 7 | 345 | 281 |
| $(H-(CF_2)_y-COO)M$ | 8 | 395 | 331 |
| $(H-(CF_2)_8-COO)M$ | 9 | 445 | 381 |
| $(H-(CF_2)_9-COO)M$ | 10 | 495 | 431 |
| $(H-(CF_2)_{10}-COO)M$ | 11 | 545 | 481 |
| $(H-(CF_2)_{11}-COO)M$ | 12 | 595 | 531 |
| $(H-(CF_2)_{12}-COO)M$ | 13 | 645 | 581 |
| $(H-(CF_2)_{13}-COO)M$ | 14 | 695 | 631 |
| $(H-(CF_2)_{14}-COO)M$ | 15 | 745 | 681 |
| $(H-(CF_2)_{15}-COO)M$ | 16 | 795 | 731 |
| $(H-(CF_2)_{16}-COO)M$ | 17 | 845 | 781 |
| $(H-(CF_2)_{17}-COO)M$ | 18 | 895 | 831 |
| $(H-(CF_2)_{18}-COO)M$ | 19 | 945 | 881 |
| $(H-(CF_2)_{19}-COO)M$ | 20 | 995 | 931 |

The amount of the compound represented by the formula (1) containing (m + 1) carbon atoms in the extract was calculated using the following equation (3). The values of a and b in the equation (3) were determined using the relational equation (1).

$$XCm = ((ACm - b)/a) \times ((50 \times m + 45)/413) \quad (3)$$

XCm: The amount (ng/mL) of the compound represented by the formula (1) containing (m + 1) carbon atoms in the extract
ACm: The peak area of the compound represented by formula (1) containing (m + 1) carbon atoms in the extract

The quantitation limit in this measurement is 1 ng/mL.

Amount of compound represented by formula (1) containing (m + 1) carbon atoms in composition

The amount of the compound represented by the formula (1) containing (m + 1) carbon atoms in the composition was determined using the following equation (4).

$$YCm = XCm \times 12.6 \quad (4)$$

YCm: The amount of the compound represented by the formula (1) containing (m + 1) carbon atoms in the composition
The quantitation limit is 10 ppb by mass.

(Method of measuring the amount of compound represented by formula (2))

Extraction from composition

To a 1-g portion of the composition was added 10 g (12.6 mL) of methanol, followed by ultrasonication for 60 minutes, whereby a supernatant solution containing the compound represented by the formula (2) was extracted. The resulting extract was appropriately concentrated by nitrogen purge, whereby a concentrated extract was obtained.

Measurement of the amount of compound represented by formula (2) in extract

The amount of the compound represented by the formula (2) contained in the extract was obtained by conversion to perfluorooctanesulfonic acid.

Calibration curve for perfluorooctanesulfonic acid

Methanol standard solutions having five different known levels from 1 ng/mL to 100 ng/mL of perfluorooctanesulfonic acid were prepared, and analyzed using a liquid chromatograph mass spectrometer (Waters, LC-MS ACQUITY UPLC/TQD). By first order approximation based on the sample concentrations and the peak integral values, the values of a and b were obtained by the following relational equation (1).

$$A = a \times X + b \quad (1)$$

A: The peak area of perfluorooctanesulfonic acid
X: The concentration (ng/mL) of perfluorooctanesulfonic acid

Instrument configuration and LC-MS measurement conditions

[Table 4]

| | | | |
|---|---|---|---|
| LC system | | | |
| | Device | Acquity UPLC from Waters | |
| | Column | Acquity UPLC BEH C18 1.7 μm (2.1 × 50 mm) from Waters | |
| | Mobile phase | A $CH_3CN$ | |
| | | B 20 mM $CH_3COONH_4/H_2O$ | |
| | | 0 → 1.5 min | A:B = 10:90 |
| | | 1.5 → 8.5 min | A:B = 10:90 → A:B = 90:10 Linear gradient |
| | | 8.5 → 10 min | A:B = 90:10 |
| | Flow rate | 0.4 mL/min | |
| | Column temperature | 40°C | |
| | Sample injection amount | 5 μL | |
| MS system | | | |
| | Device | TQ Detecter | |
| | Measurement mode | Multiple Reaction Monitoring (MRM) | |
| | Ionization method | Electrospray ionization<br>Negative mode | |

MRM measurement parameter

[Table 5]

| Compound | Precursor | Product |
|---|---|---|
| Perfluorooctanesulfonic acid | 499 | 99 |

Amount of compound represented by formula (2) containing 4 to 20 carbon atoms in extract

The amount of the compound represented by the formula (2) containing 4 to 20 carbon atoms was measured using a liquid chromatograph-mass spectrometer. For the extracted liquid phase, the peak areas of the compounds represented by the formula (2) with respective numbers of carbon atoms were determined by the MRM method.

MRM measurement parameter

[Table 6]

| Compound | Number of carbon atoms | Precursor | Product |
|---|---|---|---|
| $(H-(CF_2)_4-SO_3)M$ | 4 | 281 | 99 |
| $(H-(CF_2)_5-SO_3)M$ | 5 | 331 | 99 |
| $(H-(CF_2)_6-SO_3)M$ | 6 | 381 | 99 |
| $(H-(CF_2)_7-SO_3)M$ | 7 | 431 | 99 |
| $(H-(CF_2)_8-SO_3)M$ | 8 | 481 | 99 |
| $(H-(CF_2)_9-SO_3)M$ | 9 | 531 | 99 |
| $(H-(CF_2)_{10}-SO_3)M$ | 10 | 581 | 99 |
| $(H-(CF_2)_{11}-SO_3)M$ | 11 | 631 | 99 |
| $(H-(CF_2)_{12}-SO_3)M$ | 12 | 681 | 99 |
| $(H-(CF_2)_{13}-SO_3)M$ | 13 | 731 | 99 |
| $(H-(CF_2)_{14}-SO_3)M$ | 14 | 781 | 99 |
| $(H-(CF_2)_{15}-SO_3)M$ | 15 | 831 | 99 |
| $(H-(CF_2)_{16}-SO_3)M$ | 16 | 881 | 99 |
| $(H-(CF_2)_{17}-SO_3)M$ | 17 | 931 | 99 |
| $(H-(CF_2)_{18}-SO_3)M$ | 18 | 981 | 99 |
| $(H-(CF_2)_{19}-SO_3)M$ | 19 | 1031 | 99 |
| $(H-(CF_2)_{20}-SO_3)M$ | 20 | 1081 | 99 |

The amount of the compound represented by the formula (2) containing n carbon atoms in the extract was calculated using the following equation (3). The values of a and b in the equation (3) were determined using the relational equation (1).

$$XSn = ((ASn - b)/a) \times ((50 \times n + 81)/499) \quad (3)$$

XSn: The amount (ng/mL) of the compound represented by the formula (2) containing n carbon atoms in the extract
ASn: The peak area of the compound represented by the formula (2) containing n carbon atoms in the extract

The quantitation limit in this measurement is 1 ng/mL.

Amount of compound represented by formula (2) containing n carbon atoms in composition

The amount of the compound represented by the formula (2) containing n carbon atoms in the composition was determined using the following equation (4).

$$YSn = XSn \times 12.6 \quad (4)$$

YSn: The amount of the compound represented by the formula (2) containing n carbon atoms in the composition (ppb

relative to TFE-based polymer)

The quantitation limit is 10 ppb by mass.

Preparation Example 1

To 16 g of deionized water was added 0.273 g of lauric acid, to which 2.77 g of a 2.8% ammonia solution was gradually added with stirring, whereby an aqueous solution C was obtained.

To 100 g of deionized water was added 10 g of lauric acid, to which 25 g of a 10% ammonia solution was gradually added with stirring, whereby an aqueous solution D was obtained. The pH at this time was 9.6.

Production Example 1

A 3-L SUS reactor equipped with a stirrer was charged with 1748 g of deionized water, 90 g of paraffin wax, the aqueous solution C obtained in Preparation Example 1, and 0.5 g of ammonium oxalate. The pH of the aqueous dispersion at this time was 9.0. The reactor was hermetically sealed, and the inside of the reactor was replaced with nitrogen so that oxygen was removed. The temperature of the reactor was increased to 70°C, and 2.0 g of HFP was added to the reactor. Further, the pressure inside the reactor was increased with TFE to 2.70 MPa. When continuous feeding of an aqueous solution of potassium permanganate at a concentration of 0.5% by mass, as a polymerization initiator, to the reactor was started, the pressure dropped and the reaction started. TFE was fed so that the reaction pressure was constant at 2.70 MPa. Stirring was stopped when 80 g of TFE had been added, and depressurization was performed until the reaction pressure reached the atmospheric pressure.

Immediately thereafter, the reactor was filled with TFE to set the reaction pressure to 2.70 MPa, and stirring was restarted, whereby the reaction was continued. At the same time, continuous feeding of the aqueous solution D obtained in Preparation Example 1 to the reactor was started. Stirring was stopped when 680 g of TFE had been added, and depressurization was performed until the pressure inside the reactor reached the atmospheric pressure. By the end of the reaction, 56.0 g of the aqueous solution of potassium permanganate and 26.2 g of the aqueous solution D were fed. The resulting aqueous dispersion was taken out of the reactor and cooled, and the paraffin wax was separated, whereby a TFE-based polymer aqueous dispersion was obtained. The resulting TFE-based polymer aqueous dispersion had a pH of 8.8, a solid content concentration of 27.1% by mass, and a primary particle size of 220 nm.

The resulting TFE-based polymer aqueous dispersion was diluted with deionized water to a solid content concentration of 13% by mass. The dilution was stirred vigorously in a container equipped with a stirrer to be coagulated, and water was filtered out, whereby a wet powder was obtained.

The resulting wet powder was placed in a stainless-steel mesh tray and dried at 210°C for 18 hours, whereby a TFE-based polymer powder 1 was obtained.

The resulting TFE-based polymer powder 1 had a water content of 0.002% by mass, a standard specific gravity of 2.170, a thermal instability index of 44, a HFP content of 0.002% by mass, a 0.1% mass reduction temperature of 391°C, a 1.0% mass reduction temperature of 491°C, and an endothermic peak temperature of 342°C.

The amount of the compound represented by the formula (1) containing m (4 to 20) carbon atoms in the resulting TFE-based polymer powder 1 was 67 ppb by mass and the amount of the compound represented by the formula (2) containing n (4 to 20) carbon atoms in the resulting TFE-based polymer powder 1 was less than 10 ppb by mass.

Manufacturing Example 1

The TFE-based polymer powder 1 obtained in Production Example 1 and a Li compound were placed in a V-type mixer (VK-1, available from Irie Shokai Co., Ltd.) and mixed at 30 rpm for 10 minutes. The Li compound used was lithium bis(trifluoromethane sulfonyl)imide (hereafter, abbreviated as LiTFSI). The mixture obtained by the mixing was named a composition A (mass ratio: TFE-based polymer powder/Li compound = 95/5). The composition A had a liquid content of less than 1% by mass.

Manufacturing Example 2

A composition B was obtained as in Manufacturing Example 1, except that the mixing ratio of the TFE-based polymer powder 1 and LiTFSI was changed to 70:30. The composition B had a liquid content of less than 1% by mass.

Manufacturing Example 3

A composition C was obtained as in Manufacturing Example 1, except that the mixing ratio of the TFE-based polymer powder 1 and LiTFSI was changed to 50:50. The composition C had a liquid content of less than 1% by mass.

Preparation Example 2

A mixture of 10-undecen-1-ol (16 g), 1,4-benzoquinone (10.2 g), DMF (160 mL), water (16 mL), and $PdCl_2$ (0.34 g) was heated and stirred at 90°C for 12 hours.

Then, the solvent was removed under reduced pressure. The resulting residue was purified by separation and column chromatography, whereby 11-hydroxyundecan-2-one (15.4 g) was obtained.

A mixture of 11-hydroxyundecan-2-one (13 g), sulfur trioxide-triethylamine complex (13.9 g), and tetrahydrofuran (140 mL) was stirred at 50°C for 12 hours. A solution of sodium methoxide (3.8 g)/methanol (12 mL) was added dropwise to the reaction solution.

The precipitated solid was filtered under reduced pressure and washed with ethyl acetate, whereby sodium 10-oxoundecyl sulfate (15.5 g) (hereinafter referred to as surfactant A) was obtained.

To a 1-L glass reactor equipped with a stirrer was added 588.6 g of deionized water and 70.0 g of the surfactant A. The reactor was hermetically sealed, and the inside of the reactor was replaced with nitrogen so that oxygen was removed. The temperature of the reactor was increased to 90°C and the pressure was increased with nitrogen to 0.4 MPaG. Ammonium persulfate (APS) in an amount of 41.4 g was fed, followed by stirring for three hours. Stirring was stopped, and depressurization was performed until the pressure inside the reactor reached the atmospheric pressure, followed by cooling, whereby a surfactant aqueous solution B was obtained.

Production Example 2

To a 6-L SUS reactor equipped with a stirrer was added 3600 g of deionized water, 180 g of paraffin wax, and 0.540 g of the surfactant A. The reactor was hermetically sealed, and the inside of the reactor was replaced with nitrogen so that oxygen was removed. The temperature of the reactor was increased to 70°C and the reactor was filled with TFE to set the pressure at 2.70 MPa. As polymerization initiators, 0.620 g of ammonium persulfate (APS) and 1.488 g of disuccinic acid peroxide (DSP) were fed. TFE was fed so that the reaction pressure was constant at 2.70 MPa. While feeding of TFE was started, continuous feeding of the surfactant aqueous solution B was started. When 540 g of TFE had been fed, 20 g of deionized degassed water containing 0.76 g of hydroquinone dissolved therein was added. Stirring was stopped when 1200 g of TFE had been fed, and depressurization was performed until the pressure inside the reactor reached the atmospheric pressure. By the end of the reaction, 103 g of the surfactant aqueous solution B was fed. The contents were taken out of the reactor and cooled, and the paraffin wax was separated, whereby a TFE-based polymer aqueous dispersion was obtained.

The resulting TFE-based polymer aqueous dispersion had a solid content concentration of 25.9% by mass and an average primary particle size of 290 nm.

The TFE-based polymer aqueous dispersion obtained in Production Example 2 was diluted with deionized water to a solid content concentration of 13% by mass. The dilution was stirred vigorously in a container equipped with a stirrer to be coagulated, and water was filtered out, whereby a wet powder was obtained.

The resulting wet powder was placed in a stainless-steel mesh tray and dried at 210°C for 18 hours, whereby a TFE-based polymer powder 2 was obtained.

The resulting TFE-based polymer powder 2 had a water content of 0.001% by mass, a standard specific gravity of 2.151, a thermal instability index of 42, a 0.1% mass reduction temperature of 397°C, a 1.0% mass reduction temperature of 492°C, and an endothermic peak temperature of 344°C.

The amount of the compound represented by the formula (1) containing m (4 to 20) carbon atoms in the resulting TFE-based polymer powder 2 was 214 ppb by mass and the amount of the compound represented by the formula (2) containing n (4 to 20) carbon atoms in the resulting TFE-based polymer powder 2 was 3537 ppb by mass.

Manufacturing Example 4

A composition D was obtained as in Manufacturing Example 1, except that the TFE-based polymer powder 1 was replaced by the TFE-based polymer powder 2 and that the mixing ratio of the TFE-based polymer powder 2 and LiTFSI was set to 70:30. The composition D had a liquid content of less than 1% by mass.

Synthesis Example 1

A white solid A was obtained by the method disclosed in Synthesis Example 1 of WO 2021/045228.

Production Example 3

A 6-L SUS reactor equipped with a SUS stirring blade and a temperature-controlling jacket was charged with

3480 g of deionized water, 100 g of paraffin wax, and 5.3 g of the white solid A. The inside of the reactor was purged with nitrogen gas with warming to 70°C so that oxygen was removed. TFE was injected to set the pressure inside the reactor to 0.78 MPaG and the temperature inside the reactor was maintained at 70°C under stirring. Next, an aqueous solution prepared by dissolving 15.0 mg of ammonium persulfate in 20 g of water was injected with TFE, whereby a polymerization reaction was started. The pressure inside the reactor dropped as the polymerization reaction progressed. TFE was thus added so that the temperature inside the reactor was maintained at 70°C and the pressure inside the reactor was maintained at 0.78 MPaG.

When 400 g of TFE had been consumed from the start of the polymerization, an aqueous solution prepared by dissolving 18.0 mg of hydroquinone serving as a radical scavenger in 20 g of water was injected with TFE. The polymerization was further continued. When the amount of TFE polymerized reached about 1200 g from the start of the polymerization, stirring and feeding of TFE were stopped. Immediately thereafter, the gas inside the reactor was released to normal pressure and the polymerization reaction was terminated. The resulting aqueous dispersion was taken out and cooled, and the paraffin wax was separated, whereby a TFE-based polymer aqueous dispersion was obtained. The resulting TFE-based polymer aqueous dispersion had an average primary particle size of 310 nm and a solid content concentration of 25.3% by mass.

The resulting TFE-based polymer aqueous dispersion was diluted with deionized water to a solid content concentration of 13% by mass. The dilution was stirred vigorously in a container equipped with a stirrer to be coagulated, and water was filtered out, whereby a wet powder was obtained.

The resulting wet powder was placed in a stainless-steel mesh tray and dried at 210°C for 18 hours, whereby a TFE-based polymer powder X was obtained.

The resulting TFE-based polymer powder X had a water content of 0.000% by mass, a standard specific gravity of 2.156, a thermal instability index of 0, and an endothermic peak temperature of 343°C.

The amount of the compound represented by the formula (1) containing m (4 to 20) carbon atoms in the resulting TFE-based polymer powder X was less than 10 ppb by mass and the amount of the compound represented by the formula (2) containing n (4 to 20) carbon atoms in the resulting TFE-based polymer powder X was less than 10 ppb by mass. The powder X had a liquid content of less than 1% by mass.

Manufacturing Example 5

A composition 1 was obtained as in Manufacturing Example 1, except that LiTFSI used as the Li compound was replaced by $LiPF_6$ and the mixing ratio of the TFE-based polymer powder 1 and the Li compound ($LiPF_6$) was set to 95:5. The composition 1 had a liquid content of less than 1% by mass.

The compositions obtained above were evaluated by the following methods.

The powder flowability in Examples A1 to A4, Example C1, and Comparative Example A1 was evaluated by the following procedure.

<Powder flowability evaluation>

The composition A prepared above in an amount of 80 g was weighed out and put into a 250-mL polyethylene bottle, and the lid was tightened. The container was placed on a rotary mixer and rotated at 50 rpm for four hours. After the rotation, the container was turned upside down and the composition was discharged. The discharged composition was weighed to evaluate the amount of the composition attached to the container.

The test was performed in a dry room environment with a dew point of -40°C. Evaluation was similarly performed on the compositions B to D, the composition 1, and the TFE-based polymer powder X.

The powder flowability of each composition was evaluated based on the following criteria.

∞ (Excellent): The amount of the attached composition was less than 0.2 g.
◦ (Good): The amount of the attached composition was 0.2 g or more and less than 0.5 g.
Δ (Fair): The amount of the attached composition was 0.5 g or more and less than 0.8 g.
× (Poor): The amount of the attached composition was 0.8 g or more.

The results are shown in Table 7.

[Table 7]

| | Polymer type | Composition ratio of polymer:Li compound (mass ratio) | Binder name | Powder flowability |
|---|---|---|---|---|
| Comparative Example A1 | TFE-based polymer powder X | 100:0 | TFE-based polymer powder X | Δ |
| Example A1 | TFE-based polymer powder 1 | 95:5 | Composition A | ○ |
| Example A2 | TFE-based polymer powder 1 | 70:30 | Composition B | ○ |
| Example A3 | TFE-based polymer powder 1 | 50:50 | Composition C | ○○ |
| Example A4 | TFE-based polymer powder 2 | 70:30 | Composition D | ○ |
| Example C1 | TFE-based polymer powder 1 | 95:5 | Composition 1 | ○ |

It was confirmed that mixing the fibrillatable resin with a Li compound successfully reduced polymer adhesiveness and improved the handleability by reducing adhesion of the polymer to the container.

Evaluation of electrolyte-containing battery

Mixture sheets of Examples B1 to B4 and Comparative Example B1 were produced by the following procedure and the battery evaluation was performed.

<Production of negative electrode mixture sheet>

The active material (SiO) and the conductive aid were weighed out, and the materials were fed into a V-type mixer, followed by mixing at 37 rpm for 10 minutes, whereby a mixture containing SiO and the conductive aid was obtained. The mixture, graphite, and a binder (the compositions A to D in the examples and the TFE-based polymer powder X and LiTFSI in the comparative example) were each weighed out, and placed into a container. The active material and the binder were thoroughly heated in a thermostatic bath at 80°C, and treated in a Henschel mixer at 3000 rpm for 30 minutes so that fibrillation was promoted, whereby a mixture was obtained.

The mixture was further kneaded (50 rpm, 10 minutes) using a desktop-type kneader (PN-1, available from Irie Shokai Co., Ltd.) to promote fibrillation. Then, the mixture was pulverized in a Henschel mixer at 3000 rpm for five minutes to promote fibrillation and improve dispersibility, whereby an electrode mixture was obtained.

The electrode mixture was fed to metal rolls arranged side by side in parallel to each other (temperature of the left and right rolls: 100°C, rotation speed of the left roll: 1 m/min, rotation speed of the right roll: 0.4 m/min) and rolled, whereby a negative electrode mixture sheet with a density of 1.3 g/cc and a thickness of about 250 μm was obtained.

Table 8 shows the material types and compositions.

[Table 8]

| | (A) Active material | (B) Binder | (C) Conductive aid | (D) Li compound Post-addition | Composition ratio A: B: C: D (mass ratio) |
|---|---|---|---|---|---|
| Comparative Example B1 | Black lead:SiO = 92:8 | TFE-based polymer powder X | SuperP Li | Added | 94:475:1:025 |

(continued)

| | (A) Active material | (B) Binder | (C) Conductive aid | (D) Li compound Post-addition | Composition ratio A: B: C: D (mass ratio) |
|---|---|---|---|---|---|
| Example B1 | Black lead:SiO = 92:8 | Composition A | SuperP Li | Not added | 94:5:1:0 |
| Example B2 | Black lead:SiO = 92:8 | Composition B | SuperP Li | Not added | 94:5:1:0 |
| Example B3 | Black lead:SiO = 92:8 | Composition C | SuperP Li | Not added | 94:5:1:0 |
| Example B4 | Black lead:SiO = 92:8 | Composition D | SuperP Li | Not added | 94:5:1:0 |
| SuperP Li: carbon black available from Imerys S.A. | | | | | |

<Production of negative electrode>

A commercially available carbon-coated copper foil (thickness of 10 μm) was provided as a current collector. The negative electrode mixture sheet was placed on the carbon-coated copper foil, and the negative electrode mixture sheet and the current collector were bonded to each other using a roll press machine heated to 100°C. The workpiece was cut into the desired size, followed by tab attachment, whereby a negative electrode was obtained.

<Production of positive electrode mixture sheet>

$LiNi_{0.8}Co_{0.1}Mn_{0.1}O_2$ (NMC811) as an active material and the conductive aid (SuperP Li) were weighed out, and the materials were fed into a V-type mixer, followed by mixing at 37 rpm for 10 minutes, whereby a mixture containing the active material and the conductive aid was obtained. Then, the binder (TFE-based polymer powder X) weighed out was added to the mixture and the mixture was allowed to cool sufficiently in a thermostatic bath at 5°C. The mixture containing the active material, the conductive aid, and the binder was fed into a Henschel mixer and treated at 1000 rpm for three minutes to homogenize the mixture. The composition ratio (active material:binder:conductive aid) was set to 95:3:2.

Then, the mixture was thoroughly heated in a thermostatic bath at 50°C, and treated in a Henschel mixer at 3000 rpm for 50 minutes so that fibrillation was promoted, whereby an electrode mixture was obtained.

The electrode mixture was fed to metal rolls arranged in parallel on the left and right (temperature of the left and right rolls: 120°C, rotation speed of the left roll: 1 m/min, rotation speed of the right roll: 0.3 m/min) and rolled with application of shear force, whereby an electrode mixture sheet was obtained.

The electrode mixture sheet was then fed to a roll press machine to adjust the gap. The thickness of the positive electrode mixture layer was finally adjusted to 120 μm.

<Production of positive electrode>

A commercially available carbon-coated aluminum foil (thickness of 21 μm) was provided as a current collector. The positive electrode mixture sheet was placed on the carbon-coated copper foil, and the negative electrode mixture sheet and the current collector were bonded to each other using a roll press machine heated to 100°C. The workpiece was cut into the desired size, followed by tab attachment, whereby a positive electrode was obtained.

<Preparation of electrolyte solution>

A solvent mixture of ethylene carbonate (EC) and ethyl methyl carbonate (EMC) (EC:EMC = 30:70 (volume ratio)) was weighed into a sample bottle as an organic solvent, and fluoroethylene carbonate (FEC) and vinylene carbonate (VC) each in an amount of 3% by mass were added thereto and dissolved therein, whereby a mixed solution was prepared. A $LiPF_6$ salt was mixed with this mixed solution at 23°C such that the concentration thereof in the electrolyte solution was 1.1 mol/L, whereby a non-aqueous electrolyte solution was obtained.

<Production of aluminum laminate cell>

The positive electrode and the negative electrode were placed to face each other with a 20-μm-thick porous polyethylene film (separator) in between. The non-aqueous electrolyte solution prepared above was injected thereinto and the non-aqueous electrolyte solution was made to sufficiently permeate into the components such as the separator. The workpiece was then sealed, whereby a lithium-ion secondary battery was produced.

<Evaluation of battery characteristics (initial discharge capacity, capacity retention)>

The lithium-ion secondary battery produced above was subjected to a test at 30°C while being sandwiched between plates and pressurized. The battery was subjected to constant current/constant voltage charge (0.05 C cut off) to 4.25 V at a current corresponding to 0.2 C, and then discharged to 3.0 V at a constant current of 0.2 C. This was counted as one cycle, and the discharge capacity at the third cycle was used to determine the initial discharge capacity. Here, 1 C means the current value at which the reference capacity of the battery is discharged in one hour. For example, 0.2 C means 1/5 of this current value.
The results are shown in Table 9.
The cycle was repeated, and the ratio of the discharge capacity after 103 cycles to the initial discharge capacity was determined. This value was defined as the cycle capacity retention (%).

(Discharge capacity after 103 cycles)/(Discharge capacity at 3rd cycle) × 100 = Capacity retention (%)

The capacity retention was evaluated based on the following criteria.

◦◦ (Excellent): 92% or higher
◦ (Good): 88% or higher and lower than 92%
Δ (Fair): 86% or higher and lower than 88%
× (Poor): Lower than 86%

The results are shown in Table 9. The test results are average values obtained from N = 4 samples.

[Table 9]

| | Initial capacity (mAh/g) | Capacity retention |
|---|---|---|
| Comparative Example B1 | 176.1 | × |
| Example B1 | 178.2 | Δ |
| Example B2 | 183.6 | ○ |
| Example B3 | 186.2 | ○○ |
| Example B4 | 183.0 | Δ |

Mixture sheets of Example C1 and Comparative Example C1 were produced by the following procedure and the battery evaluation was performed.

<Production of positive electrode>

A positive electrode mixture was produced in the same manner as in the case of the positive electrode used in a battery test of Comparative Example B1, except that the TFE-based polymer powder X used as a binder was replaced by the composition 1.
Table 10 shows the material types and compositions.

[Table 10]

| | (A) Active material | (B) Binder | (C) Conductive aid | Composition ratio A: B: C (mass ratio) |
|---|---|---|---|---|
| Comparative Example C1 | NMC811 | TFE-based polymer powder X | SuperP Li | 95:3:2 |

(continued)

| | (A) Active material | (B) Binder | (C) Conductive aid | Composition ratio A: B: C (mass ratio) |
|---|---|---|---|---|
| Example C1 | NMC811 | Composition 1 | SuperP Li | 95:3:2 |

<Production of negative electrode>

The negative electrode produced in Comparative Example B1 was used.

<Production of battery>

The electrolyte solution prepared in the same manner as above was poured into the battery to prepare a laminate battery.

<Evaluation of battery characteristics (initial discharge capacity, capacity retention)>

Evaluation was performed in the same manner as above.
Table 11 shows the results. The test results are average values obtained from N = 4 samples.

[Table 11]

| | Initial capacity (mAh/q) | Capacity retention |
|---|---|---|
| Comparative Example C1 | 176.1 | × |
| Example C1 | 180.3 | ○ |

## Claims

1. A composition for use in an electrochemical device binder, the composition comprising:

   a fibrillatable resin; and
   at least one lithium/sodium compound selected from the group consisting of a lithium/sodium salt and a lithium/sodium replenisher,
   the composition containing the fibrillatable resin in an amount of 20% by mass or more,
   the composition containing the fibrillatable resin and the lithium/sodium compound in a total amount of 40% by mass or more.

2. The composition according to claim 1, wherein the fibrillatable resin includes at least one selected from the group consisting of a tetrafluoroethylene homopolymer and a modified polytetrafluoroethylene consisting of a tetrafluoroethylene unit and a polymerized unit based on hexafluoropropylene.

3. The composition according to claim 1 or 2, wherein the lithium/sodium compound includes at least one selected from the group consisting of $LiPF_6$ and $LiN(CF_3SO_2)_2$.

4. The composition according to any one of claims 1 to 3, wherein the composition has a mass ratio of the fibrillatable resin and the lithium/sodium compound of 97/3 to 50/50.

5. The composition according to any one of claims 1 to 4, wherein the composition is in a form of powder.

6. The composition according to any one of claims 1 to 5, wherein the composition is for use in a lithium-ion secondary battery binder.

**7.** An electrochemical device binder essentially consisting of a composition,

the composition comprising a fibrillatable resin and at least one lithium/sodium compound selected from the group consisting of a lithium/sodium salt and a lithium/sodium replenisher,
the composition containing the fibrillatable resin in an amount of 20% by mass or more,
the composition containing the fibrillatable resin and the lithium/sodium compound in a total amount of 40% by mass or more.

**8.** The electrochemical device binder according to claim 7,
wherein the fibrillatable resin and the lithium/sodium compound are contained in a total amount of 70% by mass or more based on the composition.

**9.** The electrochemical device binder according to claim 7 or 8,
wherein the lithium/sodium compound includes at least one selected from the group consisting of an inorganic lithium salt, a lithium tungstate, a lithium carboxylate salt, a lithium salt containing a S=O group, a lithium imide salt, a lithium methide salt, a fluorine-containing organic lithium salt, LiSCN, $LiB(CN)_4$, $LiB(C_6H_5)_4$, $Li_2(C_2O_4)$, $LiP(C_2O_4)_3$, $Li_2B_{12}F_bH_{12-b}$ (where b is an integer of 0 to 3), LiBOB, $Li_5FeO_4$, $Li_5AlO$, $Li_2NiO_2$, $NaPF_6$, $NaBF_4$, $NaSbF_6$, $NaTaF_6$, $NaPO_2F_2$, $FSO_3Na$, $CF_3SO_3Na$, $NaN(FSO_2)_2$, $NaN(FSO_2)(CF_3SO_2)$, $NaN(CF_3SO_2)_2$, $NaN(C_2F_3SO_2)_2$, sodium cyclic 1,2-perfluoroethane disulfonylimide, sodium cyclic 1,3-perfluoropropane disulfonylimide, $NaC(FSO_2)_3$, $NaC(CF_3SO_2)_3$, $NaC(C_2F_5SO_2)_3$, $NaBF_3CF_3$, $NaBF_3C_2F_5$, $NaPF_3(CF_3)_3$, and $NaPF_3(C_2F_5)_3$.

**10.** The electrochemical device binder according to any one of claims 7 to 9,
wherein the lithium/sodium compound includes at least one selected from the group consisting of $LiPF_6$ and $LiN(CF_3SO_2)_2$.

**11.** The electrochemical device binder according to any one of claims 7 to 10,
wherein the fibrillatable resin is contained in an amount of 50% by mass or more based on the composition.

**12.** The electrochemical device binder according to any one of claims 7 to 11,
wherein the electrochemical device binder has a mass ratio of the fibrillatable resin and the lithium/sodium compound of 99/1 to 50/50.

**13.** The electrochemical device binder according to any one of claims 7 to 12,
wherein the electrochemical device binder has a mass ratio of the fibrillatable resin and the lithium/sodium compound of 97/3 to 50/50.

**14.** The electrochemical device binder according to any one of claims 7 to 13,
wherein the fibrillatable resin includes a tetrafluoroethylene-based polymer.

**15.** The electrochemical device binder according to any one of claims 7 to 14,
wherein the fibrillatable resin includes polytetrafluoroethylene.

**16.** The electrochemical device binder according to any one of claims 7 to 15,
wherein the fibrillatable resin includes at least one selected from the group consisting of a tetrafluoroethylene homopolymer and a modified polytetrafluoroethylene consisting of a tetrafluoroethylene unit and a polymerized unit based on hexafluoropropylene.

**17.** The electrochemical device binder according to any one of claims 7 to 16,
wherein the fibrillatable resin is obtained by polymerization using a hydrocarbon surfactant.

**18.** The electrochemical device binder according to any one of claims 7 to 17,
wherein the lithium/sodium replenisher includes at least one selected from the group consisting of $Li_5FeO_4$, $Li_5AlO$, and $Li_2NiO_2$.

**19.** The electrochemical device binder according to any one of claims 7 to 18,
wherein the composition has a liquid content of 10% by mass or less.

**20.** The electrochemical device binder according to any one of claims 7 to 19,

wherein the electrochemical device binder is in a form of powder.

**21.** The electrochemical device binder according to any one of claims 7 to 20,
wherein the electrochemical device binder is for use in a lithium-ion secondary battery.

**22.** An electrode mixture comprising:

the composition according to any one of claims 1 to 6 or the electrochemical device binder according to any one of claims 7 to 21; and
an electrode active material.

**23.** The electrode mixture according to claim 22,
wherein the electrode mixture is in a form of a sheet.

**24.** An electrode comprising:

the composition according to any one of claims 1 to 6 or the electrochemical device binder according to any one of claims 7 to 21;
a positive electrode active material or a negative electrode active material; and
a current collector.

**25.** The electrode according to claim 24,
wherein the electrode is produced in a dry process.

**26.** A secondary battery comprising the electrode according to claim 25.

**27.** The secondary battery according to claim 26,
wherein the negative electrode active material includes Si or SiO.

## INTERNATIONAL SEARCH REPORT

International application No.
**PCT/JP2025/001424**

**A. CLASSIFICATION OF SUBJECT MATTER**

***H01M 4/62***(2006.01)i; ***H01G 11/38***(2013.01)i; ***H01M 4/13***(2010.01)i; ***H01M 4/134***(2010.01)i; ***H01M 4/139***(2010.01)i; ***H01M 4/1395***(2010.01)i; ***H01M 4/38***(2006.01)i; ***H01M 4/48***(2010.01)i
FI: H01M4/62 Z; H01G11/38; H01M4/13; H01M4/134; H01M4/139; H01M4/1395; H01M4/38 Z; H01M4/48

According to International Patent Classification (IPC) or to both national classification and IPC

**B. FIELDS SEARCHED**

Minimum documentation searched (classification system followed by classification symbols)

H01M4/62; H01G11/38; H01M4/13; H01M4/134; H01M4/139; H01M4/1395; H01M4/38; H01M4/48

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | CN 112038574 A (SVOLT ENERGY TECHNOLOGY COMPANY LIMITED) 04 December 2020 (2020-12-04) claims 1-3, 6, paragraphs [0028], [0137] | 1-2, 4-7, 9, 12-27 |
| A | | 3, 8, 10-11 |
| X | JP 2012-99316 A (KABUSHIKI KAISHA TOYOTA JIDOSHOKKI) 24 May 2012 (2012-05-24) paragraphs [0026], [0041]-[0046], [0051] | 1-2, 4-9, 12-27 |
| A | | 3, 10-11 |
| A | JP 2022-518395 A (MAXWELL TECHNOLOGIES, INC.) 15 March 2022 (2022-03-15) | 1-27 |
| A | KR 10-2019-0124038 A (LG CHEM, LTD.) 04 November 2019 (2019-11-04) | 1-27 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 March 2025** | **25 March 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2025/001424**

| Patent document cited in search report | Publication date (day/month/year) | Patent family member(s) | Publication date (day/month/year) |
|---|---|---|---|
| CN 112038574 A | 04 December 2020 | (Family: none) | |
| JP 2012-99316 A | 24 May 2012 | (Family: none) | |
| JP 2022-518395 A | 15 March 2022 | US 2020/0227723 A1<br>WO 2020/150240 A1<br>EP 3912208 A1<br>KR 10-2021-0113264 A<br>CN 113574697 A | |
| KR 10-2019-0124038 A | 04 November 2019 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022506189 T
- JP 2005527652 T
- WO 2020022355 A
- JP 2013542308 T
- JP 2013542309 T
- JP 2013542310 T
- US 6841616 B
- WO 2021045228 A


### Non-patent literature cited in the description


- **KASAI**. *J. Appl. Polymer Sci.*, 1995, vol. 57, 797